(19) **Europäisches Patentamt / European Patent Office / Office européen des brevets**

(11) **EP 3 035 683 A1**

(12) **EUROPEAN PATENT APPLICATION**
published in accordance with Art. 153(4) EPC

(43) Date of publication:
**22.06.2016 Bulletin 2016/25**

(51) Int Cl.:
***H04N 19/00*** (2014.01)

(21) Application number: **14836021.7**

(22) Date of filing: **15.08.2014**

(86) International application number:
**PCT/CN2014/084509**

(87) International publication number:
**WO 2015/021942 (19.02.2015 Gazette 2015/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.08.2013 CN 201310357938**
**14.08.2014 CN 201410399376**

(71) Applicants:
- **Tongji University**
  **Shanghai 200092 (CN)**
- **ZTE Corporation**
  **Shenzhen, Guangdong 518057 (CN)**

(72) Inventors:
- **LIN, Tao**
  **Shanghai 200092 (CN)**
- **LI, Ming**
  **Shenzhen, Guangdong 518057 (CN)**
- **SHANG, Guoqiang**
  **Shenzhen, Guangdong 518057 (CN)**
- **WU, Zhao**
  **Shenzhen, Guangdong 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **METHOD AND DEVICE FOR IMAGE COMPRESSION, HAVING ENHANCED MATCHING OF FIXED-WIDTH, VARIABLE-LENGTH PIXEL SAMPLE STRINGS**

(57) The present invention provides an image compression method and device. When a coding block is coded, first, second and third reconstructed reference pixel sample sets, of which position labels are not intersected, are searched to obtain one or more optimal fixed-width variable-length pixel sample matching strings according to a preset evaluation criterion. Each matching string is represented by a matching distance and a matching length. For a sample of which a match is not found, a pseudo matching sample is calculated from an adjacent sample. Matching string searching may be performed in a pixel component plane only, and may also be performed in a three-component individually intersected pixel space in a packed format. Optional quantization or transformation-quantization coding, predictive coding, differential coding and entropy coding are further executed on the matching distance, the matching length and a matching residual. Multiple sample division manners and arrangement manners may be adopted for matching, and optimal ones are selected from them. For the same Coding Unit (CU), conventional-prediction-based hybrid coding is simultaneously performed, and an optimal result is selected finally.

Fig.5

**Description**

**Technical field of the invention**

The present invention relates to digital video compression coding and decoding system, and in particular to method and device for coding/decoding computer screen image and video.

**Background of the invention**

Along with the development and popularization of a new-generation cloud computing and information processing mode and platform adopting a remote desktop as a typical representation form, interconnection among multiple computers, between a computer host and other digital equipment such as a smart television, a smart phone and a tablet personal computer and among various digital equipment has been realized and increasingly becomes a mainstream trend. Therefore, there is an urgent need for real-time screen transmission from a server (cloud) to a user at present. Since a large volume of screen video data is required to be transmitted, for example, data to be transmitted of a 24-bit true-colour screen image, with a pixel solution of 2,048x1,536 and a refresh rate of 60 frames/second, of a tablet personal computer reaches 2,048x1,536x60x24=4,320 megabits per second, and it is impossible to implement real-time transmission of so much data under a realistic network condition, effective data compression for a computer screen image is inevitable.

An outstanding characteristic of a computer screen image is that there may usually be many similar and even completely the same pixel patterns in the same frame of image. For example, Chinese or foreign characters usually appearing in computer screen images consist of a few types of basic strokes, and many similar or the same strokes may be found in the same frame of image. Common menus, icons and the like in computer screen images also have many similar or the same patterns. In an intra prediction manner adopted for an existing image and video compression technology, only an adjacent pixel sample is taken as a reference, and similarity or sameness in the same frame of image may not utilized to improve compression efficiency. In an intra motion compensation manner in a conventional art, block matching of several pixels with fixed sizes such as 8x8, 16x16, 32x32 and 64x64 pixels, and matching of various different sizes and shapes may also not be found. Therefore, it is necessary to seek for a new coding tool to completely discover and utilize similar or the same patterns existing in a computer screen image to greatly improve a compression effect.

Fully utilizing the characteristic of a computer screen image for ultrahigh-efficiency compression on the computer screen image is exactly a main aim of the latest international High Efficiency Video Coding (HEVC) standard which is being formulated and a plurality of other international standards, national standards and industry standards.

A natural form of a digital video signal of a screen image is a sequence of the image. An image is usually a rectangular area formed by a plurality of pixels, and if each second of a digital video signal has 50 images, a segment of 30-minute digital video signal is a video image sequence, which is also called a video sequence or a sequence sometimes, formed by 30x60x50=90,000 images. Coding the digital video signal is to code each image. At any time, the image in coding is called a current coded image. Similarly, decoding a compressed bitstream (the bitstream is also called a bit stream) of the digital video signal is to decode a compressed bitstream of each image. At any time, the image in decoding is called a current decoded image. The current coded image or the current decoded image is collectively referred to as a current image.

In almost all international standards for video image coding such as MPEG-1/2/4, H.264/AVC and HEVC, when an image is coded, the image is divided into a plurality of sub-images called "Coding Units (CUs)" with MxM pixels, and the sub-images are coded one by one by taking a CU as a basic coding unit. M is usually 8, 16, 32 and 64. Therefore, coding a video image sequence is to sequentially code each CU. Similarly, during decoding, each CU is also sequentially decoded to finally reconstruct the whole video image sequence.

In order to achieve adaptability to differences of image contents and properties of each part in an image and pertinently and most effectively perform coding, sizes of each CU in the image may be different, some being 8x8, some being 64x64 and the like. In order to seamlessly splice the CUs with different sizes, the image is usually divided into "Largest Coding Units (LCUs)" with completely the same size and NxN pixels at first, and then each LCU is further divided into multiple CUs of which sizes may not be the same. For example, the image is divided into LCUs with completely the same size and 64x64 pixels (N=64) at first, wherein a certain LCU consists of three CUs with 32x32 pixels and four CUs with 16x16 pixels, and the other LCU consists of two CUs with 32x32 pixels, three CUs with 16x16 pixels and twenty CUs with 8x8 pixels.

Coding an image is to sequentially code CUs one by one. At any time, the CU in coding is called a current coded CU. Decoding the image is also to sequentially the CUs one by one. At any time, the CU in decoding is called a current decoded CU. The current coded CU or the current decoded CU is collectively referred to as a current CU.

In the present invention, a CU (i.e. coding unit) refers to an area in an image.

In the present invention, a coding block or a decoding block is an area to be coded or decoded in an image.

Therefore, in the present invention, "CU" is a synonym of "coding block" for coding, "CU" is a synonym of "decoding block" for decoding, whether "CU" represents "coding block" or "decoding block" may be figured out according to a context, and if it is impossible to figure out according to the context, "CU" simultaneously represents any one of the two.

A colour pixel usually consists of three components. Two most common pixel colour formats include a Green, Blue and Red (GBR) colour format consisting of a green component, a blue component and a red component and a YUV colour format consisting of a luma component and two chroma components. Actually, multiple colour formats are generally called YUV, such as a YCbCr colour format. Therefore, when a CU is coded, the CU may be divided into three component planes (a G plane, a B plane and an R plane or a Y plane, a U plane and a V plane), and the three component planes are coded respectively; and three components of each pixel may also be bundled and combined into a triple, and the whole CU formed by these triples is coded. The former pixel and component arrangement manner is called a planar format of an image (and its CUs), and the latter pixel and component arrangement manner is called a packed format of the image (and its CUs). The GBR colour format and YUV colour format for the pixel are both three-component representation formats of the pixels.

Except the three-component representation format for a pixel, another common representation format for the pixel in the conventional art is a palette index representation format. In the palette index representation format, a numerical value of a pixel may also be represented by a palette index. Numerical values or approximate numerical values of three components of a pixel to be represented are stored in a palette space, and an address of a palette is called an index of the pixel stored in the address. One index may represent a component of a pixel, and one index may also represent three components of the pixel. There may be one palette, and may also be multiple palettes. Under a condition of multiple palettes, a complete index actually consists of two parts, i.e. a palette number and an index of a palette corresponding to the number. The index representation format for the pixel represents the pixel by virtue of the index. The index representation format for the pixel is also called an indexed colour or pseudo colour representation format for the pixel in the conventional art, or is usually called an indexed pixel or a pseudo pixel or a pixel index or an index directly. An index is also called an exponent sometimes. Representing a pixel by virtue of its index representation format is also called indexation or exponentiation.

Other common pixel representation formats in the conventional art include a Cyan, Megenta, Yellow and Black (CMYK) representation format and a greyscale representation format.

The YUV colour format may also be subdivide into a plurality of sub-formats according to whether to perform down-sampling of a chroma component or not: a YUV4:4:4 pixel colour format under which a pixel consists of a Y component, a U component and a V component; a YUV4:2:2 pixel colour format under which two left and right adjacent pixels consist of two Y components, a U component and a V component; and a YUV4:2:0 pixel colour format under which four left, right, upper and lower adjacent pixels arranged according to 2x2 spatial positions consist of four Y components, a U component and a V component. A component is usually represented by a number 8~16 bits. The YUV4:2:2 pixel colour format and the YUV4:2:0 pixel colour format are both obtained by executing chroma component down-sampling on the YUV4:4:4 pixel colour format. A pixel component is also called a pixel sample, or is simply called a sample.

The most basic element for coding or decoding may be a pixel, may also be a pixel component, and may further be a pixel index (i.e. an indexed pixel). A pixel or pixel component or indexed pixel serving as the most basic element for coding or decoding is collectively referred to as a pixel sample, is also collectively referred to as a sample sometimes, or is simply called a sample.

In the present invention, "pixel sample", "pixel value", "sample", "indexed pixel" and "pixel index" are synonyms, and may be figured out whether to represent a "pixel" or represent a "pixel component or represent a "indexed pixel" or simultaneously represent any one of three according to a context. If it is impossible to figure out according to the context, any one of three is simultaneously represented.

In the present invention, a CU (i.e. coding unit) is an area formed by a plurality of pixel values. A shape of the CU may be a rectangle, a square, a parallelogram, a trapezoid, a polygon, a round, an ellipse and various other shapes. The rectangle also includes a rectangle of which a width or height is a pixel value and which is degraded into a line (i.e. line segment or line shape). CUs in an image may have different shapes and sizes. Some or all CUs in an image may have overlapped parts, and the CUs may all not be overlapped. A CU may consist of "pixels", may also consist of "pixel components", may also consist of "indexed pixels", may also be formed by mixing the three, and may also be formed by mixing any two of the three.

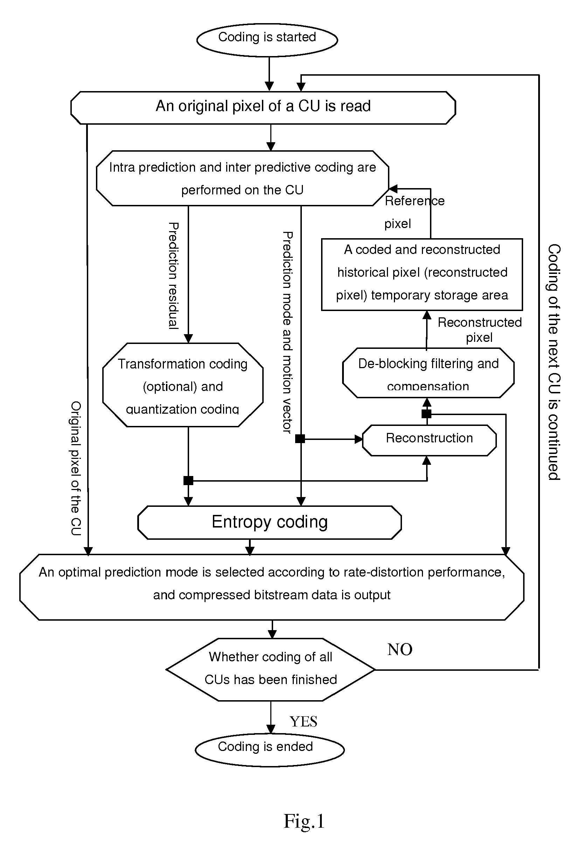

In a coding technology for various types of images and video sequences including a screen image, a flowchart of the most used coding method in the conventional art is shown in Fig. 1. The coding method in the conventional art includes the following steps:

1) an original pixel of a CU is read;
2) intra predictive coding and inter (between a current coded frame and a frame which has been coded before) predictive coding, which are collectively referred to as predictive coding, are performed on the CU to generate (1) a prediction residual and (2) a prediction mode and a motion vector;

3) transformation coding and quantization coding are performed on the first coding result, i.e. the prediction residual, obtained in Step 2), wherein transformation coding and quantization coding are optional respectively, that is, transformation coding is not performed if transformation coding may not achieve a better data compression effect, and if lossless coding is to be performed, not only is transformation coding not performed, but also quantization coding is not performed;

4) inverse operation of coding, i.e. reconstruction operation, is performed on coding results obtained in Step 2) to Step 3) to initially reconstruct a pixel of the CU for subsequent rate-distortion cost calculation in Step 7);

5) de-blocking filtering and pixel compensation operation is performed on the initially reconstructed pixel to generate a reconstructed pixel, and then the reconstructed pixel is placed in a historical pixel (reconstructed pixel) temporary storage area for use as a reference pixel for subsequent predictive coding, wherein the reconstructed pixel may not be equal to the original pixel of input because coding may be lossy;

6) entropy coding is performed on header information of a sequence, an image and the CU, the second coding result obtained in Step 2), i.e. the prediction mode and the motion vector, and a prediction residual (which may be subjected to transformation-quantization operation or quantization operation) generated in Step 3), and a bit rate of a compressed bitstream is generated;

7) rate-distortion cost is calculated according to the original pixel, the reconstructed pixel and the bit rate or bit rate estimate value of the compressed bitstream, an optimal prediction mode of the CU is selected according to rate-distortion performance, and compressed bitstream data of the CU is output; and

8) whether coding of all CUs has been finished or not is judged, coding is ended if YES, otherwise Step 1) is executed to start coding the next CU.

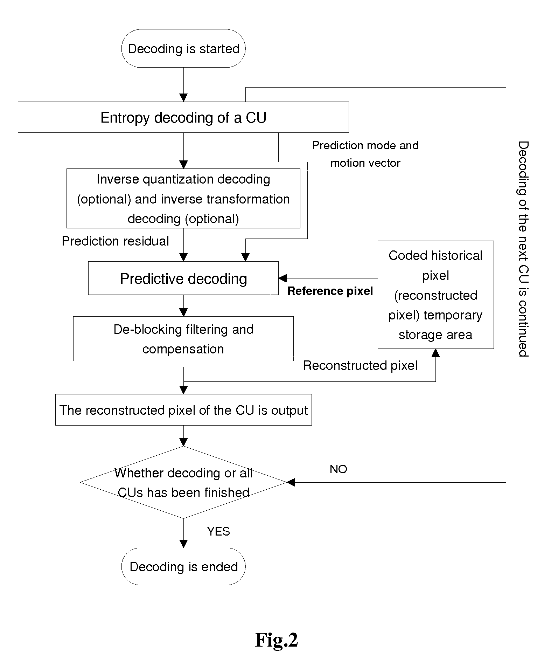

A flowchart of a decoding method in the conventional art is shown in Fig. 2. The decoding method in the conventional art includes the following steps:

1) entropy decoding is performed on a CU to obtain header information and data information of the CU, wherein the header information mainly includes whether intra prediction or inter prediction is adopted for the CU and whether inverse transformation coding is performed or not;

2) for a prediction residual which may be subjected to transformation-quantization operation or quantization operation, inverse operation of the operation, i.e. inverse quantization-inverse transformation decoding operation or inverse quantization decoding operation or identity operation, is performed to generate a prediction residual;

3) intra predictive decoding or inter predictive decoding, collectively referred to as predictive decoding, is performed to generate an initially reconstructed pixel;

4) de-blocking filtering and pixel compensation operation is performed on the initially reconstructed pixel, and then the reconstructed pixel, subjected to the operation, of the CU is placed into a historical pixel (reconstructed pixel) temporary storage area for use as a reference pixel for subsequent predictive decoding;

5) the reconstructed pixel of the CU is output; and

6) whether decoding of compressed bitstream data of all CUs has been finished or not is judged, decoding is ended if YES, otherwise Step 1) is executed to start decoding the next CU.

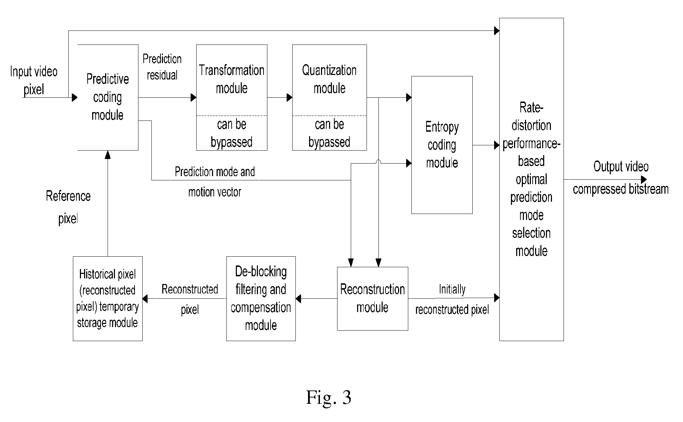

A diagram of a coding device in the conventional art is shown in Fig. 3. The whole coding device consists of the following modules:

1) a predictive coding module, which executes intra predictive coding and inter predictive coding on an input video pixel sample and outputs (1) a prediction residual and (2) a prediction mode and a motion vector;

2) a transformation module, which executes transformation operation on the prediction residual and outputs a transformation coefficient, wherein transformation operation may not achieve a data compression effect for a certain type of screen image pixel, and under such a condition, transformation operation is not executed, that is, the transformation module is bypassed, and the prediction residual is directly output;

3) a quantization module, which executes quantization operation on the transformation coefficient (under the condition that the transformation module is not bypassed) or the prediction residual (under the condition that the transformation module is bypassed) to generate a quantization transformation coefficient or a quantization prediction residual, wherein the transformation module and the quantization module are both bypassed under a lossless coding condition, and the prediction residual is directly output;

4) an entropy coding module, which executes entropy coding on the prediction mode, the motion vector, the quantization transformation coefficient, the quantization prediction residual or the prediction residual, including one-dimensional or 2-Dimensional (2D) adjacent sample-based differential coding, run length coding and binarization coding executed on samples of some entropy coding objects at first;

5) a reconstruction module, which executes inverse operation of the predictive coding module, the transformation module and the quantization module to initially reconstruct a pixel of a CU and outputs the reconstructed pixel to a rate-distortion performance-based optimal prediction mode selection module and a historical pixel (reconstructed pixel) temporary storage module;

6) a de-blocking filtering and compensation module, which performs de-blocking filtering and pixel compensation operation and then places the reconstructed pixel subjected to the operation into the historical pixel (reconstructed pixel) temporary storage module for use as a reference pixel for subsequent predictive coding;

7) the historical pixel (reconstructed pixel) temporary storage module, which provides the reference pixel for predictive coding; and

8) the rate-distortion performance-based optimal prediction mode selection module, which selects an optimal prediction mode according to rate-distortion performance and outputs a video compressed bitstream.

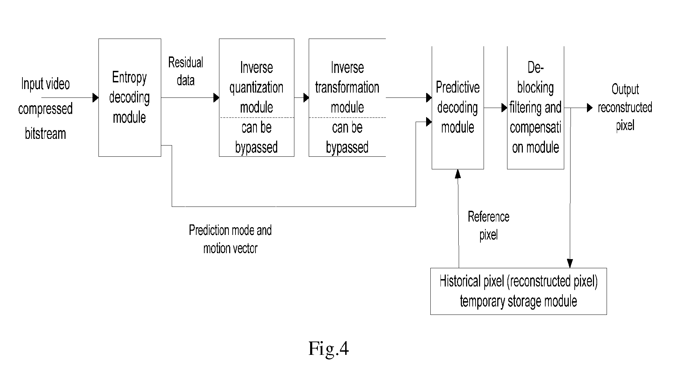

A diagram of a decoding device in the conventional art is shown in Fig. 4. The whole decoding device consists of the following modules:

1) an entropy decoding module, which executes entropy decoding on compressed bitstream data of input, wherein entropy decoding also includes one-dimensional or 2D adjacent sample-based differential coding, run length coding and binarization coding executed on an entropy decoding object such as a prediction mode, a motion vector, a quantization transformation coefficient, a quantization prediction residual and a prediction residual;

2) an inverse quantization module, which executes inverse quantization operation and outputs the transformation coefficient or the prediction residual;

3) an inverse transformation module, which executes inverse transformation coding and outputs the prediction residual if transformation operation is not bypassed during coding, otherwise does not execute inverse transformation decoding and directly outputs the prediction residual;

4) a predictive decoding module, which executes intra predictive decoding or inter predictive decoding and outputs an initially reconstructed pixel;

5) a de-blocking filtering and compensation module, which executes de-blocking filtering and pixel compensation operation on the initially reconstructed pixel and then places the reconstructed pixel subjected to the operation into a historical pixel (reconstructed pixel) temporary storage module for use as a reference pixel for subsequent predictive decoding; and

6) the historical pixel (reconstructed pixel) temporary storage module, which provides the reference pixel for predictive decoding.

From the above, the first step of coding in the conventional art is to perform intra predictive coding or inter predictive coding on the CU. In a scenario where the whole image is a natural image, the conventional art is effective.

Along with popularization of a multimedia technology to computers, in screen images of computers which are used everyday at present and in the future, an image usually includes many bitmaps consisting of letters, numbers, characters, menus, small icons, large graphics, charts and sheets. There are many completely the same or similar patterns in such an image. For example, English only includes 52 different letters (26 capital letters and 26 small letters), and Chinese characters also consist of a few different strokes. Therefore, in a computer screen image, when matching pixel sample strings of various shapes are found, all information of matched strings may be represented by two parameters, i.e. lengths of matching strings and distances (one-dimensional distances or 2D distances) away from the matched strings, redundancy in pixels of the image is eliminated, and a remarkable image data compression effect is achieved.

However, in the conventional art, adjacent pixel sample-based intra predictive coding and block-based inter predictive coding may both not effectively find matching patterns with various shapes or sizes in an image, so that coding efficiency of such an image and patterns is very low.

Summary

In order to solve the problem of image video coding and decoding in the conventional art, the present invention provides fixed-width variable-length pixel sample matching-based image coding and decoding methods and devices.

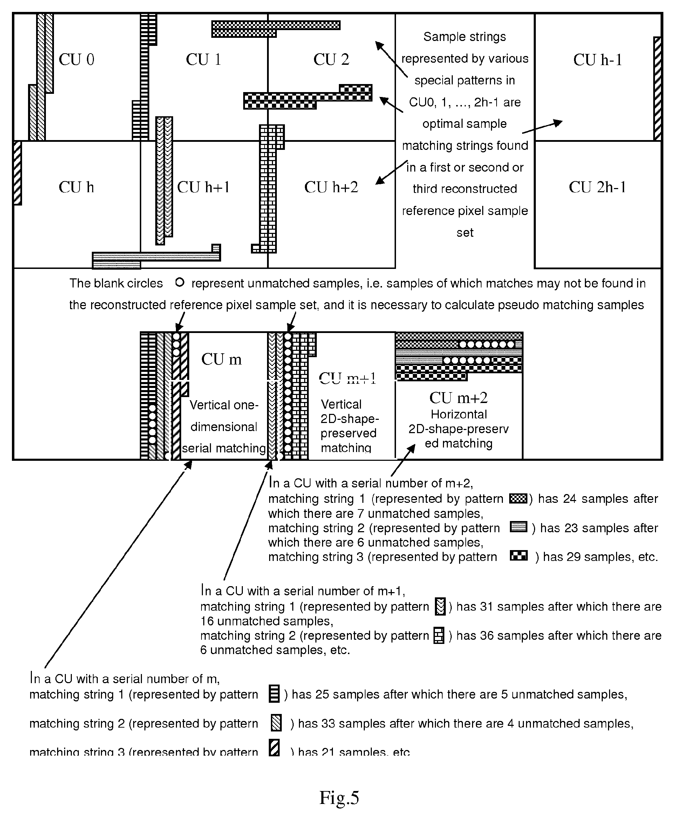

A main technical characteristic of the present invention is shown in Fig. 5. Fig. 5 is a component (sample) plane of an image in a planar format. But the present invention is also applicable to coding and decoding of an image in a packed format.

In a coding method and device of the present invention, the most basic peculiar technical characteristic of a fixed-width variable-length string matching coding manner is that a first reconstructed reference pixel sample set, a second reconstructed reference pixel sample set and a third reconstructed reference pixel sample set, of which position labels are not intersected, are searched to obtain one or more optimal fixed-width variable-length pixel sample matching strings (also called matching reference strings) when a current CU is coded. For a sample (called an unmatched sample and also called an unmatchable sample), of which a match may not be found, of the current CU, a pseudo matching sample is calculated according to an adjacent sample. Each matching string is represented by two parameters, such as a matching distance D and a matching length L. A condition of an unmatched sample and/or a pseudo matching value is represented by a flag or specific values of the matching distance and the matching length. The matching distance D is a linear (one-dimensional) distance or planar (2D) distance between a first pixel sample of a corresponding matching string found from the first reconstructed reference pixel sample set or the second reconstructed reference pixel sample set or the third reconstructed reference pixel sample set (collectively referred to as a reconstructed reference sample set or a reference sample set or a sample set or a reconstructed reference pixel sample set or a reference pixel sample set) and a first pixel sample of a matched string (also called a matching current string) in the current CU, and its unit is a sample or a plurality of samples. The matching distance is also called an intra motion vector sometimes. The matching length L is a length of the matching string, and its unit is also a sample or a plurality of samples. Apparently, the length of the matching string is also a length of the matched string. Output of the fixed-width variable-length string matching coding manner is a representation parameter pair (D, L) of the matching string, some specific values of (D, L) or additional flag output represents that no matches may be found, and when no matches may be found, the pseudo matching sample is calculated according to the adjacent sample of the unmatched sample, and the unmatched sample (see subsequent embodiment and variation 6) and/or the pseudo matching sample and a variant of the unmatched sample are/is output. The unmatched sample may be an original pixel value of which a match is not found or its various variants, such as a pixel value subjected to pre-processing of colour quantization, numerical quantization, vector quantization, noise elimination, filtering, characteristic extraction and the like or a pixel value subjected to transformation of colour format transformation, arrangement manner transformation, frequency domain transformation, spatial domain mapping, Differential Pulse Code Modulation (DPCM), first-order or high-order differentiation operation, indexation and the like or a pixel value variant subjected to multiple processing and transformation. The variant of the unmatched sample may be a difference between the unmatched sample and the pseudo matching sample or various variants of the difference, such as a difference subjected to processing of colour quantization, numerical quantization, vector quantization, noise elimination, filtering, characteristic extraction and the like or a difference subjected to transformation of colour format transformation, arrangement manner transformation, frequency domain transformation, spatial domain mapping, DPCM, first-order or high-order differentiation operation, indexation and the like or a variant subjected to multiple processing and transformation. A matching reference string may cross two or three of the three sets, i.e. the first, second and third reconstructed reference pixel sample sets, and the set to which the matching reference string belongs is determined by a position of its starting pixel sample. The three reference pixel sample sets, i.e. the first, second and third reconstructed reference pixel sample sets, may also be subjected to different processing (such as colour quantization, numerical quantization, vector quantization, noise elimination, filtering and characteristic extraction) or transformation (such as colour format transformation, arrangement manner transformation, frequency domain transformation, spatial domain mapping, DPCM, first-order or high-order differentiation operation and indexation) or a combination of these processing or transformation, except differences in position and/or reconstruction stage. Although the position labels of the three reference pixel sample sets are not intersected, three areas, corresponding to them respectively, of a current image may still have an overlapped part. One or two of the three reconstructed reference pixel sample sets may be null, but they may not be all null. Input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods.

In the present invention, "reconstructed sample" and "reference sample" are collectively referred to as "reconstructed reference pixel sample" sometimes. It may be figured out that "reconstructed reference pixel sample" represents "reconstructed sample" or "reference sample" or simultaneously represents any one of the two according to a context. If it may not be figured out according to the context, any one of the two is simultaneously represented.

In the present invention, "reconstructed reference sample set" and "reconstructed reference pixel sample set" are synonyms, and are also called "sample set" for short sometimes under the condition of no confusion.

There are at least four basic matching modes in terms of path shape of the matching string.

Basic matching mode 1 is a matching mode for vertical-path-based one-dimensional serial matching. A CU with a serial number m (CUm) in Fig. 5 adopts the matching mode for fixed-width variable-length sample string matching with a width of 1. In the matching mode, a reference sample set is arranged according to a sequence of serial numbers of LCUs or serial numbers of CUs at first, samples in an LCU or CU are arranged in columns, and the samples in each column are arranged from top to bottom in a vertical scanning manner. In such a manner, the reference sample set is finally arranged into a one-dimensional sample string. For example, a size of a CU in Fig. 5 is a 16x16 sample. The first sample in the one-dimensional sample string formed by the reference samples is the first sample at the top end of the first left column of the CU with a serial number 0 (CU0). The samples in each column are arranged from top to bottom in the vertical scanning manner. Therefore, the second sample in the one-dimensional sample string is the second sample from the top end of the first column of CU0. The second column is arranged after the first column, and the samples are also arranged from top to bottom in the vertical scanning manner. The columns are arranged one by one in such a manner till the 16th column of CU0, then the first left column of pixels of the CU with a serial number 1 (CU1) in Fig. 5, and so on. In a plane of an image shown in Fig. 5, there are totally h CUs in a horizontal direction. Therefore, the 16th column of samples (with 16 samples) of the CU with a serial number h-1 (CUh-1) are the last column of samples (with 16 samples) of a first CU row (with totally h CUs), and then the first left column of samples (with 16 samples) of the CU with a serial number (CUh), i.e. the leftmost column of samples (with 16 samples) of a second CU row, are arranged. The first three matched strings in fixed-width variable-length sample string matching are drawn in CUm with the serial number m in Fig. 5.

The first matched string (sample string represented by a first special pattern in CUm in Fig. 5) has 25 samples. A corresponding matching string (also represented by the same special pattern) found in the reference sample set is in CU0 and CU1, the first 5 samples are the last 5 samples of the 16h column of CU0, and the latter 20 samples are the first 20 samples in first and second columns of CU1, wherein 16 samples are in the first column and 4 samples are in the second column. After linear addresses or plane coordinates of the samples in the image are properly defined, a matching distance D is obtained by subtracting the linear address or plane coordinate of the first sample of the matching string from the linear address or plane coordinate of the first sample of the matched string, and its matching length L is 25.

There are 5 unmatched samples after the first matched string, and are represented by 5 blank circles in CUm in Fig. 5. Therefore, it is necessary to calculate 5 pseudo matching samples.

The second matched string (sample string represented by a second special pattern in CUm in Fig. 5) has 33 samples. A corresponding matching string (also represented by the same special pattern) found in the reference sample set is in CU0, the first 7 samples are the last 7 samples of a third column of CU0, and the latter 3 samples are the first 3 samples in a fifth column of CU0. A matching distance D is obtained by subtracting a linear address or plane coordinate of the first sample of the matching string from a linear address or plane coordinate of the first sample of the matched string, and its matching length L is 33.

There is an unmatched sample after the second matched string. Therefore, it is necessary to calculate a pseudo matching sample.

The third matched string (sample string represented by a third special pattern in CUm in Fig. 5) has 21 samples. A corresponding matching string (also represented by the same special pattern) found in the reference sample set is in CUh-1 and CUh, the first 13 samples are the last 13 samples of the 16th column of CUh-1, and the latter 8 samples are the first 8 samples in the first column of CUh. A matching distance D is obtained by subtracting a linear address or plane coordinate of the first sample of the matching string from a linear address or plane coordinate of the first sample of the matched string, and its matching length L is 21.

Basic matching mode 2 is a matching mode for horizontal-path-based one-dimensional serial matching. Basic matching mode 2 is a dual mode of basic matching mode 1. "Vertical" in basic matching mode 1 is replaced with "horizontal", "column" is replaced with "row", "from top to bottom" is replaced with "from left to right", "left" is replaced with "upper" and "top end" is replaced with "left end".

Basic matching mode 3 is a matching mode for vertical-path-based 2D-shape-preserved matching. A current CU with a serial number m+1 (CUm+1) in Fig. 5 adopts the matching mode for fixed-width variable-length sample string matching with the width of 1. In the matching mode, the reference sample set preserves an inherent 2D arrangement manner for an original image plane, and in the current CU, samples are arranged column by column in the vertical scanning manner, and are arranged from top to bottom in each column. When the reference sample set is searched for a matching sample string, matched samples in the current CU move from top to bottom in the vertical scanning manner, and after one column is scanned and matched, the right adjacent column is scanned and matched. The matching sample string found in the reference sample set is required to be kept in a 2D shape completely consistent with a matched sample string in the current CU. The first two matched strings in fixed-width variable-length sample string matching adopting the matching mode are drawn in CUm+1 in Fig. 5.

The first matched string (sample string represented by a fourth special pattern in CUm+1 in Fig. 5) has 31 samples. A corresponding matching string (also represented by the same special pattern) found in the reference sample set is in CU1 and CUh+1. The matching string crosses boundaries of the two CUs, 6 samples are in CU1, and the other 25 samples are in CUh+1. The matching string in the reference sample set and the matched string in the current CU have completely the same 2D shape, that is, each of the matching string and the matched string consists of two columns, the first column has 16 samples, the second column has 15 samples, the tops of the first column and the second column are aligned, and a vertical height (including the samples at upper and lower endpoints) of each of the matching string and the matched string has 16 samples, and is equal to a height of the current CU CUm+1. A matching distance D is obtained by subtracting a linear address or plane coordinate of the first sample of the matching string from a linear address or plane coordinate of the first sample of the matched string, and its matching length L is 31.

There are 16 unmatched samples after the first matched string. Therefore, it is necessary to calculate 16 pseudo matching samples.

The second matched string (sample string represented by a fifth special pattern in CUm+1 in Fig. 5) has 36 samples. A corresponding matching string (also represented by the same special pattern) found in the reference sample set crosses four CUs, i.e. CU1, CU2, CUh+1 and CUh+2. Two samples of this matching string (also represented by the same special pattern) are in CU1, four samples are in CU2, 15 samples are in CUh+1 and 15 samples are in CUh+2. The matching string in the reference sample set and the matched string of the current CU have completely the same 2D shape. That is, each of the matching string and the matched string consists of four columns, the first column has one sample, each of the second and third columns has 16 samples, the fourth column has 3 samples, the bottoms of the first column, the second column and the third column are aligned, the tops of the second column, the third column and the fourth column are aligned, and a vertical height (including the samples at upper and lower endpoints) of each of the matching string and the matched string has 16 samples, and is equal to the height of the current CU CUm+1. A matching distance D is obtained by subtracting a linear address or plane coordinate of the first sample of the matching string from a linear address or plane coordinate of the first sample of the matched string, and its matching length L is 36.

Basic matching mode 4 is a matching mode for horizontal-path-based 2D-shape-preserved matching. Basic matching mode 4 is a dual mode of basic matching mode 3. A current CU with a serial number m+2 (CUm+2) in Fig. 5 adopts the matching mode for fixed-width variable-length sample string matching with the width of 1. In the matching mode, the reference sample set preserves the inherent 2D arrangement manner for the original image plane, and in the current CU, samples are arranged row by row in a horizontal scanning manner, and are arranged from left to right in each row. When the reference sample set is searched for a matching sample string, matched samples in the current CU move from left to right in the horizontal scanning manner, and after one row is scanned and matched, the lower adjacent row is scanned and matched. The matching sample string found in the reference sample set is required to be kept in a 2D shape completely consistent with a matched sample string in the current CU. The first three matched strings in fixed-width variable-length sample string matching adopting the matching mode are drawn in CUm+2 in Fig. 5.

The first matched string (sample string represented by a sixth special pattern in CUm+2 in Fig. 5) has 24 samples. A corresponding matching string (also represented by the same special pattern) found in the reference sample set is in CU1 and CU2. The matching string crosses boundaries of the two CUs, 14 samples are in CU1, and the other 10 samples are in CU2. The matching string in the reference sample set and the matched string in the current CU have completely the same 2D shape. That is, each of the matching string and the matched string consists of two rows, the first row has 16 samples, the second row has 8 samples, the left ends of the first row and the second row are aligned, and a horizontal height (including the samples at left and right endpoints) of each of the matching string and the matched string has 16 samples, and is equal to a width of the current CU CUm+2. A matching distance D is obtained by subtracting a linear address or plane coordinate of the first sample of the matching string from a linear address or plane coordinate of the first sample of the matched string, and its matching length L is 24.

There are 7 unmatched samples after the first matched string. Therefore, it is necessary to calculate 7 pseudo matching samples.

The second matched string (sample string represented by a seventh special pattern in CUm+2 in Fig. 5) has 23 samples. A corresponding matching string (also represented by the same special pattern) found in the reference sample set is in CUh and CUh+1. The matching string crosses boundaries of the two CUs, 12 samples are in CUh, and the other 11 samples are in CUh+1. The matching string in the reference sample set and the matched string in the current CU have completely the same 2D shape. That is, each of the matching string and the matched string consists of three rows, the first row has one sample, the second row has 16 samples, the third row has 6 samples, the right ends of the first row and the second row are aligned, the left ends of the second row and the third row are aligned, and a horizontal height (including the samples at left and right endpoints) of each of the matching string and the matched string has 16 samples, and is equal to the width of the current CU CUm+2. A matching distance D is obtained by subtracting a linear address or plane coordinate of the first sample of the matching string from a linear address or plane coordinate of the first sample of the matched string, and its matching length L is 23.

There are 6 unmatched samples after the second matched string. Therefore, it is necessary to calculate 6 pseudo matching samples.

The third matched string (sample string represented by an eighth special pattern in CUm+2 in Fig. 5) has 29 samples. A corresponding matching string (also represented by the same special pattern) found in the reference sample set is in CU1 and CU2. The matching string crosses boundaries of the two CUs, 6 samples are in CU1, and the other 23 samples are in CU2. The matching string in the reference sample set and the matched string in the current CU have completely the same 2D shape. That is, each of the matching string and the matched string consists of three rows, the first row has 4 samples, the second row has 16 samples, the third row has 9 samples, the right ends of the first row and the second row are aligned, the left ends of the second row and the third row are aligned, and a horizontal height (including the samples at left and right endpoints) of each of the matching string and the matched string has 16 samples, and is equal to the width of the current CU CUm+2. A matching distance D is obtained by subtracting a linear address or plane coordinate of the first sample of the matching string from a linear address or plane coordinate of the first sample of the matched string, and its matching length L is 29.

Various other matching modes may also be derived from the four abovementioned basic matching modes, such as a matching mode with a width of 2, 3, ..., W samples and a path trend alternation (odd columns move from top to bottom and even columns move from bottom to top) matching mode. The width W is fixed, which not only refers to that W is a constant in a video sequence or an image and refers to the following condition that: different from the length L which is an independent coding and decoding variable parameter, the width W is not an independent coding and decoding variable parameter but a number determined (fixed) by other coding and decoding variable parameters, is fixed along with determination of the other coding and decoding variable parameters, and takes a fixed value. For example:

Example 1: width W=1.

Example 2: width W=2.

Example 3: width W=X, where X is the total number of samples in a horizontal (or vertical) direction of the current CU.

Example 4: width W=X/2, where X is the total number of the samples in the horizontal (or vertical) direction of the current CU.

Example 5: width W=X/4, where X is the total number of the samples in the horizontal (or vertical) direction of the current CU.

Example 6: width W=f(X), where X is the total number of the samples in the horizontal (or vertical) direction of the current CU, and f is a predetermined function with X as an independent variable.

Example 7: width $W = \left\{ \begin{array}{l} X/2, when\ 0 \le V < X/2 \\ X/4, when\ X/2 \le V < X \end{array} \right\}$, where X is the total number of the samples in the horizontal (or vertical) direction of the current CU, and V is a horizontal (or vertical) distance between a first pixel sample of a matching current string and a left boundary (or right boundary or upper boundary or lower boundary) of the current CU.

Example 8: width W=f(X, V), where X is the total number of the samples in the horizontal (or vertical) direction of the current CU, V is the horizontal (or vertical) distance between the first pixel sample of the matching current string and the left boundary (or right boundary or upper boundary or lower boundary) of the current CU, and f is a predetermined function with X and V as independent variables.

Example 9: width $W = \left\{ \begin{array}{l} 1, when\ 1 \le L \le X \\ 2, when\ X+1 \le L \le 2X \end{array} \right\}$, where X is the total number of the samples in the horizontal (or vertical) direction of the current CU, and L is the matching length and its value range is a closed interval [1, 2X].

Example 10: width $W = \left\{ \begin{array}{l} 1, when\ 1 \le L \le X \\ 2, when\ X+1 \le L \le 2X \\ ...\ when\ ...... \\ k, when\ (k-1)X+1 \le L \le kX \end{array} \right\}$, where X is the total number of the samples in the horizontal (or vertical) direction of the current CU, L is a nominal matching length of the matching current string written into a compressed bitstream after entropy coding, and an actual matching length is LL (value range is a closed interval [1, X]) calculated through L (value range is a closed interval [1, kX]) and X:

$$LL = \left\{ \begin{array}{l} L, when\ 1 \le L \le X \\ L-X, when\ X+1 \le L \le 2X \\ ...\ when\ ...... \\ L-(k-1)X, when\ (k-1)X+1 \le L \le kX \end{array} \right\}.$$

Example 11: width W=f(X, L), where X is the total number of the samples in the horizontal (or vertical) direction of the current CU, L is the nominal matching length of the matching current string written into the compressed bitstream after entropy coding, the actual matching length LL is LL=g(X, L), and f and g are two predetermined functions taking X and L as independent variables.

Example 12: width $W = \begin{cases} 1, & when\ 1 \le L \le V \\ 2, & when\ V+1 \le L \le 2V \\ ...\ when\ ...... \\ k, & when\ (k-1)V+1 \le L \le kV \end{cases}$, where V is the horizontal (or vertical) distance between the first pixel sample of the matching current string and the left boundary (or right boundary or upper boundary or lower boundary) of the current CU, L is the nominal matching length of the matching current string written into the compressed bitstream after entropy coding, and the actual matching length is LL calculated through

L and V: $LL = \begin{cases} L, & when\ 1 \le L \le V \\ L-X, & when\ X+1 \le L \le 2V \\ ...\ when\ ...... \\ L-(k-1)V, & when\ (k-1)V+1 \le L \le kV \end{cases}$, where the value range of L is a closed interval [1, kV], and the value range of LL is a closed interval [1, V].

Example 13: width W=f(V, L), where V is the horizontal (or vertical) distance between the first pixel sample of the matching current string and the left boundary (or right boundary or upper boundary or lower boundary) of the current CU, L is the nominal matching length of the matching current string written into the compressed bitstream after entropy coding, the actual matching length LL is LL=g(V, L), and f and g are two predetermined functions taking V and L as independent variables.

Example 14: width W=f(A, B), where A and B are two independent coding and decoding variable parameters, and f is a predetermined function taking A and B as independent variables.

In each above-mentioned example, a unit of the matching length is usually a sample, and may also be W samples.

In a decoding method and device of the present invention, the most basic peculiar technical characteristic of a fixed-width variable-length string matching decoding manner is that a matching mode (such as one of the abovementioned matching modes) adopted by a sequence or an image or a current CU is parsed from a bitstream data when the compressed bitstream data of the current CU is decoded, and then representation parameters, i.e. matching distances D and matching lengths L, of matching strings are sequentially read from the bitstream data. After a matching distance and matching length pair (D, L) of one matching string, decoding work is to calculate a position of a first sample of a matching string (also called a matching reference string) in a reference sample set from a position of a first sample of a current decoded matched string (also called a matching current string) and a matching distance according to the matching mode. Then, all samples of the whole matching string of which a length is a matching length L may be copied from the reference sample set according to the matching mode, and the whole matching string is moved and pasted to a position of the current decoded matched string to reconstruct the whole matched string. For a position of an unmatched sample (also called an unmatchable sample), a pseudo matching sample is calculated to complete the position of the unmatched sample from an adjacent sample which has been decoded (partially decoded or completely decoded) or a boundary default sample (when the unmatched sample does not have any decoded adjacent sample, for example, the unmatched sample is a pixel of the leftmost upper corner of the image), or the unmatched sample (see subsequent embodiment and variation 6) is read from a compressed bitstream or the unmatched sample is calculated after its variant is read from the compressed bitstream. The matching strings are sequentially copied, moved and pasted one by one, or the unmatched samples are read and/or calculated one by one (including completing the positions of the unmatched samples with the pseudo matching samples) to finally reconstruct all the samples of the whole current decoded CU. That is, when a CU is decoded, all the matching current strings and unmatchable samples are combined to cover the whole CU. When matching current strings in a CU have different fixed widths, one matching current string may also cover a part of the other matching current string. At this time, samples of the matching current strings which are covered and decoded before are replaced with samples of the matching current strings which are decoded later according to a decoding sequence. When the matching strings are copied from the reference sample set, whether the matching strings are copied from a first reconstructed reference pixel sample set or a second reconstructed reference pixel sample set or a third reconstructed reference pixel sample set is determined according to the positions of the matching reference strings. One matching reference string may cross two or three of the three sets, i.e. the first, second and third reconstructed reference pixel sample sets, and the set to which the matching reference string belongs is determined by a position of its starting pixel sample. The three reference pixel sample sets, i.e. the first, second and third reconstructed reference pixel sample sets, may also be subjected to different processing (such as colour quantization, numerical quantization, vector quantization, noise elimination, filtering and characteristic extraction) or transformation (such as colour format transformation, arrangement manner transformation, frequency domain transformation, spatial domain mapping, DPCM, first-order or high-order differentiation operation and indexation) or a combination of these processing or transformation, except differences in position and/or reconstruction stage. Although position labels of the three reference pixel sample sets are not intersected, three areas, corresponding to them respectively, of t current image may still have an overlapped part. One or two of the three reconstructed reference pixel sample sets may be null, but they may not be all null. Input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods.

When CUm in Fig. 5 is decoded and reconstructed, a first sample matching string with a length of 25 is copied from a reference sample set, and is moved and pasted to the current decoded CU. Then 5 pseudo matching samples are calculated from an adjacent sample. Second sample matching string with a length of 33 is copied from the reference sample set, and is moved and pasted to the current decoded CU. Then 4 pseudo matching samples are calculated from an adjacent sample. A third sample matching string with a length of 21 is copied from the reference sample set, and is moved and pasted to the current decoded CU. The process is repeated until all samples of CUm are finally reconstructed.

By using the same method, CUm+1 and CUm+2 in Fig. 5 may be decoded and reconstructed.

All CUs in an image may adopt the same matching mode, so that a decoder is only required to parse the matching mode adopted for the image from header information of the image, and is not required to parse matching modes for each CU, and a coder is also only required to write the matching mode into the header information of the image. All images and all CUs in a video sequence may adopt the same matching mode, so that the decoder is only required to parse the matching mode adopted for the sequence from header information of the sequence, and is not required to parse matching modes for each image and each CU, and the coder is also only required to write the matching mode into the header information of the sequence. Some CUs may further be divided into a plurality of subareas, and the subareas adopt different matching modes.

The technical characteristics of the present invention are described above with a plurality of specific embodiments. Those skilled in the art may easily know other advantages and effects of the present invention from the contents disclosed by the specification. The present invention may also be implemented or applied through other different specific implementation modes, and various modifications or variations may also be made to each detail in the specification without departing from the spirit of the present invention on the basis of different viewpoints and applications.

Terms used in the present invention may also be called by other physical or mathematical names, and for example, matching distance may also be called one of the following aliases: matching position, position, distance, relative distance, displacement, displacement vector, movement, movement vector, offset, offset vector, compensation amount, compensation, linear address, address, 2D coordinate, one-dimensional coordinate, coordinate, index, exponent, and the like.

The matching length may also be called one of the following aliases: matching stroke, matching number, matching count, matching run length, length, stroke, number, count, run length, and the like. The String matching may also be called string copying and the like.

A main characteristic of the coding method of the present invention is that a reconstructed reference pixel sample set is searched to obtain a matching reference sample subset for pixel samples of a coding block and is matched with a matching current sample subset in the coding block and samples in the matching reference sample subset are called matching samples; and parameters generated in a matching coding process and related to matching coding are placed into a compressed bitstream. The parameters include, but not limited to, parameters about a position and size of the matching reference sample subset. A parameter of a matching relationship between the matching reference sample subset and the matching current sample subset may be represented by two matching parameters, i.e. a matching distance and a matching length, and the matching distance and the matching length are coding results obtained by coding the matching current sample subset. If there exists an unmatched sample (also called an unmatchable sample) of which a match is not found in the reconstructed reference pixel sample set in the coding block, one of the following methods is adopted to complete a coding result absent at a position of the unmatched sample:

a pseudo matching sample is calculated as the coding result from an adjacent sample which has been subjected to a plurality of stages of coding and reconstruction,

or

the pseudo matching sample is calculated as the coding result from a boundary default sample,

or

the unmatched sample is directly used as the coding result,

or

a variant of the unmatched sample is calculated as the coding result from the pseudo matching sample and the unmatched sample.

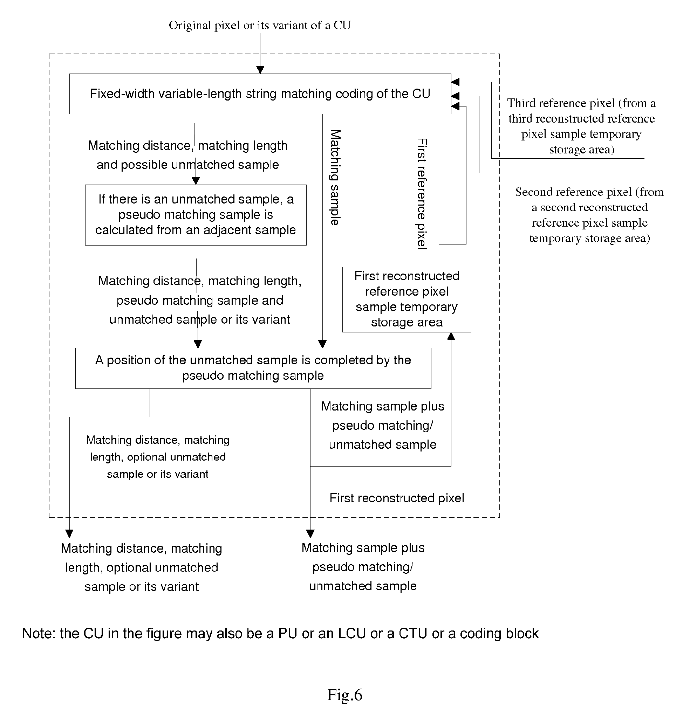

A flowchart of the coding method of the present invention is shown in Fig. 6. The coding method of the present invention includes all or part of the following steps:

1) fixed-width variable-length string matching coding is performed on an original pixel or its variant of a CU to generate (1) a matching distance and a matching length and (2) a matching sample; that is, a first reconstructed reference pixel sample temporary storage area (i.e. a first reconstructed reference pixel sample set), a second reconstructed reference pixel sample temporary storage area (i.e. a second reconstructed reference pixel sample set) and a third reconstructed reference pixel sample temporary storage area (i.e. a third reconstructed reference pixel sample set), of which position labels are not intersected, are searched to obtain one or more optimal fixed-width variable-length pixel sample matching strings (called matching reference strings) according to a predetermined matching mode and a certain evaluation criterion; one matching reference string may cross two or three of the three temporary storage areas, i.e. the first, second and third reconstructed reference pixel sample temporary storage areas, and the temporary storage area to which the matching reference string belongs is determined by a position of its starting pixel sample; a fixed-width variable-length string matching coding result is the one or more matching distances, matching lengths and matching samples and possible unmatched samples (samples, of which matches are not found, of original pixels or their variants of the current coded CU, also called unmatchable samples); input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction and the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods;

2) if there is an unmatched sample, a pseudo matching sample is calculated from an adjacent sample which has been coded and partially or completely reconstructed or a boundary default sample, and a variant of the unmatched sample may also be optionally calculated; the matching distance, the matching length, the pseudo matching sample and/or the unmatched sample and/or its variant are output;

3) a position of the unmatched sample is completed optionally by the pseudo matching sample; the matching sample and the unmatched sample and/or the pseudo matching sample are placed into the first reconstructed reference pixel sample temporary storage area as first reconstructed reference pixel samples; representation parameters, such as the matching distance, the matching length and the optional unmatched sample or its variant, of a fixed-width variable-length string matching manner are output; and these representation parameters are written into a compressed bitstream after being subjected to subsequent entropy coding (also including optional one-dimensional or 2D adjacent parameter-based first-order or high-order differential coding, predictive coding, matching coding, mapping coding, transformation coding, quantization coding, index coding, run length coding, binarization coding and the like).

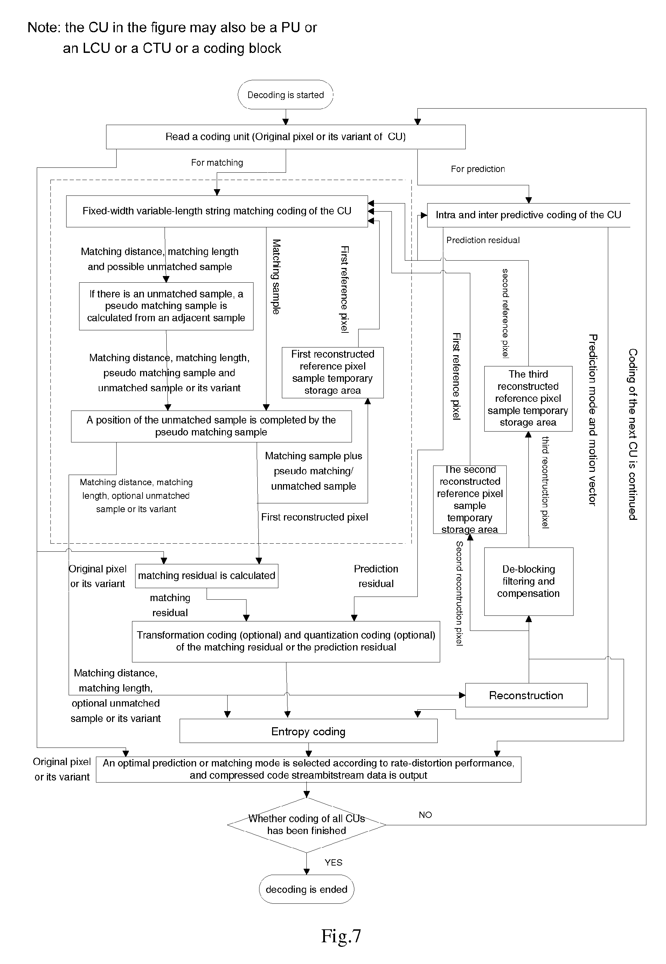

An embodiment integrating the abovementioned coding method of the present invention is shown in Fig. 7. The embodiment includes all or part of the following steps:

1) an original pixel or its variant of a CU is read;

2) intra predictive coding and inter predictive coding, which are collectively referred to as predictive coding, are performed on the CU to generate (1) a prediction residual and (2) a prediction mode and a motion vector;

3) fixed-width variable-length string matching coding is performed on the CU to generate (1) a matching distance and a matching length and (2) a matching sample; that is, a first reconstructed reference pixel sample temporary storage area (i.e. a first reconstructed reference pixel sample set), a second reconstructed reference pixel sample temporary storage area (i.e. a second reconstructed reference pixel sample set) and a third reconstructed reference pixel sample temporary storage area (i.e. a third reconstructed reference pixel sample set), of which position labels are not intersected, are searched to obtain one or more optimal fixed-width variable-length pixel sample matching strings (called matching reference strings) according to a predetermined matching mode and a certain evaluation criterion; one matching reference string may cross two or three of the three temporary storage areas, i.e. the first, second and third reconstructed reference pixel sample temporary storage areas, and the temporary storage area to which the matching reference string belongs is determined by a position of its starting pixel sample; a fixed-width variable-length string matching coding result is the one or more matching distances, matching lengths and matching samples and possible unmatched samples (samples, of which matches are not found, of original pixels or their variants of the current coded CU, also called unmatchable samples); input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction and the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods;

4) if there is an unmatched sample, a pseudo matching sample is calculated from an adjacent sample which has been coded and partially or completely reconstructed or a boundary default sample, and a variant of the unmatched sample may also be optionally calculated; the matching distance, the matching length, the pseudo matching sample and/or the unmatched sample and/or its variant are output;

5) a position of the unmatched sample is completed optionally by the pseudo matching sample; the matching sample and the unmatched sample and/or the pseudo matching sample are placed into the first reconstructed reference pixel sample temporary storage area as first reconstructed reference pixel samples; the matching distance, the matching length and the optional unmatched sample or its variant are output;

6) a matching residual is calculated, wherein the matching residual is calculated from an original pixel sample of input and a sample of a first reconstructed pixel;

7) transformation coding and quantization coding are performed on the prediction residual and matching residual generated in Step 2) and Step 6), wherein transformation coding and quantization coding are optional respectively, that is, transformation coding is not performed if transformation coding may not achieve a better data compression effect, and if lossless coding is to be performed, not only is transformation coding not performed, but also quantization coding is not performed;

8) multiple second reconstructed pixels, corresponding to multiple prediction modes and multiple matching modes, of the CU are obtained for rate-distortion cost calculation in subsequent Step 11) by performing inverse operation of the prediction manners on results of prediction-transformation-quantization coding manners (i.e. prediction-based coding manners, called the prediction manners for short) in Step 2) and 7) and performing inverse operation of the matching manners on results of matching-transformation-quantization coding manners (i.e. matching-based coding manners, called the matching manners for short) in Step 3) to 7), the inverse operation being collectively referred to as reconstruction, and after an optimal coding manner for the current coded CU is determined in subsequent Step 11), the second reconstructed pixel adopting the optimal coding manner is placed into the second reconstructed reference pixel sample temporary storage area;

9) de-blocking filtering and pixel compensation operation is performed on the second reconstructed pixel adopting the optimal coding manner to generate a third reconstructed pixel, and the third reconstructed pixel is placed into the third reconstructed reference pixel sample temporary storage area for use as a reference pixel for subsequent predictive coding and fixed-width variable-length string matching coding;

10) entropy coding is performed on header information of a sequence, an image and the CU, the second coding result, i.e. the prediction mode and the motion vector, obtained in Step 2), matching coding output, i.e. the matching distance, the matching length and the optional unmatched sample or its variant, of Step 5) and the matching residual and prediction residual (which may have been subjected to transformation-quantization operation or quantization operation) of Step 7) to generate a bit rate of the compressed bitstream, wherein entropy coding also includes optional one-dimensional or 2D adjacent sample-based first-order or high-order differential coding, predictive coding, matching coding, mapping coding, transformation coding, quantization coding, index coding, run length coding and binarization coding executed on a sample of an entropy decoding object such as the matching mode, the matching distance, the matching length, the unmatched sample or its variant and the matching residual to eliminate relevance among the samples and improve entropy coding efficiency;

11) rate-distortion cost is calculated according to the original pixel, multiple second reconstructed pixels and the bit rate or bit rate estimate value of the compressed bitstream, an optimal prediction mode (matching-based coding manner or prediction-based coding manner), optimal matching mode or optimal prediction mode of the CU is selected according to rate-distortion performance, and compressed bitstream data of the CU is output; the compressed bitstream at least includes the representation parameters, such as the matching distance, the matching length and the optional unmatched sample or its variant, for the fixed-width variable-length string matching manner; and

12) whether coding of all CUs has been finished or not is judged, coding is ended if YES, otherwise Step 1) is executed to start coding the next CU.

A main characteristic of the decoding method of the present invention is that a compressed bitstream is parsed and parameters related to matching coding are acquired by respectively optional one-dimensional or 2D adjacent sample-based first-order or high-order differential decoding, predictive decoding, matching decoding, mapping decoding, inverse transformation decoding, inverse quantization decoding, index decoding, run length decoding and binarization decoding. For a decoding block, a matching reference sample subset is copied from a position in a reconstructed reference pixel sample set according to the parameters, and all samples (called matching samples) of the matching reference sample subset are moved and pasted to a current decoding position of the decoding block to obtain a matching current sample subset. The parameters include, but not limited to, parameters about a position and size of the matching reference sample subset. Matching parameters, i.e. a matching distance and a matching length, representing a matching relationship are adopted to determine the position and size of the matching reference sample subset. If there is no matching reference sample subset from the reconstructed pixel sample set at the current decoding position of the decoding block, one of the following methods is adopted to complete a current sample absent at a position of the current decoding position:

a pseudo matching sample is calculated as the current sample from an adjacent sample which has been subjected to a plurality of stages of coding and reconstruction,

or

the pseudo matching sample is calculated as the current sample from a boundary default sample,

or

an unmatched sample of input is directly used as the current sample,

or

the unmatched sample is calculated as the current sample from the pseudo matching sample and a variant of the input unmatched sample.

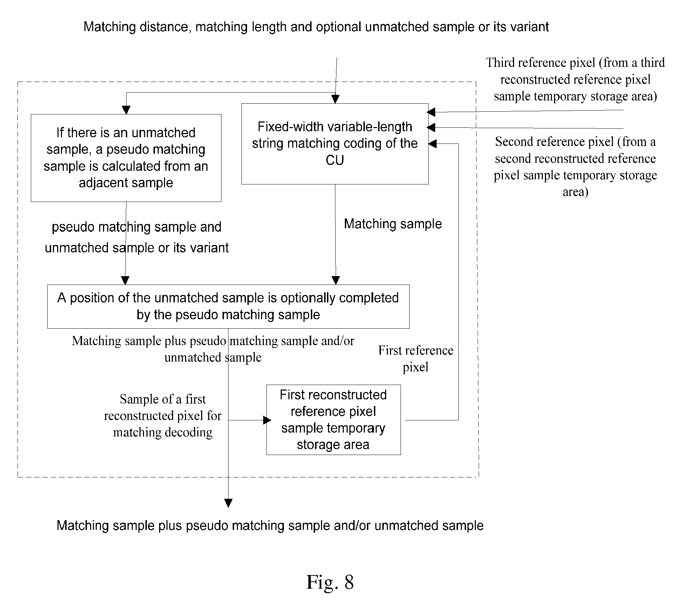

A flowchart of the decoding method of the present invention is shown in Fig. 8. The decoding method of the present invention includes all or part of the following steps:

1) a compressed bitstream is parsed to acquire matching decoding related parameters of input, and fixed-width variable-length string matching decoding is performed by virtue of the acquired matching parameters of the input, i.e. a matching distance and a matching length; that is, all samples of the whole matching string (called a matching reference string ) of which a length is the matching length is copied from a first reconstructed reference pixel sample temporary storage area (i.e. a first reconstructed reference pixel sample set), a second reconstructed reference pixel sample temporary storage area (i.e. a second reconstructed reference pixel sample set) and a third reconstructed reference pixel sample temporary storage area (i.e. a third reconstructed reference pixel sample set), of which position labels are not intersected, according to a known matching mode and a fixed width, and the whole matching string is moved and pasted to a position of a matched string (also called a matching current string) in a current decoded CU to reconstruct the whole matched string; one matching reference string may cross two or three of the three temporary storage areas, i.e. the first, second and third reconstructed reference pixel sample temporary storage areas, and the temporary storage area to which the matching reference string belongs is determined by a position of its starting pixel sample; the three reference pixel sample sets, i.e. the first, second and third reconstructed reference pixel sample sets, may also be subjected to different processing (such as colour quantization, numerical quantization, vector quantization, noise elimination, filtering and characteristic extraction) or transformation (such as colour format transformation, arrangement manner transformation, frequency domain transformation, spatial domain mapping, DPCM, first-order or high-order differentiation operation and indexation) or a combination of these processing or transformation, except differences in position and/or reconstruction stage; although the position labels of the three reconstructed reference pixel sample sets are not intersected, three areas, corresponding to them respectively, of a current image may still have an overlapped part; one or two of the three reconstructed reference pixel sample sets may be null, but they may not be all null; input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods;

2) if specific values of the matching distance and matching length of input or an additional flag represents that there is no matching sample from the first reconstructed reference pixel sample temporary storage area or the second reconstructed reference pixel sample temporary storage area or the third reconstructed reference pixel sample temporary storage area at the position of the matched string (sample) in the current decoded CU, that is, the matching sample is absent at a current decoding position, a pseudo matching sample is calculated from an adjacent sample which is partially decoded or completely decoded or a boundary default sample; an unmatched sample of input or its variant may also be optionally read, or the unmatched sample may be optionally calculated;

3) the matching sample absent at the position of the unmatched sample may be completed optionally by the pseudo matching sample; the matching sample copied in Step 1) and the pseudo matching sample calculated in Step 2) and/or the unmatched sample read from the input in Step 2) and/or the unmatched sample calculated after being read from the input in Step 2) are combined to obtain a complete sample of a first reconstructed pixel of matching decoding, and the sample of the first reconstructed pixel is placed into the first reconstructed reference pixel sample temporary storage area;

by the abovementioned three steps, matching strings are sequentially copied, moved and pasted one by one, or unmatched samples are read and/or calculated one by one (including completing the positions of the unmatched samples with the pseudo matching samples) to finally reconstruct all the samples of the whole current decoded CU; that is, when a CU is decoded, all the matching current strings and unmatchable samples are combined to cover the whole CU; when matching current strings in a CU have different fixed widths, one matching current string may also cover a part of the other matching current string; and at this time, samples of the matching current strings which are covered and decoded before are replaced with samples of the matching current strings which are decoded later according to a decoding sequence.

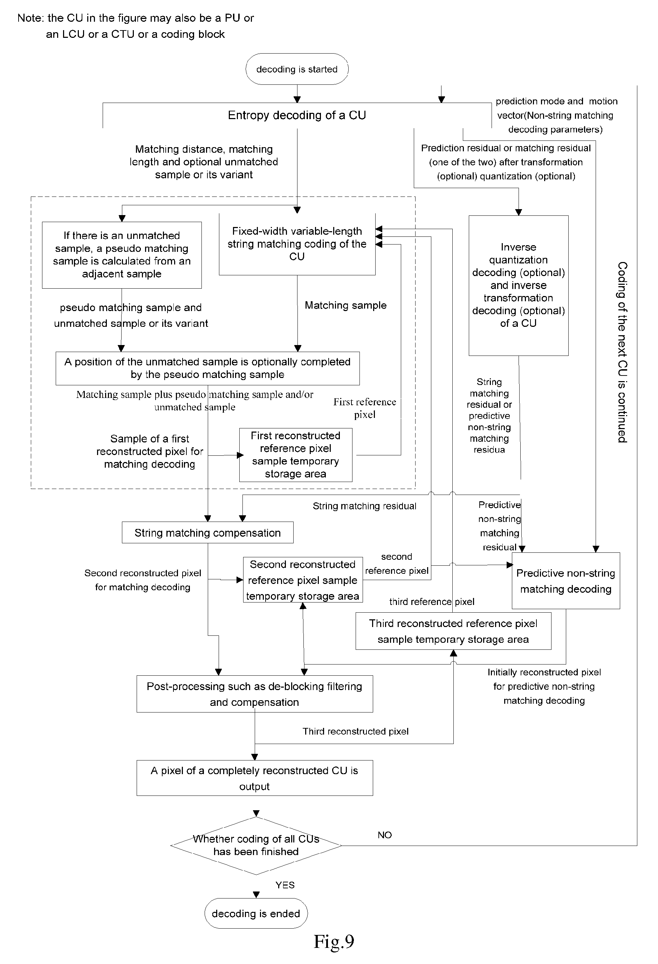

An embodiment integrating the abovementioned decoding method of the present invention is shown in Fig. 9. The embodiment includes all or part of the following steps:

1) entropy decoding is performed on a CU, and header information and data information of the CU are parsed, wherein the header information includes whether a predictive fixed-width variable-length non-string matching (called predictive non-string matching for short) decoding step or a fixed-width variable-length string matching (called string matching for short) decoding step is adopted when the CU is subsequently decoded; entropy decoding may also include respectively optional one-dimensional or 2D adjacent sample-based first-order or high-order differential decoding, predictive decoding, matching decoding, mapping decoding, inverse transformation decoding, inverse quantization decoding, index decoding, run length decoding and binarization decoding executed on an entropy decoding object such as a matching mode, a matching distance, a matching length, an additional flag, an unmatched sample or its variant and a string matching residual;

2) for a predictive non-string matching residual or string matching residual which may be subjected to transformation-quantization operation or quantization operation, inverse operation of the operation, i.e. inverse quantization-inverse transformation decoding operation or inverse quantization decoding operation or identity operation, is performed to generate a predictive non-string matching residual or a string matching residual, wherein the step is optional, and if there is no predictive non-string matching residual and string matching residual in a bitstream, operation of the step is not performed;

3) if it is parsed in Step 1) that the predictive non-string matching decoding step is adopted when the CU is decoded, intra predictive decoding or inter predictive non-string matching decoding, which is collectively referred to as predictive non-string matching decoding, is performed to generate an initially reconstructed pixel of predictive non-string matching decoding, a sample of the initially reconstructed pixel is placed into a second reconstructed reference pixel sample temporary storage area, then Step 8) is executed, otherwise the next step is sequentially executed;

4) fixed-width variable-length string matching decoding is performed on a CU by virtue of one or more pairs of matching distances D and matching lengths L obtained in Step 1); that is, all samples of the whole matching string (called a matching reference string ) of which a length is L is copied from a first reconstructed reference pixel sample temporary storage area (i.e. a first reconstructed reference pixel sample set), a second reconstructed reference pixel sample temporary storage area (i.e. a second reconstructed reference pixel sample set) and a third reconstructed reference pixel sample temporary storage area (i.e. a third reconstructed reference pixel sample set), of which position labels are not intersected, according to a known matching mode and a fixed width, the whole matching string is moved and pasted to a position of a matched string (also called a matching current string) in the CU to reconstruct the whole matched string, and in such a manner, all matched strings of the CU are reconstructed one by one; one matching reference string may cross two or three of the three temporary storage areas, i.e. the first, second and third reconstructed reference pixel sample temporary storage areas, and the temporary storage area to which the matching reference string belongs is determined by a position of its starting pixel sample; the three reference pixel sample sets, i.e. the first, second and third reconstructed reference pixel sample sets, may also be subjected to different processing (such as colour quantization, numerical quantization, vector quantization, noise elimination, filtering and characteristic extraction) or transformation (such as colour format transformation, arrangement manner transformation, frequency domain transformation, spatial domain mapping, DPCM, first-order or high-order differentiation operation and indexation) or a combination of these processing or transformation, except differences in position and/or reconstruction stage; although the position labels of the three reconstructed reference pixel sample sets are not intersected, three areas, corresponding to them respectively, of a current image may still have an overlapped part; one or two of the three reconstructed reference pixel sample sets may be null, but they may not be all null; input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods;

5) if specific values of the matching distance and matching length obtained in Step 1) or an additional flag represents that there is no matching sample from the first reconstructed reference pixel sample temporary storage area or the second reconstructed reference pixel sample temporary storage area or the third reconstructed reference pixel sample temporary storage area at the position of the matched string (sample) in the current decoded CU, that is, the matching sample is absent at a current decoding position, a pseudo matching sample is calculated from an adjacent sample which is partially decoded or completely decoded or a boundary default sample; an unmatched sample of input or its variant may also be optionally read, or the unmatched sample may be optionally calculated;

6) if the matching sample is absent at the current decoding position, the absent matching sample may be completed optionally by the pseudo matching sample calculated in Step 5); the matching sample copied in Step 4) and the pseudo matching sample and/or unmatched sample calculated in Step 5) are combined to obtain a complete sample of a first reconstructed pixel (i.e. a first reconstructed reference pixel) of matching decoding, and the sample of the first reconstructed pixel is placed into the first reconstructed reference pixel sample temporary storage area;

7) string matching compensation is performed, that is, compensation is performed on the sample of the first reconstructed pixel generated in Step 6) to generate a sample of a second reconstructed pixel of string matching decoding by virtue of the string matching residual generated in Step 2), and the sample of the second reconstructed pixel is placed into the second reconstructed reference pixel sample temporary storage area;

8) post-processing such as de-blocking filtering and pixel compensation operation is performed on the initially reconstructed pixel of predictive decoding in Step 3) or the second reconstructed pixel of string matching decoding in Step 7), and then a sample of a third reconstructed pixel generated by the operation is placed into the third reconstructed reference pixel sample temporary storage area for use as a reference pixel for subsequent predictive non-string matching decoding and fixed-width variable-length string matching decoding;

9) the sample of the third reconstructed pixel of the CU is output; and

10) whether decoding of compressed bitstream data of all CUs has been finished or not is judged, decoding is ended if YES, otherwise Step 1) is executed to start decoding the next CU.

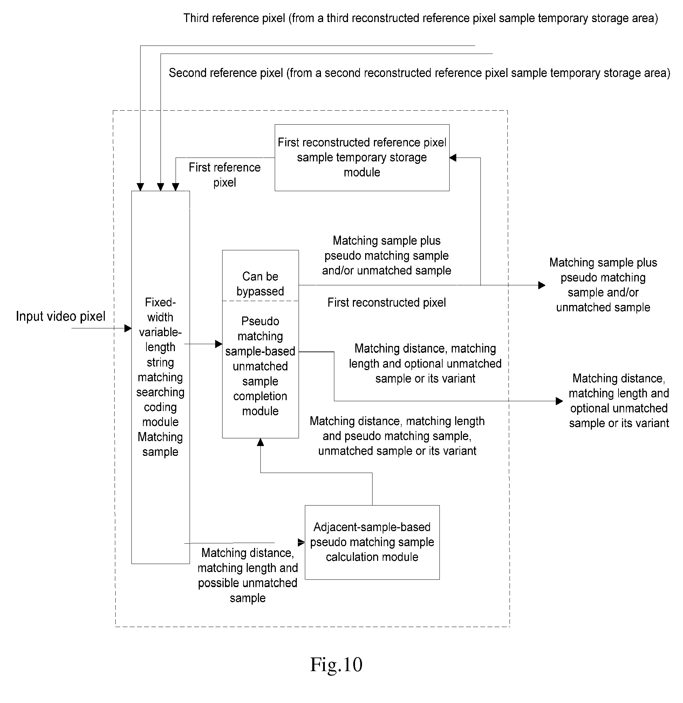

A diagram of the coding device of the present invention is shown in Fig. 10. The whole coding device consists of all or part of the following modules:

1) a fixed-width variable-length string matching searching coding module: the module executes fixed-width variable-length string matching coding on original video pixel samples, searches a first reconstructed reference pixel sample temporary storage module (temporally storing samples of a first reconstructed reference pixel sample set), a second reconstructed reference pixel sample temporary storage module (temporally storing samples of a second reconstructed reference pixel sample set) and a third reconstructed reference pixel sample temporary storage module (temporally storing samples of a third reconstructed reference pixel sample set), of which position labels are not intersected, to obtain an optimal fixed-width variable-length matching string (called a matching reference string) and outputs (1) a matching sample of the optimal matching string, (2) a matching distance D and matching length L of the optimal matching string and (3) a possible unmatched sample, i.e. a sample of an original pixel of which a match is not found in the current coded CU and its variant, also called an unmatchable sample, wherein one matching reference string may cross two or three of the first, second and third reconstructed reference pixel sample sets, and the set to which the matching reference string belongs is determined by a position of its starting pixel sample; input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction and the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods;

2) an adjacent-sample-based pseudo matching sample calculation module: the module, if there is no optimal matching sample found for some video pixel samples of input in the first reconstructed reference pixel sample temporary storage module, the second reconstructed reference pixel sample temporary storage module and the third reconstructed reference pixel sample temporary storage module, that is, these video pixel samples of the input are unmatched samples, calculates a pseudo matching sample from an adjacent sample which has been coded and partially or completely reconstructed or a boundary default sample, may also optionally calculate a variant of the unmatched sample, and outputs the matching distance, the matching length, the pseudo matching sample and/or the unmatched sample and/or its variant;

3) a pseudo matching sample-based unmatched sample completion module: the module completes a position of the unmatched sample for which no optimal matching sample is found by the calculated pseudo matching sample, wherein the matching sample and unmatched sample, which are found by module 1), and/or the pseudo matching sample calculated by module 2) are combined into a first reconstructed pixel sample placed into the first reconstructed reference pixel sample temporary storage module; the module may be bypassed, and at this time, the matching sample and unmatched sample, which are found by module 1), are combined into the first reconstructed pixel sample placed into the first reconstructed reference pixel sample temporary storage module; the module outputs representation parameters, such as the matching distance, the matching length and the optional unmatched sample or its variant, of a fixed-width variable-length string matching manner; these representation parameters are written into a compressed bitstream after being subjected to subsequent entropy coding (also including, but not limited to, respectively optional one-dimensional or 2D adjacent parameter-based first-order or high-order differential coding, predictive coding, matching coding, mapping coding, transformation coding, quantization coding, index coding, run length coding, binarization coding and the like); the module may also optionally output the matching sample and the pseudo matching sample and/or the unmatched sample; and

4) the first reconstructed reference pixel sample temporary storage module: the module is configured to temporally store the first reconstructed pixel sample formed by combining the found matching sample and unmatched sample and/or the calculated pseudo matching sample for use as a first reference pixel sample for subsequent string matching searching coding.

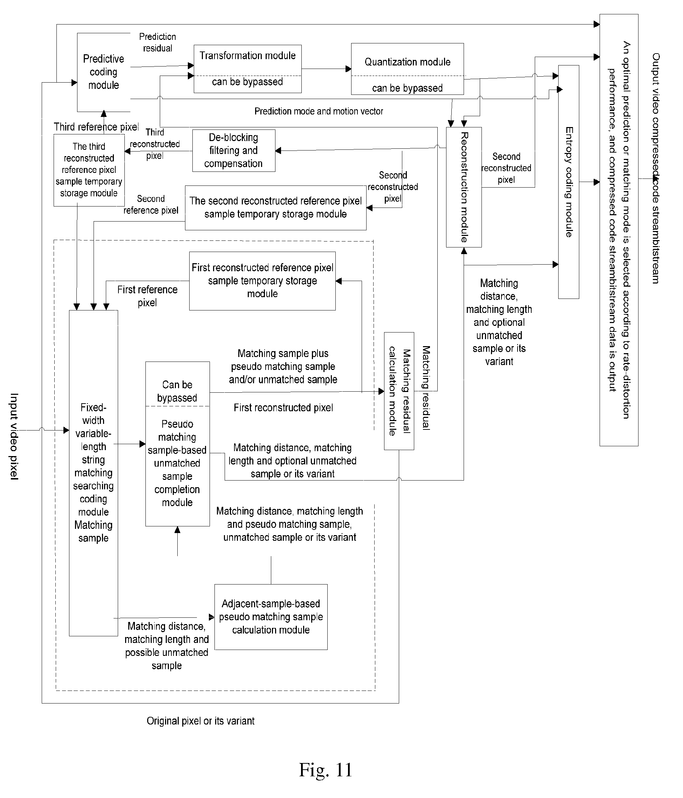

An embodiment integrating the abovementioned coding device of the present invention is shown in Fig. 11. The embodiment consists of all or part of the following modules:

1) a predictive coding module: the module executes intra predictive coding and inter predictive coding on video pixel samples of input and outputs (1) a prediction residual and (2) a prediction mode and a motion vector;

2) a fixed-width variable-length string matching searching coding module: the module executes fixed-width variable-length string matching coding on the video pixel samples of the input, searches a first reconstructed reference pixel sample temporary storage module (temporally storing samples of a first reconstructed reference pixel sample set), a second reconstructed reference pixel sample temporary storage module (temporally storing samples of a second reconstructed reference pixel sample set) and a third reconstructed reference pixel sample temporary storage module (temporally storing samples of a third reconstructed reference pixel sample set), of which position labels are not intersected, to obtain an optimal fixed-width variable-length pixel sample matching string and outputs (1) a matching sample of the optimal matching string, (2) a matching distance D and matching length L of the optimal matching string and (3) a possible unmatched sample, i.e. a sample of an original pixel of which a match is not found in the current coded CU and its variant, also called an unmatchable sample, wherein one matching reference string may cross two or three of the first, second and third reconstructed reference pixel sample sets, and the set to which the matching reference string belongs is determined by a position of its starting pixel sample; input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction and the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods;

3) an adjacent-sample-based pseudo matching sample calculation module: the module, if there is no optimal matching sample found for some video pixel samples of input in the first reconstructed reference pixel sample temporary storage module, the second reconstructed reference pixel sample temporary storage module and the third reconstructed reference pixel sample temporary storage module, that is, these video pixel samples of the input are unmatched samples, calculates a pseudo matching sample from an adjacent sample which has been coded and partially or completely reconstructed or a boundary default sample, may also optionally calculate a variant of the unmatched sample, and outputs the matching distance, the matching length, the pseudo matching sample and/or the unmatched sample and/or its variant;

4) a pseudo matching sample-based unmatched sample completion module: the module completes a position of the unmatched sample for which no optimal matching sample is found by the calculated pseudo matching sample, wherein the matching sample and unmatched sample, which are found by module 2), and/or the pseudo matching sample calculated by module 3) are combined into a first reconstructed pixel sample placed into the first reconstructed reference pixel sample temporary storage module; the module may be bypassed, and at this time, the matching sample and unmatched sample, which are found by module 2), are combined into the first reconstructed pixel sample placed into the first reconstructed reference pixel sample temporary storage module; the module outputs representation parameters, such as the matching distance, the matching length and the optional unmatched sample or its variant, of a fixed-width variable-length string matching manner; these representation parameters are written into a compressed bitstream after being subjected to subsequent entropy coding (also including, but not limited to, respectively optional one-dimensional or 2D adjacent parameter-based first-order or high-order differential coding, predictive coding, matching coding, mapping coding, transformation coding, quantization coding, index coding, run length coding, binarization coding and the like); the module may also optionally output the matching sample and the pseudo matching sample and/or the unmatched sample;

5) the first reconstructed reference pixel sample temporary storage module: the module is configured to temporally store the first reconstructed pixel sample formed by combining the found matching sample and unmatched sample and/or the calculated pseudo matching sample for use as a first reference pixel sample for subsequent string matching searching coding;

6) a matching residual calculation module: the module calculates a matching residual from the video pixel samples of the input and the first reconstructed pixel sample;

7) a transformation module: the module executes transformation operation on the matching residual and a prediction residual and outputs a transformation coefficient, wherein transformation operation may not achieve a data compression effect for a certain type of screen image pixel, and under such a condition, transformation operation is not executed, that is, the transformation module is bypassed, and the matching residual or the prediction residual is directly output;

8) a quantization module: the module executes quantization operation on the transformation coefficient (under the condition that the transformation module is not bypassed) or the matching residual or the prediction residual (under the condition that the transformation module is bypassed), outputs a quantization transformation coefficient or quantization prediction residual for predictive coding and outputs a quantization transformation coefficient or quantization matching residual for matching coding, wherein the transformation module and the quantization module may both be bypassed, and the prediction residual and the matching residual are directly output;

9) an entropy coding module: the module executes entropy coding on results, such as the matching distance, the matching length, the optional unmatched sample or its variant and the quantization transformation coefficient or the quantization matching residual, of matching code manners implemented by module 2) to module 4) and module 6) to module 8), and executes entropy coding on results, such as the prediction mode, the motion vector and the quantization transformation coefficient or the quantization prediction residual, of predictive coding manners implemented by module 1), module 7) and module 8), including executing respectively optional one-dimensional or 2D adjacent sample-based first-order or high-order differential coding, predictive coding, matching coding, mapping coding, transformation coding, quantization coding, index coding, run length coding and binarization coding on samples of the entropy coding objects at first;

10) a reconstruction module: the module executes inverse operation of the predictive coding manners implemented by the predictive coding module, the transformation module and the quantization module and executes inverse operation of the matching coding manners implemented by the fixed-width variable-length string matching searching coding module, the adjacent-sample-based pseudo matching sample calculation module, the pseudo matching sample-based unmatched sample completion module, the matching residual calculation module, the transformation module and the quantization module to generate a sample of a second reconstructed pixel by these inverse operation, outputs the second reconstructed pixel to a rate-distortion performance-based optimal prediction mode and matching mode selection module for rate-distortion cost calculation, and places the second reconstructed pixel corresponding to an optimal coding manner into the second reconstructed reference pixel sample temporary storage module after the rate-distortion performance-based optimal prediction mode and matching mode selection module determines the optimal coding manner (matching coding manner or predictive coding manner);

11) a de-blocking filtering and compensation module: the module performs de-blocking filtering and pixel compensation operation on the second reconstructed pixel corresponding to the optimal coding manner to generate a third reconstructed pixel and then places the third reconstructed pixel into the third reconstructed reference pixel sample temporary storage module for use as a reference pixel for subsequent predictive coding and fixed-width variable-length string matching coding;

12) the second reconstructed reference pixel sample temporary storage module: the module temporally stores the second reconstructed pixel and provides a second reference pixel sample required by the fixed-width variable-length string matching searching coding module;

13) the third reconstructed reference pixel sample temporary storage module: the module temporally stores the third reconstructed pixel and provides a third reference pixel for predictive coding and fixed-width variable-length string matching coding; and

14) the rate-distortion performance-based optimal prediction mode and matching mode selection module: the module selects the optimal coding manner (matching coding manner or predictive coding manner), an optimal matching mode and an optimal prediction mode according to rate-distortion performance and outputs a video compressed bitstream, wherein the compressed bitstream at least includes the representation parameters, such as the matching distance, the matching length and the optional unmatched sample (also called an unmatchable sample) or its variant, of a fixed-width variable-length string matching manner.

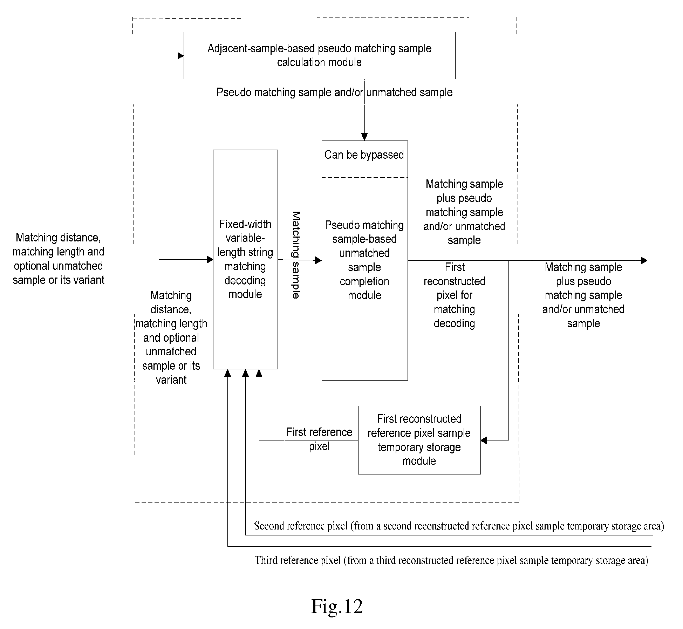

A diagram of the decoding device of the present invention is shown in Fig. 12.

The decoding device consists of all or part of the following modules:

1) a fixed-width variable-length string matching decoding module: the module has functions of executing decoding operation on a matching distance and matching length of a fixed-width variable-length matching string of input acquired from a compressed bitstream, namely copying the whole matching string (i.e. a matching reference string) of which a length is the matching length from a position specified by the matching distance in a first reconstructed reference pixel sample temporary storage module (temporally storing samples of a first reconstructed reference pixel sample set) or a second reconstructed reference pixel sample temporary storage module (temporally storing samples of a second reconstructed reference pixel sample set) or a third reconstructed reference pixel sample temporary storage module (temporally storing samples of a third reconstructed reference pixel sample set), of which position labels are not intersected, according to a known matching module and a fixed width and then moving and pasting the whole matching string to a position of a current matched string (i.e. matching current string) in a current decoded CU to reconstruct the whole matched string in the current decoded CU, wherein one matching reference string may cross two or three of the three temporary storage areas, i.e. the first, second and third reconstructed reference pixel sample temporary storage areas, and the set to which the matching reference string belongs is determined by a position of its starting pixel sample; the three reference pixel sample sets, i.e. the first, second and third reconstructed reference pixel sample sets, may also be subjected to different processing (such as colour quantization, numerical quantization, vector quantization, noise elimination, filtering and characteristic extraction) or transformation (such as colour format transformation, arrangement manner transformation, frequency domain transformation, spatial domain mapping, DPCM, first-order or high-order differentiation operation and indexation) or a combination of these processing or transformation, except differences in position and/or reconstruction stage; although the position labels of the three reconstructed reference pixel sample sets are not intersected, three areas, corresponding to them respectively, of a current image may still have an overlapped part; one or two of the three reconstructed reference pixel sample sets may be null, but they may not be all null; input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods;

2) an adjacent-sample-based pseudo matching sample calculation module: the module, if specific values of the matching distance and matching length of the input or an additional flag represents that there is no matching sample from the first reconstructed reference pixel sample temporary storage module or the second reconstructed reference pixel sample temporary storage module or the third reconstructed reference pixel sample temporary storage module at the position of the matched string (sample) in the current decoded CU, that is, the matching sample is absent at the current decoding position, calculates a pseudo matching sample from an adjacent sample which is partially decoded or completely decoded or a boundary default sample, may also optionally read an unmatched sample of the input or its variant, or optionally calculates the pseudo matching sample;

3) a pseudo matching sample-based unmatched sample completion module: the module completes the pixel sample at the current decoding position without any matching sample in the first, second or third reconstructed reference pixel sample temporary storage module optionally by the calculated pseudo matching sample, wherein the matching sample copied and pasted by module 1) and the pseudo matching sample calculated by module 2) and/or the unmatched sample obtained from the input by module 2) and/or the unmatched module calculated after being obtained from the input by module 2) are combined into a first reconstructed pixel sample, i.e. output of the module, of matching decoding; the module may be bypassed, and at this time, the matching sample copied and pasted by module 1) and the unmatched sample obtained from the input by module 2) are combined into the first reconstructed pixel sample of matching decoding; and

4) the first reconstructed reference pixel sample temporary storage module: the module is configured to temporally store the first reconstructed pixel sample for use as a first reference pixel sample for subsequent fixed-width variable-length string matching coding.

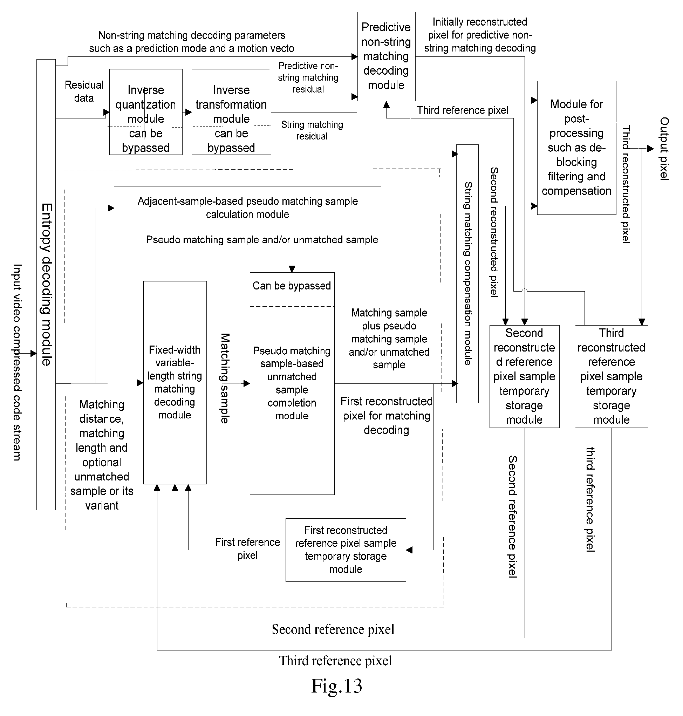

An embodiment integrating the abovementioned decoding device of the present invention is shown in Fig. 13. The embodiment consists of all or part of the following modules:

1) an entropy decoding module: the module executes entropy decoding on compressed bitstream data of input to obtain header information and data information of a current decoded sequence, a current decoded image and a current decoded CU, wherein entropy decoding may further include respectively optional one-dimensional or 2D adjacent sample-based first-order or high-order differential decoding, predictive decoding, matching decoding, mapping decoding, inverse transformation decoding, inverse quantization decoding, index decoding, run length decoding and binarization decoding executed on an entropy decoding object including each non-string matching decoding parameter such as a prediction mode and motion vector of a predictive fixed-width variable-length non-string matching (called predictive non-string matching for short) decoding manner, a matching mode of a fixed-width variable-length string matching (called string matching for short) decoding manner, a matching distance, a matching length, an additional flag, an unmatched sample or its variant, a predictive non-string matching residual and a string matching residual (which may have been subjected to transformation-quantization operation or quantization operation); entropy decoding further includes information indicating that it is parsed whether the predictive non-string matching decoding manner or the string matching decoding manner is adopted for the current decoded CU from the compressed bitstream data of the input, whether inverse transformation operation and inverse quantization operation are bypassed or not and the like; in the string matching decoding manner, the data information of the current decoded CU may include information of one or more matching strings;

2) an inverse quantization module: the module, if inverse quantization operation is not bypassed, executes inverse quantization operation and outputs a transformation coefficient, otherwise the module is bypassed, does not execute inverse quantization operation and directly outputs the predictive non-string matching residual or the string matching residual;

3) an inverse transformation module: the module, if inverse transformation operation is not bypassed, executes inverse transformation operation and outputs the predictive non-string matching residual or the string matching residual, otherwise the module is bypassed and does not execute inverse transformation operation, and at this time, the inverse quantization module must be bypassed and the module directly outputs the predictive non-string matching residual or the string matching residual;

4) a predictive non-string matching decoding module: the module executes intra predictive coding or inter predictive non-string matching decoding to obtain and output an initially reconstructed pixel of predictive non-string matching decoding;

5) a fixed-width variable-length string matching decoding module: the module has functions of executing decoding operation on the matching distance and matching length of a fixed-width variable-length matching string of the input acquired from a compressed bitstream, namely copying the whole matching string (i.e. a matching reference string) of which a length is the matching length from a position specified by the matching distance in a first reconstructed reference pixel sample temporary storage module (temporally storing samples of a first reconstructed reference pixel sample set) or a second reconstructed reference pixel sample temporary storage module (temporally storing samples of a second reconstructed reference pixel sample set) or a third reconstructed reference pixel sample temporary storage module (temporally storing samples of a third reconstructed reference pixel sample set), of which position labels are not intersected, according to a known matching module and a fixed width and then moving and pasting the whole matching string to a position of a current matched string (i.e. matching current string) in a current decoded CU to reconstruct the whole matched string in the current decoded CU, wherein one matching reference string may cross two or three of the three temporary storage areas, i.e. the first, second and third reconstructed reference pixel sample temporary storage areas, and the set to which the matching reference string belongs is determined by a position of its starting pixel sample; the three reference pixel sample sets, i.e. the first, second and third reconstructed reference pixel sample sets, may also be subjected to different processing (such as colour quantization, numerical quantization, vector quantization, noise elimination, filtering and characteristic extraction) or transformation (such as colour format transformation, arrangement manner transformation, frequency domain transformation, spatial domain mapping, DPCM, first-order or high-order differentiation operation and indexation) or a combination of these processing or transformation, except differences in position and/or reconstruction stage; although the position labels of the three reconstructed reference pixel sample sets are not intersected, three areas, corresponding to them respectively, of a current image may still have an overlapped part; one or two of the three reconstructed reference pixel sample sets may be null, but they may not be all null; input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction the like or samples subjected to transformation of colour format transformation, arrangement manner transformation, frequency domain transformation, spatial domain mapping, DPCM, first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods;

6) an adjacent-sample-based pseudo matching sample calculation module: the module, if specific values of the matching distance and matching length from the entropy decoding module or an additional flag represents that there is no matching sample from the first reconstructed reference pixel sample temporary storage module or the second reconstructed reference pixel sample temporary storage module or the third reconstructed reference pixel sample temporary storage module at the position of the matched string (sample) in the current decoded CU, that is, the matching sample is absent at a current decoding position, calculates a pseudo matching sample from an adjacent sample which is partially decoded or completely decoded or a boundary default sample, may also optionally read an unmatched sample of the input or its variant from the bitstream, or optionally calculates the pseudo matching sample;

7) a pseudo matching sample-based unmatched sample completion module: the module completes the pixel sample at the current decoding position without any matching sample in the first, second or third reconstructed reference pixel sample temporary storage module optionally by the calculated pseudo matching sample, wherein the matching sample copied and pasted by module 1) and the pseudo matching sample calculated by module 5) and the unmatched sample calculated by module 6) and/or the unmatched module obtained from the bitstream of the input by module 6) and/or the unmatched sample calculated after being obtained from the bitstream of the input by module 6) are combined into a first reconstructed pixel sample of matching decoding; the matching sample and the pseudo matching sample and/or the unmatched sample are also output of the module; the module may be bypassed, and at this time, the matching sample copied and pasted by module 5) and the unmatched sample obtained from the bitstream of the input by module 6) are combined into the first reconstructed pixel sample of matching decoding, and the matching sample and the unmatched sample are also output of the module;

8) the first reconstructed reference pixel sample temporary storage module: the module is configured to temporally store the first reconstructed pixel sample for use as a first reference pixel sample for subsequent fixed-width variable-length string matching decoding;

9) a string matching compensation module: the module adds the string matching residual output by module 3) and the first reconstructed pixel sample output by module 7) to generate a second reconstructed pixel sample of string matching decoding, i.e. output of the module;

10) a de-blocking filtering and compensation post-processing module: the module performs post-processing operation such as de-blocking filtering and pixel compensation operation on the initially reconstructed pixel output by module 4) or the second reconstructed pixel output by module 9) to generate a third reconstructed pixel and then places the third reconstructed pixel into the third reconstructed reference pixel sample temporary storage module for use as a reference pixel for subsequent fixed-width variable-length string matching decoding and predictive non-string matching decoding; the third reconstructed pixel is usually the final output pixel of the embodiment of the whole decoding device;

11) the second reconstructed reference pixel sample temporary storage module: the module temporally stores the second reconstructed pixel and provides a second reference pixel sample required by fixed-width variable-length string matching searching decoding; and

12) the third reconstructed reference pixel sample temporary storage module: the module temporally stores the third reconstructed pixel and provides a third reference pixel for subsequent predictive non-string matching decoding and fixed-width variable-length string matching decoding.

The drawings provided above only schematically describe the basic concept of the present invention, only components directly related to the present invention are displayed in the drawings, the drawings are not drawn according to the numbers, shapes and sizes of the components during practical implementation, the form, number and ratio of each component may be arbitrarily changed during practical implementation, and a component layout form may also be more complex.

More implementation details and variants of the present invention are described below.

Under the condition that no matches are found during fixed-width variable-length string matching coding and decoding, i.e. the condition that there is an unmatched pixel sample (unmatchable pixel sample), a matching length L=0 may be adopted for representation, and a matching distance D=0 (a current pixel sample is matched with itself) may also be adopted for representation.

String matching may be lossless and namely accurate, and may also be lossy and namely approximate. A candidate matching string of a pixel sample in first, second and third reconstructed reference pixel sample sets is set to be $x=(S_n, S_{n+1}, ......, S_{n+m-1})$, and when a matched string at a current position in a current coded CU is $y=(S_c, S_{c+1}, ......, S_{c+m-1})$, a matching length of the pair of pixel sample strings is m, and matching performance may be represented by a Length-Distortion Cost (LDcost) function $LD_{cost} = f(m,|S_c - S_n|,|S_{c+1} - S_{n+1}|,......,|S_{c+m-1} - S_{n+m-1}|)$. The simplest LDcost function is $LD_{cost} = (MaxStringLength - m) + \lambda|S_c - S_n|,+|S_{c+1} - S_n+1| + ......|S_{c+m-1}-S_{n+m-1}|)$, where MaxStringLength is a preset maximum matching length, such as 300, and $\lambda$ is a Lagrange multiplication factor, such as 0.25, and is configured to balance the matching length and a weight of matching distortion. In a more complex LDcost function, each pixel sample error term $|S_{c+q-1}- S_{n+q-1}|$ may have own multiplication factor, and the multiplication factor may also change along with the length m. The LDcost function may be configured to, when matching strings are searched, evaluate matching performance of the matching strings to select an optimal matching string as an evaluation criterion. If it is mandatorily provided that all pixel sample error terms $|S_{c+q-1}-S_{n+q-1}|=0$ when matching strings are searched, lossless and namely accurate matches are obtained, otherwise lossy or approximate matches are obtained.

Another evaluation criterion which may be adopted for fixed-width variable-length string matching coding searching is maximum m meeting $LD_{costc}=(|-S_c -S_n| \le E, |S_{c+1}-S_{n+1}| \le E, ......, |S_{c+m-1} -S_{n+m-1}| \le E)$, i.e. a matching string of which all samples are smaller than a certain matching error threshold E and which has a maximum matching length. If E=0, a lossless and namely accurate match is obtained. E may be a fixed number, and may also change along with the matching length.

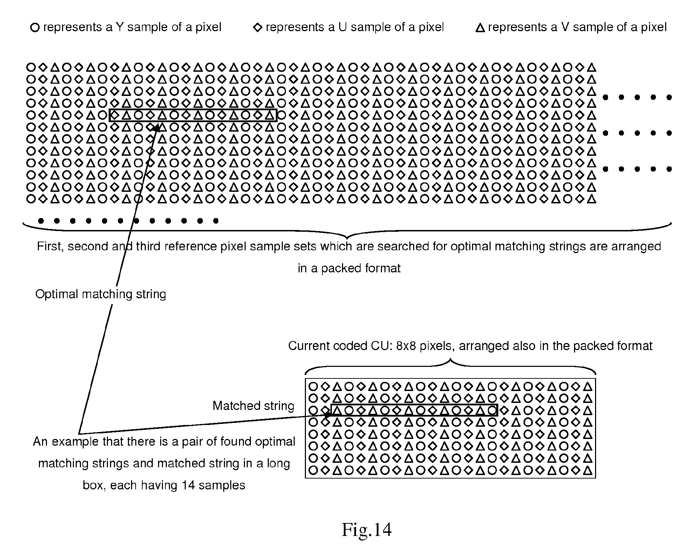

The present invention is applicable to coding and decoding of an image in a packed format. Pixels of a current coded CU and pixels of first, second and third reconstructed reference pixel sample sets are all arranged in the packed format. Matching strings and matched strings are all arranged in the packed format, that is, three-component sample individually intersected sample strings are formed by taking an individual pixel formed by individual intersection of three component samples as a unit, and the sample strings are searched for an optimal matching sample string. Fig. 14 is an embodiment of implementing fixed-width variable-length string matching, coding and decoding in a packed format according to the present invention. The current coded CU has 8x8 pixels with 24 columns and 8 rows of components, which are arranged in the packed format. Samples in the first, second and third reconstructed reference pixel sample sets are also arranged in the packed format. An optimal matched string is displayed in a long box in the current coded CU, and consists of 14 samples. A corresponding optimal matching string is displayed in a long box of the first, second and third reconstructed reference pixel sample sets, and also consists of 14 samples.

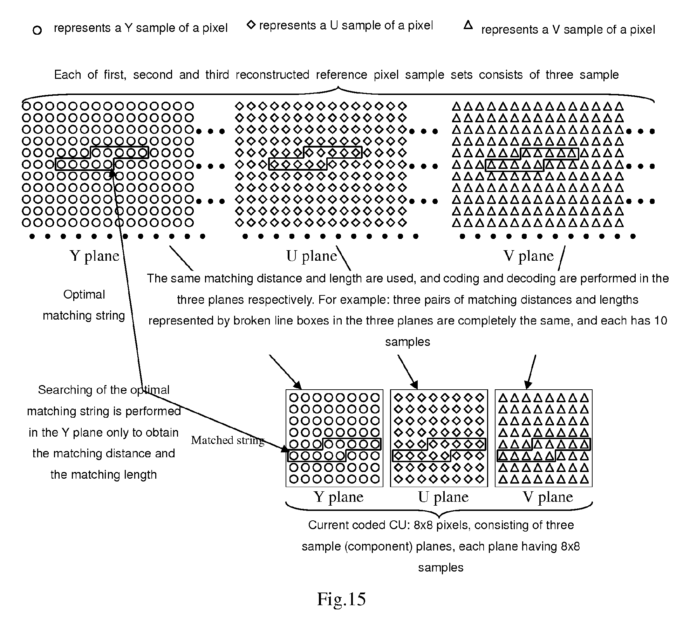

The present invention is also applicable to coding and decoding of an image in a component planar format. Pixels of a current coded CU and pixels of first, second and third reconstructed reference pixel sample sets are all divided into three component planes, and one kind of components of all the pixels form a plane. A pair of matching string and matched string both includes a sample of one component. String matching searching may be performed in the three planes respectively. However, in order to reduce searching time, searching is usually only performed in one plane (a Y plane or a G plane) due to great relevance of the three planes. A matching distance and matching length of an optimal matching string found in one plane are simultaneously adopted for string matching coding and decoding of the three planes. That is, the matching distance and matching length placed into a bitstream are shared by the three planes. Fig. 15 is an embodiment of implementing fixed-width variable-length string matching, coding and decoding in a three-plane format according to the present invention. When the current coded CU is divided into the three planes, i.e. the Y plane, a U plane and a V plane, each plane has 8x8 component samples. The first, second and third reconstructed reference pixel sample sets are also divided into the three planes. The optimal matching string is searched only in the Y plane to obtain the matching distance and matching length of the optimal matching string. An obtained optimal matched string is displayed in a broken line box in the Y plane of the current coded CU, and consists of 10 samples. A corresponding optimal matching string is displayed in broken line boxes in the Y planes of the first, second and third reconstructed reference pixel sample sets and also consists of 10 samples. In the U plane and the V plane, the same matching distance and matching length are adopted to perform string matching coding and decoding on the samples. Obviously, optimal matching string searching in the U plane and the V plane may be eliminated.

The present invention is also applicable to coding or decoding of a coding block or decoding block of indexed pixels.

If the fixed-width variable-length string matching coding and decoding of the image in the component planar format in the present invention is applied to the condition of down-sampling chroma components U and V in a YUV4:2:2 pixel colour format, a YUV4:2:0 pixel colour format and the like, when the matching distance and matching length of the Y plane are applied to the U plane and the V plane, the matching distance and the matching length are required to be correspondingly transformed and regulated according to a down-sampling ratio.

The pixels of the three reconstructed reference pixel sample sets, i.e. the first, second and third reconstructed reference pixel sample sets, may adopt different component arrangement formats, colour formats and pixel sample arrangement manners.

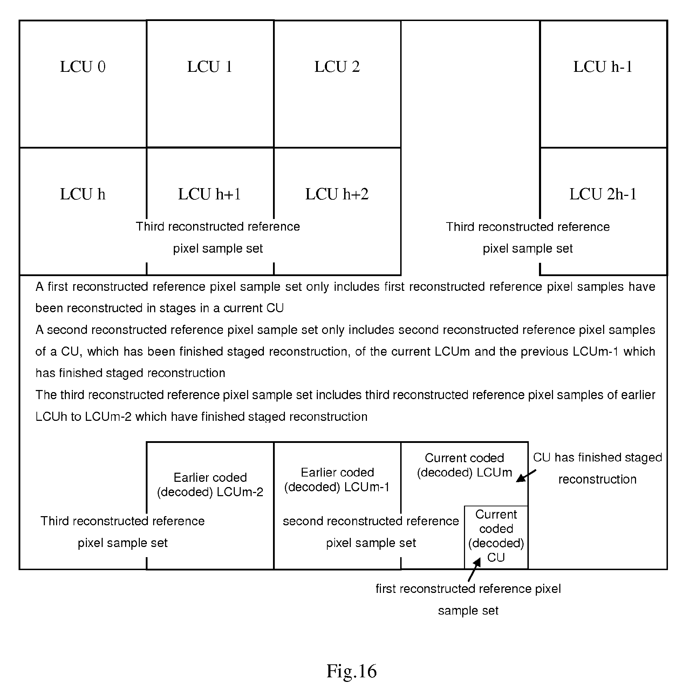

The first reconstructed reference pixel sample set usually includes first reconstructed reference pixel samples, which have been reconstructed in stages (in a peculiar reconstruction stage), at positions closest to a current coded or decoded sample. The second reconstructed reference pixel sample set usually includes second reconstructed reference pixel samples, which have been reconstructed in stages (in a peculiar reconstruction stage), at positions earlier than the samples of the first reconstructed reference pixel sample set. The third reconstructed reference pixel sample set usually includes third reconstructed reference pixel samples, which have finished •1, at positions earlier than the samples of the second reconstructed reference pixel sample set. Fig. 16 is an embodiment of first, second and third reconstructed reference pixel sample sets (temporary storage areas or temporary storage modules) of which position labels are not intersected. The first reconstructed reference pixel sample set includes first reconstructed reference pixel samples at positions, which have been reconstructed in stages (in a peculiar reconstruction stage), in a current coded or decoded CU. The second reconstructed reference pixel sample set includes second reconstructed reference pixel samples at positions in a CU (not including the current coded or decoded CU), which has finished staged reconstruction (in a peculiar reconstruction stage), in a current coded or decoded LCUm and second reconstructed reference pixel samples at positions of the previous LCUm-1 which has finished staged reconstruction (in a peculiar reconstruction stage). The third reconstructed reference pixel sample set includes third reconstructed reference pixel samples at positions of a plurality of LCUs of LCUm-1, LCUm-3, LCUm-4 and the like which have finished staged reconstruction earlier (in a peculiar reconstruction stage).

One or more of the first, second and third reconstructed reference pixel sample sets may be null, but the three may not be all null.

Embodiment and variant 1: a reconstructed reference pixel sample set includes reconstructed pixel samples which have higher matching probabilities due to higher appearance frequencies, and string matching is point matching.

A first reconstructed reference pixel sample set consists of part of reconstructed pixel samples which have higher matching probability due to higher appearance frequencies, and is only adopted to perform string matching with a matching length of 1 (such special string matching is also called point matching; each pixel sample in the first reconstructed reference pixel sample set has a unique address, and when matching lengths of point matching found in the first reconstructed reference pixel sample set for a current sample of a current CU are all 1, a matching distance is the address of the first sample (the unique sample) of a matching reference string; and the first reconstructed reference pixel sample set is also called a point matching reconstructed reference pixel sample set or a point matching reference set or palette, and the matching distance, i.e. the address, is also called an index.

Embodiment and variant 2: updating and sample number changing of the point matching reconstructed reference pixel sample set

When a current coding block or a current decoding block is coded or decoded, updating of the point matching reconstructed reference pixel sample set includes, but not limited to, one of the following conditions:

not updating,
or
updating part of contents;
or
updating all the contents;

when the current coding block or the current decoding block is coded or decoded, the contents (reference samples) in the point matching reconstructed reference pixel sample set are updated according to a predetermined strategy (for example, according to frequencies of the samples appearing a historical reconstructed image), and the number of the reference samples in the point matching reconstructed reference pixel sample set also changes according to a predetermined strategy; a compressed bitstream segment of a coding block or decoding block or Prediction Unit (PU) or CU or Coding Tree Unit (CTU) or LCU part of a compressed bitstream includes, but not limited to, all or part of syntactic elements into which the following parameters or their variants are loaded:

a flag indicating whether the point matching reference set is required to be updated or not: pt_matching_ref_set_update_flag,
the number of the samples of the point matching reference set to be updated: pt_matching_ref_set_update_num,
it is indicated that the point matching reference set is required to be updated when pt_matching_ref_set_update_flag is a value, and it is indicated that the point matching reference set is not required to be updated when pt_matching_ref_set_update_flag is another value; and when the point matching reference set is not required to be updated, pt_matching_ref_set_update_num does not exist in the bitstream segment, and when the point matching reference set is required to be updated, pt_matching_ref_set_update_num specifies the number of the samples of the point matching reference set to be updated.

Embodiment and variant 3: pseudo matching samples are replaced with extended samples of a matching string.
Another implementation form (variant) of the present invention is that: when there are P unmatched samples after an optimal matching string (with a matching distance=D and a matching length=L), the optimal matching string is extended into an extended matching string with a matching distance=D and a matching length=L+Q, wherein Q meets $0 < Q \leq P$. In such a manner, the number of the unmatched samples, i.e. pseudo matching samples, is reduced from P to P-Q. Q may be determined by calculating errors (called extension errors) between the extended samples and original matched samples and errors (called pseudo matching errors) between the pseudo matching samples and the original matched samples one by one and comparing magnitudes of the two errors. If the extended errors are not more than the pseudo matching errors (or multiplied with or added with a weight factor), the extended errors are increased by Q one by one. Q may also be simply set into P, so that the pseudo matching samples are completely replaced with the extended samples.
Embodiment and variant 4: a specific value of (D, L) represents absence of a matching sample.
In the decoding method and decoding device of the present invention, specific values of the matching distance D and the matching length L may be adopted to represent the condition that the pseudo matching sample is required to be calculated due to absence of the matching sample at a current decoding position. Decoding a complete CU requires one or more pairs of (matching distance, matching length) of input, which are arranged according to a decoding sequence as follows:

$$(D_1, L_1), (D_2, L_2), (D_3, L_3), \ldots\ldots, (D_{n-1}, L_{n-1}), (D_n, L_n).$$

Embodiment and variant 5: a flag is adopted to represent absence of the matching sample.
In the decoding method and decoding device of the present invention, an additional input flag may also be adopted to represent the condition that the pseudo matching sample is required to be calculated due to absence of the matching sample at the current decoding position. Decoding a complete CU requires one or more input flags (marked as F for short) and one or more pairs of (matching distance, matching length) of the input, which are arranged according to the decoding sequence as follows:

$$F_1, (D_1, L_1) \text{ or blank}, F_2, (D_2, L_2) \text{ or blank}, \ldots\ldots, F_n, (D_n, L_n) \text{ or blank}.$$

Wherein it is indicated that a matching distance $D_i$ and matching length $L_i$ of a matching string follow $F_i$ when $F_i$ is a value, and it is indicated that a position after $F_i$ is blank because of absence of the matching sample at the current

decoding position when $F_i$ is another value.

Embodiment and variant 6: the absent matching sample is replaced with an additional pixel sample.

In the decoding method and decoding device of the present invention, when the value of $F_i$ represents that the matching sample is absent at the current decoding position, an additional input pixel sample, i.e. an unmatched pixel sample (which may be an original pixel or a pixel subjected to pre-processing of colour quantization, numerical quantization, vector quantization, noise elimination, filtering, characteristic extraction and the like or a pixel subjected to transformation of colour format transformation, arrangement manner transformation, frequency domain transformation, spatial domain mapping, DPCM, first-order or high-order differentiation operation, indexation and the like or a pixel variant subjected to multiple processing and transformation) $P_i$ may also be adopted to replace the absent matching sample; and decoding a complete CU requires one or more input flags (marked as F for short) and one or more pairs of (matching distance, matching length) of the input or input pixel samples, which are arranged according to the decoding sequence as follows:

$$F_1, (D_1, L_1) \text{ or } P_1, F_2, (D_2, L_2) \text{ or } P_2, \ldots\ldots, F_n, (D_n, L_n) \text{ or } P_n,$$

wherein it is indicated that a matching distance $D_i$ and matching length $L_i$ of a matching string follow $F_i$ when $F_i$ is a value, and it is indicated that an input pixel sample or its variant $P_i$ follows $F_i$ because of absence of the matching sample at the current decoding position when $F_i$ is another value.

Embodiment and variant 7: combination of embodiment and variant 5 and embodiment and variant 6

In the decoding method and decoding device of the present invention, when the value of $F_i$ represents that the matching sample is absent at the current decoding position, one of multiple combinations and one operation result $P_i$ of a pseudo matching sample and an additional input pixel sample, i.e. an unmatched pixel sample (which may be an original pixel or a pixel subjected to pre-processing of colour quantization, numerical quantization, vector quantization, noise elimination, filtering, characteristic extraction and the like or a pixel subjected to transformation of colour format transformation, arrangement manner transformation, frequency domain transformation, spatial domain mapping, DPCM, first-order or high-order differentiation operation, indexation and the like or a pixel variant subjected to multiple processing and transformation) (or blank) may also be adopted to replace the absent matching sample; and decoding a complete CU requires one or more input flags (marked as F for short) and one or more pairs of (matching distance, matching length) of the input or input pixel samples, which are arranged according to the decoding sequence as follows:

$$F_1, (D_1, L_1) \text{ or blank or } P_1, F_2, (D_2, L_2) \text{ or blank or } P_2, \ldots\ldots, F_n, (D_n, L_n) \text{ or blank or } P_n,$$

wherein it is indicated that a matching distance $D_i$ and matching length $L_i$ of a matching string follow $F_i$ when $F_i$ is a first value, and it is indicated that the position after $F_i$ is blank because the matching sample is absent at the current decoding position and is completed by the pseudo matching sample when $F_i$ is a second value; it is indicated that the matching sample is absent at the current decoding position but the position after Fi is followed by the mth combination and the mth operation result $P_i$ in M combinations and operation of the pseudo matching samples and the input pixel samples or their variants rather than being blank when Fi is a (2+m)th ($1 \leq m \leq M$) value; and M is usually smaller than 10.

In the decoding method and decoding device of the present invention, description and expression forms of different types of decoding input parameters such as the input flag $F_i$, the input matching distance $D_i$, the input matching length $L_i$ and the input pixel sample or its variant $P_i$ may be syntactic elements obtained by entropy coding, first-order or high-order differential coding, predictive coding, matching coding, mapping coding, transformation coding, quantization coding, index coding, run length coding and binarization coding of these parameters in a bit steam (or called a bitstream, i.e. bitstream). A placement sequence of these different types of syntactic elements in the bit stream may be intersected placement of individual numerical values of different types, for example:

$$F_1, (D_1, L_1) \text{ or } P_1, F_2, (D_2, L_2) \text{ or } P_2, \ldots\ldots, F_n, (D_n, L_n) \text{ or } P_n.$$

The placement sequence may also be centralized placement of all the numerical values of the same types, for example:

$F_1, \ldots, F_n, D_1$ or blank, $\ldots, D_n$ or blank, $L_1$ or blank, $\ldots, L_n$ or blank, $P_1$ or blank, $\ldots, P_n$ or blank.

The placement sequence may also be a combination of the abovementioned placement sequences, for example:

$F_1, \ldots, F_n, (D_1, L_1)$ or blank, $\ldots, (D_n, L_n)$ or blank, $P_1$ or blank, $\ldots, P_n$ or blank.

Embodiment and variant 8: a matching parameter is a single-component parameter or a dual-component parameter or a three-component parameter.

The matching distance Di or its variant is a single-component parameter or a dual-component parameter or a three-component parameter; and a syntactic element corresponding to the matching distance Di or its variant in a compressed bitstream is in, but not limited to, one of the following forms:

a syntactic element corresponding to a matching distance Di or its variant of a matching string: d (one component, such as a position linear address or index)

or

a syntactic element corresponding to a matching distance Di or its variant of a matching string: d[0], d[1] (two components, such as a horizontal position component and a vertical position component or a sample set number and a position linear address)

or

a syntactic element corresponding to a matching distance Di or its variant of a matching string: d[0], d[1], d[2] (three components, such as a sample set number, a horizontal position component and a vertical position component).

The matching length Li or its variant is a single-component parameter or a dual-component parameter or a three-component parameter; and a syntactic element corresponding to the matching length Li or its variant in a compressed bitstream is in, but not limited to, one of the following forms:

a syntactic element corresponding to a matching length Li or its variant of a matching string: r (one component),

or

a syntactic element corresponding to a matching length Li or its variant of a matching string: r[0], r[1] (two components),

or

a syntactic element corresponding to a matching length Li or its variant of a matching string: r[0], r[1], r[2] (three components).

The unmatched sample $P_i$ or its variant is a single-component parameter or a dual-component parameter or a three-component parameter; and a syntactic element corresponding to the unmatched sample $P_i$ or its variant in a compressed bitstream is in, but not limited to, one of the following forms:

a syntactic element corresponding to an unmatched sample $P_i$ or its variant: p (one component),

or

a syntactic element corresponding to an unmatched sample $P_i$ or its variant: p[0], p[1] (two components),

or

a syntactic element corresponding to an unmatched sample $P_i$ or its variant: p[0], p[1], p[2] (three components).

Embodiment and variant 9: syntactic elements in a compressed bitstream

A compressed bitstream segment in a coding block or decoding block or PU or CU or CTU or LCU part of the compressed bitstream includes, but not limited to, all or parts of syntactic elements into which the following parameters or their variants are loaded:

a first-type mode (such as a coding and decoding mode),
a second-type mode (such as a string matching mode),
a third-type mode (such as a pixel sample arrangement manner),

a fourth-type mode (such as a parameter coding mode),

matching flag 1, sample set number 1 or blank, (matching distance 1, length 1) or unmatched sample 1 or blank,

matching flag 2, sample set number 2 or blank, (matching distance 2, length 2) or unmatched sample 2 or blank,

............

more matching flag, sample set number or blank, (matching distance, length) or unmatched sample or blank,

............

matching flag N, sample set number N or blank, (matching distance N, length N) or unmatched sample N or blank,

matching residual or blank;

a placement sequence of all the syntactic elements in the bitstream is not unique, and any one predetermined reasonable sequence may be adopted; any syntactic element may also be split into multiple parts, and the multiple parts may be placed at the same position in the bitstream in a centralized manner, and may also be placed at different positions in the bitstream respectively; any plurality of syntactic elements may also be combined into a syntactic element; any syntactic element may also not exist in the compressed bitstream segment of a certain coding block or decoding block or PU or CU or CTU or LCU;

the parameters such as the matching distance, the matching length and the unmatched pixel sample in the compressed bitstream segment may be the parameters, and may also be variants obtained by coding these parameters by various common technologies such as predictive coding, matching coding, transformation coding, quantization coding, DPCM, first-order and high-order differential coding, mapping coding, run length coding and index coding; each of the matching distance, the matching length and the unmatched pixel sample may have one parameter component, and may also have two parameter components, or is further divided into three parameter components and even more parameter components; and

the sample set number may be a part of the matching distance, or when there is only one sample set, the sample set number is null.

Embodiment and variant 10: component arrangement formats, colour formats and pixel sample arrangement manners of three reconstructed reference pixel sample sets

Any reconstructed reference pixel sample set has an independent (uncertainly but probably consistent with any other reconstructed reference pixel sample set) component arrangement format, colour format and pixel sample arrangement manner as follows:

packed format, YUV colour format, intra-LCU or CU vertical scanning one-dimensional serial arrangement manner; or

packed format, YUV colour format, intra-LCU or CU horizontal scanning one-dimensional serial arrangement manner; or

packed format, YUV colour format, inherent 2D arrangement manner of an image; or

packed format, GBR colour format, intra-LCU or CU vertical scanning one-dimensional serial arrangement manner; or

packed format, GBR colour format, intra-LCU or CU horizontal scanning one-dimensional serial arrangement manner; or

packed format, GBR colour format, inherent 2D arrangement manner of an image; or

planar format, YUV colour format, intra-LCU or CU vertical scanning one-dimensional serial arrangement manner; or

planar format, YUV colour format, intra-LCU or CU horizontal scanning one-dimensional serial arrangement manner; or

planar format, YUV colour format, inherent 2D arrangement manner of an image; or

planar format, GBR colour format, intra-LCU or CU vertical scanning one-dimensional serial arrangement manner; or

planar format, GBR colour format, intra-LCU or CU horizontal scanning one-dimensional serial arrangement manner; or

planar format, GBR colour format, inherent 2D arrangement manner of an image; or

blank set.

Embodiment and variant 11: pixel representation formats of three reconstructed reference pixel sample sets

The first reconstructed reference pixel sample set adopts an index representation format, the second reconstructed reference pixel sample set adopts a three-component representation format, and the third reconstructed reference pixel sample set adopts the three-component representation format;

or

the first reconstructed reference pixel sample set adopts the index representation format, the second reconstructed reference pixel sample set adopts the three-component representation format, and the third reconstructed reference pixel sample set adopts the index representation format;

or

the first reconstructed reference pixel sample set adopts the index representation format, the second reconstructed reference pixel sample set adopts the three-component representation format, and the third reconstructed reference pixel sample set is null;

or

the first reconstructed reference pixel sample set adopts the index representation format, the second reconstructed reference pixel sample set adopts the index representation format, and the third reconstructed reference pixel sample set adopts the three-component representation format;

or

the first reconstructed reference pixel sample set adopts the index representation format, the second reconstructed reference pixel sample set adopts the index representation format, and the third reconstructed reference pixel sample set adopts the index representation format;

or

the first reconstructed reference pixel sample set adopts the index representation format, the second reconstructed reference pixel sample set adopts the index representation format, and the third reconstructed reference pixel sample set is null;

or

the first reconstructed reference pixel sample set adopts the index representation format, the second reconstructed reference pixel sample set is null, and the third reconstructed reference pixel sample set is null;

or

the first reconstructed reference pixel sample set adopts the three-component representation format, the second reconstructed reference pixel sample set adopts the three-component representation format, and the third reconstructed reference pixel sample set adopts the three-component representation format;

or

the first reconstructed reference pixel sample set adopts the three-component representation format, the second reconstructed reference pixel sample set adopts the three-component representation format, and the third reconstructed reference pixel sample set adopts the index representation format;

or

the first reconstructed reference pixel sample set adopts the three-component representation format, the second reconstructed reference pixel sample set adopts the three-component representation format, and the third reconstructed reference pixel sample set is null;

or

the first reconstructed reference pixel sample set adopts the three-component representation format, the second reconstructed reference pixel sample set adopts the index representation format, and the third reconstructed reference pixel sample set adopts the three-component representation format;

or

the first reconstructed reference pixel sample set adopts the three-component representation format, the second reconstructed reference pixel sample set adopts the index representation format, and the third reconstructed reference pixel sample set adopts the index representation format;

or

the first reconstructed reference pixel sample set adopts the three-component representation format, the second reconstructed reference pixel sample set adopts the index representation format, and the third reconstructed reference pixel sample set is null;

or

the first reconstructed reference pixel sample set adopts the three-component representation format, the second reconstructed reference pixel sample set is null, and the third reconstructed reference pixel sample set is null.

Embodiment and variant 12: a value of a fixed width W

The fixed width for fixed-width variable-length string matching is a constant W in a CU or a plurality of CU or an image or a sequence;

or

the fixed width W for fixed-width variable-length string matching may adopt one of the following fixed values of which the former and latter ones are in a double relationship in a CU of which the total sample number in a horizontal (or vertical) direction is X: 1, 2, 4, ......, X; when a matching current string is coded or decoded, the fixed value to be adopted is determined by another coding or decoding variable parameter, so that different matching current strings may adopt the same fixed value, and may also adopt different fixed values;

or

the fixed width W for fixed-width variable-length string matching may adopt one of the following K fixed values in a CU of which the total sample number in a horizontal (or vertical) direction is X: 1, 2, ......, k, ......, K-1, K; and when a nominal length L of a matching string in coding or decoding meets $(k-1)X+1 \leq L \leq kX$, W is k, so that different matching current strings may adopt the same fixed value, and may also adopt different fixed values.

Embodiment and variant 13: an example of a matching string and its matching distance and matching length (copying the left and copying the upper part)

A matching reference string and a matching current string may have overlapped sample positions, that is, a matching distance D and matching length L of a matching string meet the following relationship: D<L; at this time, L samples of the matching current string are repetitions of D samples between the first sample of the matching reference string and the first sample of the matching current string (i.e. D samples before the first sample of the matching current string), that is:

when D=1 <L, the matching current string is formed by repeating sample P before the first sample (i.e. a current sample) of the matching current string for L times: PPP......PP, i.e. the L samples of the matching current string are all P;

when D=2<L and L is an even number, the matching current string is formed by repeating two sample $P_1P_2$ before the current sample for L/2 times: $P_1P_2$ $P_1P_2$......$P_1P_2$, i.e. the L samples of the matching current string are all repetitions of $P_1P_2$;

when D=2<L and L is an odd number, the matching current string is formed by adding $P_1$ after the two sample $P_1P_2$ before the current sample are repeated for (L-1)/2 times: $P_1P_2$ $P_1P_2$......$P_1P_2$ $P_1$, i.e. the L samples of the matching current string are all repetitions of $P_1P_2$ plus $P_1$ at the end;

when D=3<L, the matching current string is formed by repeating three samples $P_1P_2P_3$ before the current sample until the matching length reaches L;

when D=4<L, the matching current string is formed by repeating three samples $P_1P_2P_3P_4$ before the current sample until the matching length reaches L;

when D<L, the matching current string is formed by repeating D samples $P_1P_2$...... $P_{D-1}P_D$ before the current sample until the matching length reaches L;

or

in a CU of which the total sample number in a horizontal (vertical) direction is X, the matching reference string is adjacent to and over (or right on left of) the matching current string, that is, the matching distance D and matching length of the matching string meet the following relationship: D=X, $L \leq X$; when such a condition occurs at a high frequency, D=X is placed into the bitstream with a special short code;

or

in a CU of which the total sample number in a horizontal (vertical) direction is X, the matching reference string is over (or right on left of) the matching current string but is uncertainly adjacent, that is, the matching distance D of the matching string meets the following relationship: D=nX; and when such a condition occurs at a high frequency, n is represented and D=nX is placed into the bitstream with a plurality of special short codes.

Embodiment and variant 14: an example that a reference pixel sample is a variant of a reconstructed pixel sample the reference pixel sample is a sample obtained by performing numerical quantization and inverse quantization operation on the reconstructed pixel sample;

or

the reference pixel sample is the sample obtained by performing numerical quantization and inverse quantization operation on the reconstructed pixel sample, and will not change after being calculated;

or

the reference pixel sample is the sample obtained by performing numerical quantization and inverse quantization operation on the reconstructed pixel sample, and a coding or decoding quantization parameter is adopted for calculation in numerical quantization and inverse quantization operation;

or

the reference pixel sample is the sample obtained by performing numerical quantization and inverse quantization operation on the reconstructed pixel sample, and a coding or decoding quantization parameter of a CU where the reference pixel sample is located is adopted for calculation in numerical quantization and inverse quantization operation;

or

the reference pixel sample is the sample obtained by performing numerical quantization and inverse quantization operation on the reconstructed pixel sample, the coding or decoding quantization parameter of the CU where the reference pixel sample is located is adopted for calculation in numerical quantization and inverse quantization operation, and the sample will not change after being calculated;

or

the reference pixel sample is the sample obtained by performing numerical quantization and inverse quantization operation on the reconstructed pixel sample, and a coding or decoding quantization parameter of a current CU is adopted for calculation in numerical quantization and inverse quantization operation;

or

the reference pixel sample is the sample obtained by performing numerical quantization and inverse quantization operation on the reconstructed pixel sample, the coding or decoding quantization parameter of the current CU is adopted for calculation in numerical quantization and inverse quantization operation, and every time when a CU is coded or decoded, the sample is required to be recalculated;

or the reference pixel sample is a sample obtained by performing colour quantization on the reconstructed pixel sample;

or

the reference pixel sample is the sample obtained by performing colour quantization on the reconstructed pixel sample, and a palette obtained by colour-based pixel clustering is adopted for calculation in colour quantization;

or

the reference pixel sample is the sample obtained by performing colour quantization on the reconstructed pixel sample, and a palette obtained by colour-based pixel clustering associated with a coding block or decoding block or PU or CU or CTU or LCU where the reference pixel sample is located is adopted for calculation in colour quantization;

or

the reference pixel sample is the sample obtained by performing colour quantization on the reconstructed pixel sample, the palette obtained by colour-based pixel clustering associated with the coding block or decoding block or PU or CU or CTU or LCU where the reference pixel sample is located is adopted for calculation in colour quantization, and the sample will not change after being calculated;

or

the reference pixel sample is the sample obtained by performing colour quantization on the reconstructed pixel sample, a palette, obtained by colour-based pixel clustering associated with the coding block or decoding block or PU or CU or CTU or LCU where the reference pixel sample is located, of a content of a dynamically updated part is adopted for calculation in colour quantization, and the sample will not change after being calculated;

or

the reference pixel sample is the sample obtained by performing colour quantization on the reconstructed pixel sample, and a palette obtained by colour-based pixel clustering associated with a current coding block or decoding block or PU or CU or CTU or LCU is adopted for calculation in colour quantization;

or

the reference pixel sample is the sample obtained by performing colour quantization on the reconstructed pixel sample, the palette obtained by colour-based pixel clustering associated with the current coding block or decoding block or PU or CU or CTU or LCU is adopted for calculation in colour quantization, and every time when a coding block or a decoding block or a PU or a CU or a CTU or an LCU is coded or decoded, the sample is require to be recalculated;

or

the reference pixel sample is the sample obtained by performing colour quantization on the reconstructed pixel sample, and a global palette obtained by colour-based pixel clustering is adopted for calculation in colour quantization.

Embodiment and variant 15: a variant (differentiation and the like) and format (one-dimensional or 2D or the like) of the matching distance

The samples of the first, second and third reconstructed reference pixel sample sets which are not null and the samples of the current CU are arranged into a one-dimensional array according to a predetermined manner, each sample in the array has a linear address, and the matching distance of the matching current string is obtained by subtracting the linear address of the first sample of the matching current string from the linear address of the first sample of the corresponding matching reference string; a corresponding syntactic element of the matching distance in the compressed data bit stream is a syntactic element obtained by performing entropy decoding on the matching distance; the matching distance is usually a single-variable parameter, namely has only one component;

or

the samples of the first, second and third reconstructed reference pixel sample sets which are not null and the samples of the current CU are arranged into a one-dimensional array according to the predetermined manner, each sample in the array has a linear address, and the matching distance of the matching current string is obtained by subtracting the linear address of the first sample of the matching current string from the linear address of the first sample of the corresponding matching reference string; the corresponding syntactic element of the matching distance in the compressed data bit stream is a syntactic element obtained by performing arrangement manner transformation and/or mapping operation and/or string matching coding and/or first-order or high-order prediction, differentiation operation and entropy coding on the matching distance and another matching distance; the matching distance is usually a single-variable parameter, namely has only one component;

or

the samples of the first, second and third reconstructed reference pixel sample sets which are not null and the samples of the current CU are arranged into a 2D array according to a predetermined manner, each sample in the array has a plane coordinate, and the matching distance of the matching current string is obtained by subtracting the plane coordinate of the first sample of the matching current string from the plane coordinate of the first sample of the corresponding matching reference string; the corresponding syntactic element of the matching distance in the compressed data bit stream is the syntactic element obtained by performing entropy decoding on the matching distance; the matching distance is usually a dual-variable parameter, namely has two components;

or

the samples of the first, second and third reconstructed reference pixel sample sets which are not null and the samples of the current CU are arranged into the 2D array according to the predetermined manner, each sample in the array has a plane coordinate, and the matching distance of the matching current string is obtained by subtracting the plane coordinate of the first sample of the matching current string from the plane coordinate of the first sample of the corresponding matching reference string; the corresponding syntactic element of the matching distance in the compressed data bit stream is a syntactic element obtained by performing arrangement manner transformation and/or mapping operation and/or string matching coding and/or first-order or high-order prediction, differentiation operation and entropy coding on the matching distance and another matching distance; the matching distance is usually a dual-variable parameter, namely has two components;

or

the samples of the first, second and third reconstructed reference pixel sample sets which are not null and the samples of the current CU are divided into a plurality of areas according to a predetermined manner at first, then the samples in each area are arranged into a 2D array, each sample in the areas and the array has an area number and a plane coordinate, and the matching distance of the matching current string is obtained by subtracting the area number and plane coordinate of the first sample of the matching current string from the area number and plane coordinate of the first sample of the corresponding matching reference string; the corresponding syntactic element of the matching distance in the compressed data bit stream is the syntactic element obtained by performing entropy decoding on the matching distance; the matching distance is usually a three-variable parameter, namely has three components;

or

the samples of the first, second and third reconstructed reference pixel sample sets which are not null and the samples of the current CU are divided into a plurality of areas according to the predetermined manner at first, then the samples in each area are arranged into a 2D array, each sample in the areas and the array has an area number and a plane coordinate, and the matching distance of the matching current string is obtained by subtracting the area number and plane coordinate of the first sample of the matching current string from the area number and plane coordinate of the first sample of the corresponding matching reference string; the corresponding syntactic element of the matching distance in the compressed data bit stream is a syntactic element obtained by performing arrangement manner transformation and/or mapping operation and/or string matching coding and/or first-order or high-order prediction, differentiation operation and entropy coding on the matching distance and another matching distance; the matching distance is usually a three-variable parameter, namely has three components;

or

the samples of the first, second and third reconstructed reference pixel sample sets which are not null and the samples of the current CU are divided into a plurality of areas according to a predetermined manner at first, then the samples in each area are arranged into a one-dimensional array, each sample in the areas and the array has an area number and a linear address, and the matching distance of the matching current string is obtained by subtracting the area number and linear address of the first sample of the matching current string from the area number and linear address of the first sample of the corresponding matching reference string; the corresponding syntactic element of the matching distance in the compressed data bit stream is the syntactic element obtained by performing entropy decoding on the matching distance; the matching distance is usually a dual-variable parameter, namely has two components;

or

the samples of the first, second and third reconstructed reference pixel sample sets which are not null and the samples of the current CU are divided into a plurality of areas according to the predetermined manner at first, then the samples in each area are arranged into a one-dimensional array, each sample in the areas and the array has an area number and a linear address, and the matching distance of the matching current string is obtained by subtracting the area number and linear address of the first sample of the matching current string from the area number and linear address of the first sample of the corresponding matching reference string; the corresponding syntactic element of the matching distance in the compressed data bit stream is a syntactic element obtained by performing arrangement manner transformation and/or mapping operation and/or string matching coding and/or first-order or high-order prediction, differentiation operation and entropy coding on the matching distance and another matching distance; the matching distance is usually a dual-variable parameter, namely has two components.

Embodiment and variant 16: a variant (differentiation and the like) and format (single-variable or dual-variable or the like) of the matching length

The matching length L of the matching current string is a single-variable parameter; a corresponding syntactic element of the matching length in the compressed code data bit stream is a syntactic element obtained by performing entropy coding on the single-variable parameter of the matching length;

or

the matching length L of the matching current string is a single-variable parameter; the corresponding syntactic element of the matching length in the compressed code data bit stream is a syntactic element obtained by arrangement manner transformation and/or mapping operation and/or string matching coding and/or first-order or high-order prediction, differentiation operation and entropy coding on the single-variable parameter of the matching length and a single-variable parameter of another matching length;

or in a CU of which the total sample number in the horizontal (vertical) direction is X, the matching length L of the matching current string is divided into a dual-variable parameter (k, LL), wherein k is a positive integer meeting (k-1)X+1≤L≤kX, and LL=L-(k-1)X; the corresponding syntactic element of the matching length in the compressed data bit stream is a syntactic element obtained by performing entropy coding on the dual-variable parameter of the matching length;

or in a CU of which the total sample number in the horizontal (vertical) direction is X, the matching length L of the matching current string is divided into a dual-variable parameter (k, LL), wherein k is a positive integer meeting (k-1)X+1≤L≤kX, and LL=L-(k-1)X; the corresponding syntactic element of the matching length in the compressed data bit stream is a syntactic element obtained by performing arrangement manner transformation and/or mapping operation and/or string matching coding and/or first-order or high-order prediction, differentiation operation and entropy coding on the dual-variable parameter of the matching length and a dual-variable parameter of another matching length;

or a matching length L of a matching current string of which a first pixel sample is at a horizontal (or vertical) distance of X away from the right boundary (or lower boundary) of the current CU is divided into a dual-variable parameter (k, LL), wherein k is a positive integer meeting (k-1)X+1≤L≤kX, and LL=L-(k-1)X; the corresponding syntactic element of the matching length in the compressed data bit stream is a syntactic element obtained by performing entropy coding on the dual-variable parameter of the matching length;

or

the matching length L of the matching current string of which the first pixel sample is at the horizontal (or vertical) distance of X away from the right boundary (or lower boundary) of the current CU is divided into a dual-variable parameter (k, LL), wherein k is a positive integer meeting (k-1)X+1≤L≤kX, and LL=L-(k-1)X; the corresponding syntactic element of the matching length in the compressed data bit stream is a syntactic element obtained by performing arrangement manner transformation and/or mapping operation and/or string matching coding and/or first-order or high-order prediction, differentiation operation and entropy coding on the dual-variable parameter of the matching length and a dual-variable parameter of another matching length.

Embodiment and variant 17: a variant (differentiation and the like) of an unmatched sample

A corresponding syntactic element of the unmatched sample in the compressed data bit stream is a syntactic element obtained by performing entropy coding on the unmatched sample;

or

the corresponding syntactic element of the unmatched sample in the compressed data bit stream is a syntactic element obtained by performing arrangement manner transformation and/or mapping operation and/or string matching coding and/or first-order or high-order prediction, differentiation operation and entropy coding on the unmatched sample and another unmatched sample;

or

the corresponding syntactic element of the unmatched sample in the compressed data bit stream is a syntactic element obtained by performing quantization operation and entropy coding on the unmatched sample;

or

the corresponding syntactic element of the unmatched sample in the compressed data bit stream is a syntactic element obtained by performing arrangement manner transformation and/or mapping operation and/or string matching coding and/or first-order or high-order prediction, differentiation operation, quantization operation and entropy coding on the unmatched sample and another unmatched sample.

Embodiment and variant 18: an example that two or three areas, corresponding to two or three reference pixel sample sets respectively, of a current image have an overlapped part

The three areas, i.e. the area, corresponding to the first reconstructed reference pixel sample set, of the current image, the area, corresponding to the second reconstructed reference pixel sample set, of the current image and the area, corresponding to the third reconstructed reference pixel sample set, of the current image, are completely overlapped, a position label of the first reconstructed reference pixel sample set is smaller than a position label of the second reconstructed reference pixel sample set, and the position label of the second reconstructed reference pixel sample set is smaller than a position label of the third reconstructed reference pixel sample set;

or

the first, second and third reconstructed reference pixel sample sets correspond to the same area of the current image, i.e. the current CU and N (N is smaller than a few hundreds) CUs, which have been reconstructed in stages (in each reconstruction stage), before the current CU, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;

or

the first, second and third reconstructed reference pixel sample sets correspond to the same area of the current image, i.e. the current LCU and N (N is smaller than a few hundreds) LCUs, which have been reconstructed in stages (in each reconstruction stage), before the current LCU, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;

or

the first, second and third reconstructed reference pixel sample sets correspond to the same area of the current image, i.e. N (N is between a few thousands and a few millions) samples, which have been reconstructed in stages (in each reconstruction stage), before a current coded or decoded sample, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;

or

the area, corresponding to the first reconstructed reference pixel sample set, of the current image is partially overlapped with the area, corresponding to the second reconstructed reference pixel sample set, of the current image, the area, corresponding to the second reconstructed reference pixel sample set, of the current image is partially overlapped with the area, corresponding to the third reconstructed reference pixel sample set, of the current image, but the area, corresponding to the first reconstructed reference pixel sample set, of the current image is not overlapped with the area, corresponding to the third reconstructed reference pixel sample set, of the current image, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;

or

the area, corresponding to the first reconstructed reference pixel sample set, of the current image is partially overlapped with the area, corresponding to the second reconstructed reference pixel sample set, of the current image, the area, corresponding to the second reconstructed reference pixel sample set, of the current image is partially overlapped with the area, corresponding to the third reconstructed reference pixel sample set, of the current image, the area, corresponding to the first reconstructed reference pixel sample set, of the current image is partially overlapped with the area, corresponding to the third reconstructed reference pixel sample set, of the current image, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;

or

the area, corresponding to the first reconstructed reference pixel sample set, of the current image is part of the area, corresponding to the second reconstructed reference pixel sample set, of the current image, the area, corresponding to the second reconstructed reference pixel sample set, of the current image is part of the area, corresponding to the third reconstructed reference pixel sample set, of the current image, the position label of the first reconstructed reference pixel sample set is smaller than the position label of the second reconstructed reference pixel sample set, and the position label of the second reconstructed reference pixel sample set is smaller than the position label of the third reconstructed reference pixel sample set.

Embodiment and variant 19: the reference pixel sample sets are extended into more than three

The three reference pixel sample sets are extended into four reference pixel sample sets, that is, besides the first, second and third reconstructed reference pixel sample sets, there is a fourth reconstructed reference pixel sample set, and the matching reference string is from one of the four reference pixel sample sets;

or

the three reference pixel sample sets are extended into five reference pixel sample sets, that is, besides the first, second and third reconstructed reference pixel sample sets, there are fourth and fifth reconstructed reference pixel sample sets, and the matching reference string is from one of the five reference pixel sample sets;

or

three reference pixel sample sets are extended into six reference pixel sample sets, that is, besides the first, second and third reconstructed reference pixel sample sets, there are fourth, fifth and sixth reconstructed reference pixel sample sets, and the matching reference string is from one of the six reference pixel sample sets;

or

three reference pixel sample sets are extended into N (N is usually smaller than 10) reference pixel sample sets, that is, besides the first, second and third reconstructed reference pixel sample sets, there are fourth, fifth, ......, Nth reconstructed reference pixel sample sets, and the matching reference string is from one of the N reference pixel sample sets.

Embodiment and variant 20: fixed-width variable-length pixel sample string matching and extension of the reference pixel sample sets into a multi-frame image

The reference pixel sample sets for fixed-width variable-length pixel sample string matching are extended from the current image into an N-frame (N<15) image which has been reconstructed in stages (in each reconstruction stage) before the current image;

or

the first, second and third reconstructed reference pixel sample sets are in the current image, and the fourth reconstructed reference pixel sample set is in the previous frame of image which has been reconstructed in stages (in each reconstruction stage);

or

the first and second reconstructed reference pixel sample sets are in the current image, and the third reconstructed reference pixel sample set crosses the current image and the previous frame of image which has been reconstructed in stages (in each reconstruction stage), that is, a part of the third reconstructed reference pixel sample set is in the current image and the other part is in the previous frame of image which has been reconstructed in stages (in each reconstruction stage);

or the first reconstructed reference pixel sample set is in the current image, the second reconstructed reference pixel sample set crosses the current image and the previous frame of image which has been reconstructed in stages (in each reconstruction stage), that is, a part of the second reconstructed reference pixel sample set is in the current image and the other part is in the previous frame of image which has been reconstructed in stages (in each reconstruction stage), and the third reconstructed reference pixel sample set also crosses the current image and the previous frame of image which has been reconstructed in stages (in each reconstruction stage), that is, a part of the third reconstructed reference pixel sample set is in the current image and the other part is in the previous frame of image which has been reconstructed in stages (in each reconstruction stage).

## Brief description of the drawings

Fig. 1 is a flowchart of a coding method in the conventional art;
Fig. 2 is a flowchart of a decoding method in the conventional art;
Fig. 3 is a composition diagram of modules of a coding device in the conventional art;
Fig. 4 is a composition diagram of modules of a decoding device in the conventional art;
Fig. 5 is a diagram of fixed-width variable-length pixel sample string matching coding with a width of a pixel sample;
Fig. 6 is a core flowchart of a fixed-width variable-length pixel sample string matching coding method according to the present invention, wherein a CU may be a PU or an LCU or a CTU or a coding block;
Fig. 7 is an implementation flowchart of a coding method according to the present invention, wherein a CU may also be a PU or an LCU or a CTU or a coding block;
Fig. 8 is a core flowchart of a fixed-width variable-length pixel sample string matching decoding method according to the present invention;
Fig. 9 is an implementation flowchart of a decoding method according to the present invention, wherein a CU may also be a PU or an LCU or a CTU or a coding block;
Fig. 10 is a composition diagram of core modules of a fixed-width variable-length pixel sample string matching coding device according to the present invention;
Fig. 11 is a composition diagram of complete implementation modules of a coding device according to the present invention;
Fig. 12 is a composition diagram of core modules of a fixed-width variable-length pixel sample string matching decoding device according to the present invention;

EP 3 035 683 A1

Fig. 13 is a composition diagram of complete implementation modules of a decoding device according to the present invention;

Fig. 14 is an embodiment of implementing string matching searching, coding and decoding according to the present invention;

Fig. 15 is an embodiment of implementing string matching searching in a single plane and implementing coding and decoding in three planes respectively according to the present invention;

Fig. 16 is an embodiment of first, second and third reconstructed reference pixel sample sets (temporary storage areas and temporary storage modules) of which position labels are not intersected according to the present invention;

Fig. 17 is an embodiment of predicting a selected optimal division and arrangement manner by calculating a characteristic of a reconstructed pixel according to the present invention; and

Fig. 11 shows a plurality of examples of large pixels.

**Claims**

1.  An image coding method, comprising:

    for pixel samples of a coding block, a reconstructed reference pixel sample set is searched for a matching reference sample subset to match a matching current sample subset in the coding block, samples in the matching reference sample subset being called matching samples; and parameters which are generated in a matching coding process and related to matching decoding are placed into a compressed bitstream.

2.  The coding method according to claim 1, wherein the parameters comprise, but not limited to, parameters about a position and size of the matching reference sample subset.

3.  The coding method according to claim 1, wherein the parameters comprise, but not limited to, parameter of a matching relationship between the matching reference sample subset and the matching current sample subset, wherein the parameter is represented by two matching parameters: matching distance and matching length, and the matching distance and the matching length are coding results obtained by coding the current matching sample subset.

4.  The coding method according to claim 1, wherein, if unmatched sample(s) (also called unmatchable sample(s)) exist in the coding block without matched ones found in the reconstructed reference pixel sample set, one of the following methods is adopted to complete coding result(s) absent at position(s) of the unmatched sample(s):

    setting the coding result(s) as calculated pseudo matching sample(s) from adjacent sample(s) which has went through a plurality of stages of coding and reconstruction,
    or
    setting the coding result(s) as calculated pseudo matching sample(s) from boundary default sample(s),
    or
    setting the coding result(s) as the unmatched sample(s),
    or
    setting the coding result(s) as calculated variant(s) of the unmatched sample(s) from the pseudo matching sample(s) and the unmatched sample(s).

5.  The coding method according to claim 1, wherein the coding block is one of the following conditions:

    the coding block is a Coding Unit (CU),
    or
    the coding block is a Prediction Unit (PU),
    or
    the coding block is a Largest Coding Unit (LCU)
    or
    the coding block is a Coding Tree Unit (CTU);
    the matching reference sample subset is a fixed-width variable-length matching string;
    the matching current sample subset is a fixed-width variable-length matching string;
    the reconstructed reference pixel sample set consists of three parts: a first reconstructed reference pixel sample set, a second reconstructed reference pixel sample set and a third reconstructed reference pixel sample set; and at most two of the three reconstructed reference pixel sample sets are null.

**6.** The coding method according to claim 1 or 2 or 3 or 4 or 5, comprising, but not limited to, all or part of the following steps:

Step 1): performing fixed-width variable-length string matching coding on an original pixel or its variant of a CU to generate (1) a matching distance and a matching length and (2) a matching sample: searching a first reconstructed reference pixel sample temporary storage area (i.e. a first reconstructed reference pixel sample set), a second reconstructed reference pixel sample temporary storage area (i.e. a second reconstructed reference pixel sample temporary storage area (i.e. a third reconstructed reference pixel sample set) and a third reconstructed reference pixel sample temporary storage area (i.e. a third reconstructed reference pixel sample set), of which position labels are not intersected, for one or more optimal fixed-width variable-length pixel sample matching strings (called matching reference strings) according to a predetermined matching mode and a certain evaluation criterion, wherein one matching reference string may cross two or three of the three temporary storage areas, i.e. the first, second and third reconstructed reference pixel sample temporary storage areas, and the temporary storage area to which the matching reference string belongs is determined by a position of its starting pixel sample; a fixed-width variable-length string matching coding result is the one or more matching distances, matching lengths and matching samples and possible unmatched samples (samples, of which matches are not found, of original pixels or their variants of the current coded CU, also called unmatchable samples); input of the three reconstructed reference pixel sample sets is reconstructed samples, output is reference samples, the reference samples may be equal to the reconstructed samples, and may also be various variants of the reconstructed samples, and when the reference samples are unequal to the reconstructed samples, the reference samples may be temporarily stored for multiple use later when needed after being generated at one time, may also be immediately generated every time when needed, and may also be generated by a combination of the two generation methods;

Step 2): if there is an unmatched sample, calculating a pseudo matching sample from an adjacent sample which has been coded and partially or completely reconstructed or a boundary default sample, and optionally calculating a variant of the unmatched sample; outputting the matching distance, the matching length, the pseudo matching sample and/or the unmatched sample and/or its variant;

Step 3): optionally completing a position of the unmatched sample by the pseudo matching sample; placing the matching sample and the unmatched sample and/or the pseudo matching sample into the first reconstructed reference pixel sample temporary storage area as first reconstructed reference pixel samples; outputting representation parameters, such as the matching distance, the matching length and the optional unmatched sample or its variant, of a fixed-width variable-length string matching manner; and writing these representation parameters into a compressed bitstream after subsequent entropy coding (also comprising optional one-dimensional or 2-Dimensional (2D) adjacent parameter-based first-order or high-order differential coding, predictive coding, matching coding, mapping coding, transformation coding, quantization coding, index coding, run length coding, binarization coding and the like).

**7.** The coding method according to claim 1 or 2 or 3 or 4 or 5 or 6, wherein the coding method and steps of prediction coding (comprising transformation coding, quantization coding and entropy coding) are integrated into a coding method comprising, but not limited to, all or part of the following steps:

Step 1): reading an original pixel or its variant of a coding block;
Step 2): performing intra predictive coding and inter predictive coding, which are collectively referred to as predictive coding, on the coding block to generate (1) a prediction residual and (2) a prediction mode and a motion vector;
Step 3): performing fixed-width variable-length string matching coding on the coding block to generate (1) a matching distance and a matching length and (2) a matching sample; namely searching the first reconstructed reference pixel sample temporary storage area (i.e. the first reconstructed reference pixel sample set), the second reconstructed reference pixel sample temporary storage area (i.e. the second reconstructed reference pixel sample set) and the third reconstructed reference pixel sample temporary storage area (i.e. the third reconstructed reference pixel sample set), of which position labels are not intersected, for one or more optimal fixed-width variable-length pixel sample matching strings (called matching reference strings) according to a predetermined matching mode and a certain evaluation criterion, wherein one matching reference string may cross two or three of the three temporary storage areas, i.e. the first, second and third reconstructed reference pixel sample temporary storage areas, and the temporary storage area to which the matching reference string belongs is determined by a position of its starting pixel sample; a fixed-width variable-length string matching coding result is the one or more matching distances, matching lengths and matching samples and possible unmatched samples (samples, of which matches are not found, of original pixels or their variants of the current coded CU, also called unmatchable samples); input of the three reconstructed reference pixel sample sets is reconstructed samples, output is reference samples, the reference samples may be equal to the reconstructed samples, and may also be various variants of the reconstructed samples, and when the reference samples are unequal to the reconstructed samples, the reference samples may be temporarily stored for multiple use later when needed after being generated at one time, may also be immediately generated every time when needed, and may also be generated by a combination of the two generation methods;

Step 4): if there is an unmatched sample, calculating a pseudo matching sample from an adjacent sample which has been coded and partially or completely reconstructed or a boundary default sample, and optionally calculating a variant of the unmatched sample; outputting the matching distance, the matching length, the pseudo matching sample and/or the unmatched sample and/or its variant;

Step 5): optionally completing a position of the unmatched sample by the pseudo matching sample; placing the matching sample and the unmatched sample and/or the pseudo matching sample into the first reconstructed reference pixel sample temporary storage area as first reconstructed reference pixel samples; outputting the matching distance, the matching length and the optional unmatched sample or its variant;

Step 6): calculating a matching residual, wherein the matching residual is calculated from an original pixel sample of input and a sample of a first reconstructed pixel;

Step 7): performing transformation coding and quantization coding on the prediction residual and matching residual generated in Step 2) and Step 6), wherein transformation coding and quantization coding are optional respectively, that is, transformation coding is not performed if transformation coding may not achieve a better data compression effect, and if lossless coding is to be performed, not only is transformation coding not performed, but also quantization coding is not performed;

Step 8): obtaining multiple second reconstructed pixels, corresponding to multiple prediction modes and multiple matching modes, of the coding block for rate-distortion cost calculation in subsequent Step 11) by performing inverse operation of the prediction manners on results of prediction-transformation-quantization coding manners (i.e. prediction-based coding manners, called the prediction manners for short) in Step 2) and 7) and performing inverse operation of the matching manners on results of matching-transformation-quantization coding manners (i.e. matching-based coding manners, called the matching manners for short) in Step 3) to 7), the inverse operation being collectively referred to as reconstruction, and after determining an optimal coding manner for the coding block in subsequent Step 11), placing the second reconstructed pixel adopting the optimal coding manner into the second reconstructed reference pixel sample temporary storage area;

Step 9): performing de-blocking filtering and pixel compensation operation on the second reconstructed pixel adopting the optimal coding manner to generate a third reconstructed pixel, and placing the third reconstructed pixel into the third reconstructed reference pixel sample temporary storage area for use as a reference pixel for subsequent predictive coding and fixed-width variable-length string matching coding;

Step 10): performing entropy coding on header information of a sequence, an image and the CU, the second coding result, i.e. the prediction mode and the motion vector, obtained in Step 2), matching coding output, i.e. the matching distance, the matching length and the optional unmatched sample or its variant, of Step 5) and the matching residual and prediction residual (which may have been subjected to transformation-quantization operation or quantization operation) of Step 7) to generate a bit rate of the compressed bitstream, wherein entropy coding also comprises optional one-dimensional or 2D adjacent sample-based first-order or high-order differential coding, predictive coding, matching coding, mapping coding, transformation coding, quantization coding, index coding, run length coding and binarization coding executed on a sample of an entropy decoding object such as the matching mode, the matching distance, the matching length, the unmatched sample or its variant and the matching residual;

Step 11): calculating rate-distortion cost according to the original pixel, multiple second reconstructed pixels and the bit rate or bit rate estimate value of the compressed bitstream, and selecting an optimal prediction mode (matching-based coding manner or prediction-based coding manner), optimal matching mode or optimal prediction mode of the coding block according to rate-distortion performance, and compressed bitstream data of the CU is output, the compressed bitstream at least comprising the representation parameters, such as the matching distance, the matching length and the optional unmatched sample or its variant, for the fixed-width variable-length string matching manner; and

Step 12): judging whether coding of all coding blocks has been finished or not, ending coding if YES, otherwise returning to Step 1) to start coding the next coding block.

8. An image decoding method, comprising:

parsing a compressed bitstream to acquire parameters related to matching decoding;

for a decoding block, coping a matching reference sample subset from a position in a reconstructed reference pixel sample set according to the parameters;

moving and pasting all samples in the matching reference sample subset to a current decoding position of the decoding block to obtain a matching current sample subset.

9. The decoding method according to claim 8, wherein the parameters comprise, but not limited to, parameters about a position and size of the matching reference sample subset.

10. The decoding method according to claim 8, wherein the position and size of the matching reference sample subset are determined according to the current decoding position and two matching parameters, wherein the two matching parameters are matching distance and matching length, and the two matching parameters represent a matching relationship.

11. The decoding method according to claim 8, wherein, if there is no matching reference sample subset from the reconstructed reference pixel sample set at the current decoding position of the decoding block, one of the following methods is adopted to complete a current sample absent at the current decoding position:

setting the current sample(s) as calculated pseudo matching sample(s) from adjacent sample(s) which has went through a plurality of stages of coding and reconstruction,

or

setting the current sample(s) as calculated pseudo matching sample(s) from boundary default sample(s),

or

setting the current sample(s) as inputted unmatched sample(s),

or

setting the current sample(s) as calculated unmatched sample(s) from the pseudo matching sample(s) and variant(s) of the inputted unmatched sample(s).

12. The decoding method according to claim 8, wherein the decoding block is one of the following conditions:

the decoding block is a Coding Unit (CU),

or

the decoding block is a Prediction Unit (PU),

or

the decoding block is a Largest Coding Unit (LCU)

or

the decoding block is a Coding Tree Unit (CTU);

the matching reference sample subset is a fixed-width variable-length matching string;

the matching current sample subset is a fixed-width variable-length matching string;

the reconstructed reference pixel sample set consists of three parts: a first reconstructed reference pixel sample set, a second reconstructed reference pixel sample set and a third reconstructed reference pixel sample set; and at most two of the three reconstructed reference pixel sample sets are null.

13. The decoding method according to claim 8 or 9 or 10 or 11 or 12, comprising, but not limited to, all or part of the following steps:

Step 1): parsing the compressed bitstream to acquire matching decoding related parameters of input, and performing fixed-width variable-length string matching decoding by virtue of the acquired matching parameters of the input, i.e. the matching distance D and the matching length L; namely copying all samples of the whole matching string (called a matching reference string ) of which a length is L from a first reconstructed reference pixel sample temporary storage area (i.e. the first reconstructed reference pixel sample set), a second reconstructed reference pixel sample temporary storage area (i.e. the second reconstructed reference pixel sample set) and a third reconstructed reference pixel sample temporary storage area (i.e. the third reconstructed reference pixel sample set), of which position labels are not intersected, according to a known matching mode and a fixed width, and moving and pasting the whole matching string to a position of a matched string (also called a matching current string) in a current decoding block to reconstruct the whole matched string, wherein one matching reference string may cross two or three of the three temporary storage areas, i.e. the first, second and third reconstructed reference pixel sample temporary storage areas, and the temporary storage area to which the matching reference string belongs is determined by a position of its starting pixel sample; the three reference pixel sample sets, i.e. the first, second and third reconstructed reference pixel sample sets, may also be subjected to different processing or transformation or a combination of processing or transformation, except differences in position and/or reconstruction stage; although the position labels of the three reconstructed reference pixel sample sets are not intersected, three areas, corresponding to them respectively, of a current image may still have an overlapped part; input of the three reconstructed reference pixel sample sets is reconstructed samples, output is reference samples, the reference samples may be equal to the reconstructed samples, and may also be various variants of the reconstructed samples, and when the reference samples are unequal to the reconstructed samples, the reference samples may be temporarily stored for multiple use later when needed after being generated at one time, may also be immediately generated every time when needed, and may also be generated by a combination of the two generation methods;

Step 2): if specific values of the matching distance and matching length of input or an additional flag represents that there is no matching sample from the first reconstructed reference pixel sample temporary storage area or the second reconstructed reference pixel sample temporary storage area or the third reconstructed reference pixel sample temporary storage area at the position of the matched string (sample) in the current decoded CU, that is, the matching sample is absent at the current decoding position, calculating a pseudo matching sample from an adjacent sample which is partially decoded or completely decoded or a boundary default sample; optionally reading the unmatched sample of the input or its variant, or optionally calculating the unmatched sample;

3) optionally completing the matching sample absent at the position of the unmatched sample by the pseudo matching sample; combining the matching sample copied in Step 1) and the pseudo matching sample calculated in Step 2) and/or the unmatched sample read from the input in Step 2) and/or the unmatched sample calculated after being read from the input in Step 2) to obtain a complete sample of a first reconstructed pixel of matching decoding, and placing the sample of the first reconstructed pixel into the first reconstructed reference pixel sample temporary storage area;

by the abovementioned three steps, sequentially copying, moving and pasting matching strings one by one, or reading and/or calculating unmatched samples one by one (comprising completing the positions of the unmatched samples with the pseudo matching samples) to finally reconstruct all the samples of the whole current decoding block, wherein, when a CU is decoded, all the matching current strings and unmatchable samples are combined to cover the whole CU; when matching current strings in a CU have different fixed widths, one matching current string may also cover a part of the other matching current string; and at this time, samples of the matching current strings which are covered and decoded before are replaced with samples of the matching current strings which are decoded later according to a decoding sequence.

14. The decoding method according to claim 8 or 9 or 10 or 11 or 12 or 13, wherein the decoding method and a steps of predictive fixed-width variable-length non-string matching decoding (comprising inverse transformation decoding, inverse quantization decoding and entropy decoding) are integrated into a decoding method comprising, but not limited to, all of part of the following steps:

Step 1): performing entropy decoding on a decoding block, and parsing header information and data information of the decoding block, wherein the header information comprises whether a predictive fixed-width variable-length non-string matching (called predictive non-string matching for short) decoding step or a fixed-width variable-length string matching (called string matching for short) decoding step is adopted when the decoding block is subsequently decoded; entropy decoding may also comprise respectively optional one-dimensional or 2-Dimensional adjacent sample-based first-order or high-order differential decoding, predictive decoding, matching decoding, mapping decoding, inverse transformation decoding, inverse quantization decoding, index decoding, run length decoding and binarization decoding executed on an entropy decoding object such as a matching mode, a matching distance, a matching length, an additional flag, an unmatched sample or its variant and a string matching residual;

Step 2): for a predictive non-string matching residual or string matching residual which may be subjected to transformation-quantization operation or quantization operation, performing inverse operation of the operation, i.e. inverse quantization-inverse transformation decoding operation or inverse quantization decoding operation or identity operation, to generate a predictive non-string matching residual or a string matching residual, wherein the step is optional, and if there is no predictive non-string matching residual and string matching residual in a bitstream, operation of the step is not performed;

Step 3): if it is parsed in Step 1) that the predictive non-string matching decoding step is adopted when the decoding block is decoded, performing intra predictive decoding or inter predictive non-string matching decoding, which is collectively referred to as predictive non-string matching decoding, to generate an initially reconstructed pixel of predictive non-string matching decoding, placing a sample of the initially reconstructed pixel into a second reconstructed reference pixel sample temporary storage area, then skipping to Step 8), otherwise sequentially executing the next step;

Step 4): performing fixed-width variable-length string matching decoding on a decoding block by virtue of one or more pairs of matching distances D and matching lengths L obtained in Step 1), copying all samples of the whole matching string (called a matching reference string ) of which a length is L from the first reconstructed reference pixel sample temporary storage area (i.e. the first reconstructed reference pixel sample set), the second reconstructed reference pixel sample temporary storage area (i.e. the second reconstructed reference pixel sample set) and the third reconstructed reference pixel sample temporary storage area (i.e. the third reconstructed reference pixel sample set), of which position labels are not intersected, according to a known matching mode and a fixed width, moving and pasting the whole matching string to a position of a matched string (also called a matching current string) in the decoding block to reconstruct the whole matched string, and in such a manner, reconstructing all matched strings one by one, wherein one matching reference string may cross two or three of the three temporary storage areas, i.e. the first, second and third reconstructed reference pixel sample temporary storage areas, and the temporary storage area to which the matching reference string belongs is determined by a position of its starting pixel sample; the three reference pixel sample sets, i.e. the first, second and third reconstructed reference pixel sample sets, may also be subjected to different processing or transformation or a combination of the processing or transformation, except differences in position and/or reconstruction stage; although the position labels of the three reconstructed reference pixel sample sets are not intersected, three areas, corresponding to them respectively, of a current image may still have an overlapped part; one or two of the three reconstructed reference pixel sample sets may be null, but they may not be all null; input of the three reconstructed reference pixel sample sets is reconstructed samples, output is reference samples, the reference samples may be equal to the reconstructed samples, and may also be various variants of the reconstructed samples, and when the reference samples are unequal to the reconstructed samples, the reference samples may be temporarily stored for multiple use later when needed after being generated at one time, may also be immediately generated every time when needed, and may also be generated by a combination of the two generation methods;

Step 5): if specific values of the matching distance and matching length obtained in Step 1) or an additional flag represents that there is no matching sample from the first reconstructed reference pixel sample temporary storage area or the second reconstructed reference pixel sample temporary storage area or the third reconstructed reference pixel sample temporary storage area at the position of the matched string (sample) in the current decoding block, that is, the matching sample is absent at a current decoding position, calculating a pseudo matching sample from an adjacent sample which is partially decoded or completely decoded or a boundary default sample; optionally reading an unmatched sample of input or its variant, or optionally calculating the unmatched sample;

Step 6): if the matching sample is absent at the current decoding position, optionally completing the absent matching sample by the pseudo matching sample calculated in Step 5), combining the matching sample copied in Step 4) and the pseudo matching sample and/or unmatched sample calculated in Step 5) to obtain a complete sample of a first reconstructed pixel (i.e. a first reconstructed reference pixel) of matching decoding, and placing the sample of the first reconstructed pixel into the first reconstructed reference pixel sample temporary storage area;

Step 7): performing string matching compensation, namely performing compensation on the sample of the first reconstructed pixel generated in Step 6) to generate a sample of a second reconstructed pixel of string matching decoding by virtue of the string matching residual generated in Step 2), and placing the sample of the second reconstructed pixel into the second reconstructed reference pixel sample temporary storage area;

Step 8): performing post-processing such as de-blocking filtering and pixel compensation operation on the initially reconstructed pixel of predictive decoding in Step 3) or the second reconstructed pixel of string matching decoding in Step 7), and then placing a sample of a third reconstructed pixel generated by the operation into the third reconstructed reference pixel sample temporary storage area for use as a reference pixel for subsequent predictive non-string matching decoding and fixed-width variable-length string matching decoding;

Step 9): outputting the pixel of the completely reconstructed decoding block, i.e. the third reconstructed pixel of the decoding block; and

Step 10): judging whether decoding of compressed bitstream data of all CUs has been finished or not, ending decoding if YES, otherwise returning to Step 1) to start decoding the next decoding block.

15. An image coding device, comprising, but not limited to, all or part of the following modules: a matching reference sample subset searching coding module, a reconstructed reference pixel sample temporary storage module and a compressed bitstream output module.

**16.** The coding device according to claim 15, further comprising the following module: a pseudo matching sample calculation module.

**17.** The coding device according to claim 15 or 16, further comprising the following module: a module of completing a coding result absent at a position of an unmatched sample.

**18.** The coding device according to claim 15 or 16 or 17, further comprising, but not limited to, all or part of the following modules:

    Module 1): a fixed-width variable-length string matching searching coding module: the module executes fixed-width variable-length string matching coding on original video pixel samples, searches a first reconstructed reference pixel sample temporary storage module (temporally storing samples of a first reconstructed reference pixel sample set), a second reconstructed reference pixel sample temporary storage module (temporally storing samples of a second reconstructed reference pixel sample set) and a third reconstructed reference pixel sample temporary storage module (temporally storing samples of a third reconstructed reference pixel sample set), of which position labels are not intersected, to obtain an optimal fixed-width variable-length matching string (called a matching reference string) and outputs (1) a matching sample of the optimal matching string, (2) a matching distance D and matching length L of the optimal matching string and (3) a possible unmatched sample, i.e. a sample of an original pixel of which a match is not found in the current coded CU and its variant, also called an unmatchable sample, wherein one matching reference string may cross two or three of the first, second and third reconstructed reference pixel sample sets, and the set to which the matching reference string belongs is determined by a position of its starting pixel sample; input of the three reconstructed reference pixel sample sets is reconstructed samples, output is reference samples, the reference samples may be equal to the reconstructed samples, and may also be various variants of the reconstructed samples, and when the reference samples are unequal to the reconstructed samples, the reference samples may be temporarily stored for multiple use later when needed after being generated at one time, may also be immediately generated every time when needed, and may also be generated by a combination of the two generation methods;

    Module 2): an adjacent-sample-based pseudo matching sample calculation module: the module, if there is no optimal matching sample found for some video pixel samples of input in the first reconstructed reference pixel sample temporary storage module, the second reconstructed reference pixel sample temporary storage module and the third reconstructed reference pixel sample temporary storage module, that is, these video pixel samples of the input are unmatched samples, calculates a pseudo matching sample from an adjacent sample which has been coded and partially or completely reconstructed or a boundary default sample, may also optionally calculate a variant of the unmatched sample, and outputs the matching distance, the matching length, the pseudo matching sample and/or the unmatched sample and/or its variant;

    Module 3): a pseudo matching sample-based unmatched sample completion module: the module completes a position of the unmatched sample for which no optimal matching sample is found by the calculated pseudo matching sample, wherein the matching sample and unmatched sample, which are found by module 1), and/or the pseudo matching sample calculated by module 2) are combined into a first reconstructed pixel sample placed into the first reconstructed reference pixel sample temporary storage module; the module may be bypassed, and at this time, the matching sample and unmatched sample, which are found by module 1), are combined into the first reconstructed pixel sample placed into the first reconstructed reference pixel sample temporary storage module; the module outputs representation parameters, such as the matching distance, the matching length and the optional unmatched sample or its variant, of a fixed-width variable-length string matching manner; these representation parameters are written into a compressed bitstream after being subjected to subsequent entropy coding (also comprising, but not limited to, respectively optional one-dimensional or 2-Dimensional (2D) adjacent parameter-based first-order or high-order differential coding, predictive coding, matching coding, mapping coding, transformation coding, quantization coding, index coding, run length coding, binarization coding and the like); the module may also optionally output the matching sample and the pseudo matching sample and/or the unmatched sample; and

    Module 4): the first reconstructed reference pixel sample temporary storage module: the module is configured to temporally store the first reconstructed pixel sample formed by combining the found matching sample and unmatched sample and/or the calculated pseudo matching sample for use as a first reference pixel sample for subsequent string matching searching coding.

**19.** The coding device according to claim 15 or 16 or 17 or 18, wherein the coding module and a module for predictive coding (comprising transformation coding, quantization coding and entropy coding) are integrated into a coding device comprising, but not limited to, all or part of the following modules:

Module 1): a predictive coding module: the module executes intra predictive coding and inter predictive coding on video pixel samples of input and outputs (1) a prediction residual and (2) a prediction mode and a motion vector;

Module 2): a fixed-width variable-length string matching searching coding module: the module executes fixed-width variable-length string matching coding on the video pixel samples of the input, searches a first reconstructed reference pixel sample temporary storage module (temporally storing samples of a first reconstructed reference pixel sample set), a second reconstructed reference pixel sample temporary storage module (temporally storing samples of a second reconstructed reference pixel sample set) and a third reconstructed reference pixel sample temporary storage module (temporally storing samples of a third reconstructed reference pixel sample set), of which position labels are not intersected, to obtain an optimal fixed-width variable-length pixel sample matching string and outputs (1) a matching sample of the optimal matching string, (2) a matching distance D and matching length L of the optimal matching string and (3) a possible unmatched sample, i.e. a sample of an original pixel of which a match is not found in the current coded CU and its variant, also called an unmatchable sample, wherein one matching reference string may cross two or three of the first, second and third reconstructed reference pixel sample sets, and the set to which the matching reference string belongs is determined by a position of its starting pixel sample; input of the three reconstructed reference pixel sample sets is reconstructed samples, output is reference samples, the reference samples may be equal to the reconstructed samples, and may also be various variants of the reconstructed samples, such as samples subjected to processing of colour quantization, numerical quantization, vector quantization, noise elimination, filtering, characteristic extraction and the like or samples subjected to transformation of colour format transformation, arrangement manner transformation, frequency domain transformation, spatial domain mapping, Differential Pulse Code Modulation (DPCM), first-order or high-order differentiation operation, indexation and the like or pixel value variants subjected to multiple processing and transformation, and when the reference samples are unequal to the reconstructed samples, the reference samples may be temporarily stored for multiple use later when needed after being generated at one time, may also be immediately generated every time when needed, and may also be generated by a combination of the two generation methods;

Module 3): an adjacent-sample-based pseudo matching sample calculation module: the module, if there is no optimal matching sample found for some video pixel samples of input in the first reconstructed reference pixel sample temporary storage module, the second reconstructed reference pixel sample temporary storage module and the third reconstructed reference pixel sample temporary storage module, that is, these video pixel samples of the input are unmatched samples, calculates a pseudo matching sample from an adjacent sample which has been coded and partially or completely reconstructed or a boundary default sample, may also optionally calculate a variant of the unmatched sample, and outputs the matching distance, the matching length, the pseudo matching sample and/or the unmatched sample and/or its variant;

Module 4): a pseudo matching sample-based unmatched sample completion module: the module completes a position of the unmatched sample for which no optimal matching sample is found by the calculated pseudo matching sample, wherein the matching sample and unmatched sample, which are found by module 1), and/or the pseudo matching sample calculated by module 2) are combined into a first reconstructed pixel sample placed into the first reconstructed reference pixel sample temporary storage module; the module may be bypassed, and at this time, the matching sample and unmatched sample, which are found by module 1), are combined into the first reconstructed pixel sample placed into the first reconstructed reference pixel sample temporary storage module; the module outputs representation parameters, such as the matching distance, the matching length and the optional unmatched sample or its variant, of a fixed-width variable-length string matching manner; these representation parameters are written into a compressed bitstream after being subjected to subsequent entropy coding (also comprising, but not limited to, respectively optional one-dimensional or 2D adjacent parameter-based first-order or high-order differential coding, predictive coding, matching coding, mapping coding, transformation coding, quantization coding, index coding, run length coding, binarization coding and the like); the module may also optionally output the matching sample and the pseudo matching sample and/or the unmatched sample;

Module 5): the first reconstructed reference pixel sample temporary storage module: the module is configured to temporally store the first reconstructed pixel sample formed by combining the found matching sample and unmatched sample and/or the calculated pseudo matching sample for use as a first reference pixel sample for subsequent string matching searching coding;

Module 6): a matching residual calculation module: the module calculates a matching residual from the video pixel samples of the input and the first reconstructed pixel sample;

Module 7): a transformation module: the module executes transformation operation on the matching residual and a prediction residual and outputs a transformation coefficient, wherein transformation operation may not achieve a data compression effect for a certain type of screen image pixel, and under such a condition, transformation operation is not executed, that is, the transformation module is bypassed, and the matching residual or the prediction residual is directly output;

Module 8): a quantization module: the module executes quantization operation on the transformation coefficient (under the condition that the transformation module is not bypassed) or the matching residual or the prediction residual (under the condition that the transformation module is bypassed), outputs a quantization transformation coefficient or quantization prediction residual for predictive coding and outputs a quantization transformation coefficient or quantization matching residual for matching coding, wherein the transformation module and the quantization module may both be bypassed, and the prediction residual and the matching residual are directly output;

Module 9): an entropy coding module: the module executes entropy coding on results, such as the matching distance, the matching length, the optional unmatched sample or its variant and the quantization transformation coefficient or the quantization matching residual, of matching code manners implemented by module 2) to module 4) and module 6) to module 8), and executes entropy coding on results, such as the prediction mode, the motion vector and the quantization transformation coefficient or the quantization prediction residual, of predictive coding manners implemented by module 1), module 7) and module 8), comprising executing respectively optional one-dimensional or 2D adjacent sample-based first-order or high-order differential coding, predictive coding, matching coding, mapping coding, transformation coding, quantization coding, index coding, run length coding and binarization coding on samples of the entropy coding objects at first;

Module 10): a reconstruction module: the module executes inverse operation of the predictive coding manners implemented by the predictive coding module, the transformation module and the quantization module and executes inverse operation of the matching coding manners implemented by the fixed-width variable-length string matching searching coding module, the adjacent-sample-based pseudo matching sample calculation module, the pseudo matching sample-based unmatched sample completion module, the matching residual calculation module, the transformation module and the quantization module to generate a sample of a second reconstructed pixel by these inverse operation, outputs the second reconstructed pixel to a rate-distortion performance-based optimal prediction mode and matching mode selection module for rate-distortion cost calculation, and places the second reconstructed pixel corresponding to an optimal coding manner into the second reconstructed reference pixel sample temporary storage module after the rate-distortion performance-based optimal prediction mode and matching mode selection module determines the optimal coding manner (matching coding manner or predictive coding manner);

Module 11): a de-blocking filtering and compensation module: the module performs de-blocking filtering and pixel compensation operation on the second reconstructed pixel corresponding to the optimal coding manner to generate a third reconstructed pixel and then places the third reconstructed pixel into the third reconstructed reference pixel sample temporary storage module for use as a reference pixel for subsequent predictive coding and fixed-width variable-length string matching coding;

Module 12): the second reconstructed reference pixel sample temporary storage module: the module temporally stores the second reconstructed pixel and provides a second reference pixel sample required by the fixed-width variable-length string matching searching coding module;

Module 13): the third reconstructed reference pixel sample temporary storage module: the module temporally stores the third reconstructed pixel and provides a third reference pixel for predictive coding and fixed-width variable-length string matching coding; and

Module 14): the rate-distortion performance-based optimal prediction mode and matching mode selection module: the module selects the optimal coding manner (matching coding manner or predictive coding manner), an optimal matching mode and an optimal prediction mode according to rate-distortion performance and outputs a video compressed bitstream, wherein the compressed bitstream at least comprises the representation parameters, such as the matching distance, the matching length and the optional unmatched sample (also called an unmatchable sample) or its variant, of a fixed-width variable-length string matching manner.

20. An image decoding device, comprising, but not limited to, all or part of the following modules: a compressed bitstream resolution and matching decoding related parameter acquisition module, a module of copying a matching reference sample subset to reconstruct a matching current sample subset and a reconstructed reference pixel sample temporary storage module.

21. The decoding device according to claim 20, further comprising the following module: a pseudo matching sample calculation module.

22. The decoding device according to claim 20 or 21, further comprising the following module: a module of completing a current sample absent at a position of an unmatched sample.

23. The decoding device according to claim 20 or 21 or 22, comprising, but not limited to, all or part of the following modules:

Module 1: a fixed-width variable-length string matching decoding module: the module has functions of executing decoding operation on a matching distance and matching length of a fixed-width variable-length matching string of input acquired from a compressed bitstream, namely copying the whole matching string (i.e. a matching reference string) of which a length is the matching length from a position specified by the matching distance in a first reconstructed reference pixel sample temporary storage module (temporally storing samples of a first reconstructed reference pixel sample set) or a second reconstructed reference pixel sample temporary storage module (temporally storing samples of a second reconstructed reference pixel sample set) or a third reconstructed reference pixel sample temporary storage module (temporally storing samples of a third reconstructed reference pixel sample set), of which position labels are not intersected, according to a known matching module and a fixed width and then moving and pasting the whole matching string to a position of a current matched string (i.e. matching current string) in a current block to reconstruct the whole matched string in the current decoding block, wherein one matching reference string may cross two or three of the three temporary storage areas, i.e. the first, second and third reconstructed reference pixel sample temporary storage areas, and the set to which the matching reference string belongs is determined by a position of its starting pixel sample; the three reference pixel sample sets, i.e. the first, second and third reconstructed reference pixel sample sets, may also be subjected to different processing or transformation or a combination of these processing or transformation, except differences in position and/or reconstruction stage; although the position labels of the three reconstructed reference pixel sample sets are not intersected, three areas, corresponding to them respectively, of a current image may still have an overlapped part; one or two of the three reconstructed reference pixel sample sets may be null, but they may not be all null; input of the three reconstructed reference pixel sample sets is reconstructed samples, output is reference samples, the reference samples may be equal to the reconstructed samples, and may also be various variants of the reconstructed samples, and when the reference samples are unequal to the reconstructed samples, the reference samples may be temporarily stored for multiple use later when needed after being generated at one time, may also be immediately generated every time when needed, and may also be generated by a combination of the two generation methods;

Module 2): an adjacent-sample-based pseudo matching sample calculation module: the module, if specific values of the matching distance and matching length of the input or an additional flag represents that there is no matching sample from the first reconstructed reference pixel sample temporary storage module or the second reconstructed reference pixel sample temporary storage module or the third reconstructed reference pixel sample temporary storage module at the position of the matched string (sample) in the current decoding block, that is, the matching sample is absent at the current decoding position, calculates a pseudo matching sample from an adjacent sample which is partially decoded or completely decoded or a boundary default sample, may also optionally read an unmatched sample of the input or its variant, or optionally calculates the pseudo matching sample;

Module 3): a pseudo matching sample-based unmatched sample completion module: the module completes the pixel sample at the current decoding position without any matching sample in the first, second or third reconstructed reference pixel sample temporary storage module optionally by the calculated pseudo matching sample, wherein the matching sample copied and pasted by module 1) and the pseudo matching sample calculated by module 2) and/or the unmatched sample obtained from the input by module 2) and/or the unmatched module calculated after being obtained from the input by module 2) are combined into a first reconstructed pixel sample, i.e. output of the module, of matching decoding; the module may be bypassed, and at this time, the matching sample copied and pasted by module 1) and the unmatched sample obtained from the input by module 2) are combined into the first reconstructed pixel sample of matching decoding; and

Module 4): the first reconstructed reference pixel sample temporary storage module: the module is configured to temporally store the first reconstructed pixel sample for use as a first reference pixel sample for subsequent fixed-width variable-length string matching coding.

24. The decoding device according to claim 20 or 21 or 22 or 23, wherein the decoding module and a module for predictive fixed-width variable-length string matching decoding (comprising inverse transformation decoding, inverse quantization decoding and entropy decoding) are integrated into a decoding device comprising, but not limited to, all or part of the following modules:

Module 1): an entropy decoding module: the module executes entropy decoding on compressed bitstream data of input to obtain header information and data information of a current decoded sequence, a current decoded image and a current decoding block, wherein entropy decoding may further comprise respectively optional one-dimensional or 2-Dimenstional (2D) adjacent sample-based first-order or high-order differential decoding, predictive decoding, matching decoding, mapping decoding, inverse transformation decoding, inverse quantization decoding, index decoding, run length decoding and binarization decoding executed on an entropy decoding object comprising each non-string matching decoding parameter such as a prediction mode and motion vector of a predictive fixed-width variable-length non-string matching (called predictive non-string matching for short) decoding manner, a matching mode of a fixed-width variable-length string matching (called string matching for short) decoding manner, a matching distance, a matching length, an additional flag, an unmatched sample or its variant, a predictive non-string matching residual and a string matching residual (which may have been subjected to transformation-quantization operation or quantization operation); entropy decoding further comprises information indicating that it is parsed whether the predictive non-string matching decoding manner or the string matching decoding manner is adopted for the current decoding block from the compressed bitstream data of the input, whether inverse transformation operation and inverse quantization operation are bypassed or not and the like; in the string matching decoding manner, the data information of the current decoding block may comprise information of one or more matching strings;

Module 2): an inverse quantization module: the module, if inverse quantization operation is not bypassed, executes inverse quantization operation and outputs a transformation coefficient, otherwise the module is bypassed, does not execute inverse quantization operation and directly outputs the predictive non-string matching residual or the string matching residual;

Module 3): an inverse transformation module: the module, if inverse transformation operation is not bypassed, executes inverse transformation operation and outputs the predictive non-string matching residual or the string matching residual, otherwise the module is bypassed and does not execute inverse transformation operation, and at this time, the inverse quantization module must be bypassed and the module directly outputs the predictive non-string matching residual or the string matching residual;

Module 4): a predictive non-string matching decoding module: the module executes intra predictive coding or inter predictive non-string matching decoding to obtain and output an initially reconstructed pixel of predictive non-string matching decoding;

Module 5): a fixed-width variable-length string matching decoding module: the module has functions of executing decoding operation on the matching distance and matching length of a fixed-width variable-length matching string of the input acquired from a compressed bitstream, namely copying the whole matching string (i.e. a matching reference string) of which a length is the matching length from a position specified by the matching distance in a first reconstructed reference pixel sample temporary storage module (temporally storing samples of a first reconstructed reference pixel sample set) or a second reconstructed reference pixel sample temporary storage module (temporally storing samples of a second reconstructed reference pixel sample set) or a third reconstructed reference pixel sample temporary storage module (temporally storing samples of a third reconstructed reference pixel sample set), of which position labels are not intersected, according to a known matching module and a fixed width and then moving and pasting the whole matching string to a position of a current matched string (i.e. matching current string) in a current decoding block to reconstruct the whole matched string in the current decoding block, wherein one matching reference string may cross two or three of the three temporary storage areas, i.e. the first, second and third reconstructed reference pixel sample temporary storage areas, and the set to which the matching reference string belongs is determined by a position of its starting pixel sample; the three reference pixel sample sets, i.e. the first, second and third reconstructed reference pixel sample sets, may also be subjected to different processing or transformation or a combination of these processing or transformation, except differences in position and/or reconstruction stage; although the position labels of the three reconstructed reference pixel sample sets are not intersected, three areas, corresponding to them respectively, of a current image may still have an overlapped part; one or two of the three reconstructed reference pixel sample sets may be null, but they may not be all null; input of the three reconstructed reference pixel sample sets is reconstructed samples, output is reference samples, the reference samples may be equal to the reconstructed samples, and may also be various variants of the reconstructed samples, and when the reference samples are unequal to the reconstructed samples, the reference samples may be temporarily stored for multiple use later when needed after being generated at one time, may also be immediately generated every time when needed, and may also be generated by a combination of the two generation methods;

Module 6): an adjacent-sample-based pseudo matching sample calculation module: the module, if specific values of the matching distance and matching length from the entropy decoding module or an additional flag represents that there is no matching sample from the first reconstructed reference pixel sample temporary storage module or the second reconstructed reference pixel sample temporary storage module or the third reconstructed reference pixel sample temporary storage module at the position of the matched string (sample) in the current decoding block, that is, the matching sample is absent at a current decoding position, calculates a pseudo matching sample from an adjacent sample which is partially decoded or completely decoded or a boundary default sample, may also optionally read an unmatched sample of the input or its variant from the bitstream, or optionally calculates the pseudo matching sample;

Module 7): a pseudo matching sample-based unmatched sample completion module: the module completes the pixel sample at the current decoding position without any matching sample in the first, second or third reconstructed reference pixel sample temporary storage module optionally by the calculated pseudo matching sample, wherein the matching sample copied and pasted by module 1) and the pseudo matching sample calculated by module 5) and the unmatched sample calculated by module 6) and/or the unmatched module obtained from the bitstream of the input by module 6) and/or the unmatched sample calculated after being obtained from the bitstream of the input by module 6) are combined into a first reconstructed pixel sample of matching decoding; the matching sample and the pseudo matching sample and/or the unmatched sample are also output of the module; the module may be bypassed, and at this time, the matching sample copied and pasted by module 5) and the unmatched sample obtained from the bitstream of the input by module 6) are combined into the first reconstructed pixel sample of matching decoding, and the matching sample and the unmatched sample are also output of the module;

Module 8): the first reconstructed reference pixel sample temporary storage module: the module is configured to temporally store the first reconstructed pixel sample for use as a first reference pixel sample for subsequent fixed-width variable-length string matching decoding;

Module 9): a string matching compensation module: the module adds the string matching residual output by module 3) and the first reconstructed pixel sample output by module 7) to generate a second reconstructed pixel sample of string matching decoding, i.e. output of the module;

Module 10): a de-blocking filtering and compensation post-processing module: the module performs post-processing operation such as de-blocking filtering and pixel compensation operation on the initially reconstructed pixel output by module 4) or the second reconstructed pixel output by module 9) to generate a third reconstructed pixel and then places the third reconstructed pixel into the third reconstructed reference pixel sample temporary storage module for use as a reference pixel for subsequent fixed-width variable-length string matching decoding and predictive non-string matching decoding; the third reconstructed pixel is usually the final output pixel of the embodiment of the whole decoding device;

Module 11): the second reconstructed reference pixel sample temporary storage module: the module temporally stores the second reconstructed pixel and provides a second reference pixel sample required by fixed-width variable-length string matching searching decoding; and

Module 12): the third reconstructed reference pixel sample temporary storage module: the module temporally stores the third reconstructed pixel and provides a third reference pixel for subsequent predictive non-string matching decoding and fixed-width variable-length string matching decoding.

25. The decoding method or decoding device according to claim 8 or 9 or 10 or 11 or 12 or 13 or 14 or 20 or 21 or 22 or 23 or 24, wherein decoding a complete decoding block at least requires one or more input flags indicating whether a matching sample is absent at a current decoding position or not and one or more pairs of (matching distance, matching length) of input, which are arranged into one of the following conditions according to a decoding sequence:

Condition 1:

$$F_1, (D_1, L_1) \text{ or blank}, F_2, (D_2, L_2) \text{ or blank}, \ldots\ldots, F_n, (D_n, L_n) \text{ or blank},$$

wherein it is indicated that a matching distance $D_i$ and matching length $L_i$ of a matching string follow $F_i$ when $F_i$ is a value, and it is indicated that a position after $F_i$ is blank because of absence of the matching sample at the current decoding position when $F_i$ is another value;

Condition 2:

when the value of $F_i$ represents that the matching sample is absent at the current decoding position, an additional input pixel sample, i.e. an unmatched pixel sample or its variant, $P_i$ may be adopted to replace the absent matching sample:

$$F_1, (D_1, L_1) \text{ or } P_1, F_2, (D_2, L_2) \text{ or } P_2, \ldots\ldots, F_n, (D_n, L_n) \text{ or } P_n,$$

wherein it is indicated that a matching distance $D_i$ and matching length $L_i$ of a matching string follow $F_i$

when $F_i$ is a value, and it is indicated that an input pixel sample or its variant $P_i$ follows $F_i$ because of absence of the matching sample at the current decoding position when $F_i$ is another value;

Condition 3:

a combination of condition 1 and condition 2:

$$F_1, (D_1, L_1) \text{ or blank or } P_1, F_2, (D_2, L_2) \text{ or blank or } P_2, \ldots\ldots, F_n, (D_n, L_n) \text{ or blank or } P_n,$$

wherein it is indicated that a matching distance $D_i$ and matching length $L_i$ of a matching string follow $F_i$ when $F_i$ is a first value, and it is indicated that the position after $F_i$ is blank because the matching sample is absent at the current decoding position and is completed by the pseudo matching sample when $F_i$ is a second value; it is indicated that the matching sample is absent at the current decoding position but the position after Fi is followed by the mth combination and the mth operation result $P_i$ in M combinations and operation of the pseudo matching samples and the input pixel samples or their variants rather than being blank when Fi is a (2+m)th ($1 \le m \le M$) value; and M is usually smaller than 10.

26. The decoding method and decoding device according to claim 8 or 9 or 10 or 11 or 12 or 13 or 14 or 20 or 21 or 22 or 23 or 24 or 25, wherein description and expression forms of different types of decoding input parameters such as the input flag $F_i$, the input matching distance $D_i$, the input matching length $L_i$ and the input pixel sample or its variant $P_i$ may be syntactic elements obtained by entropy coding, first-order or high-order differential coding, predictive coding, matching coding, mapping coding, transformation coding, quantization coding, index coding, run length coding and binarization coding of these parameters in a bit steam (or called a bitstream, i.e. bitstream); a placement sequence of these different types of syntactic elements in the bit stream may be one or combination of the following two:

Sequence 1): intersected placement of individual numerical values of different types; and
Sequence 2): centralized placement of all the numerical values of the same types.

27. The decoding method or decoding device according to claim 8 or 9 or 10 or 11 or 12 or 13 or 14 or 20 or 21 or 22 or 23 or 24 or 25 or 26, wherein
the matching distance Di or its variant is a single-component parameter or a dual-component parameter or a three-component parameter; a syntactic element corresponding to the matching distance Di or its variant in a compressed bitstream is in, but not limited to, one of the following forms:

a syntactic element corresponding to a matching distance Di or its variant of a matching string: d (one component), or
a syntactic element corresponding to a matching distance Di or its variant of a matching string: d[0], d[1], or
a syntactic element corresponding to a matching distance Di or its variant of a matching string: d[0], d[1], d[2];
the matching length Li or its variant is a single-component parameter or a dual-component parameter or a three-component parameter; a syntactic element corresponding to the matching length Li or its variant in the compressed bitstream is in, but not limited to, one of the following forms:

a syntactic element corresponding to a matching length Li or its variant of a matching string: r (one component);
or
a syntactic element corresponding to a matching length Li or its variant of a matching string: r[0], r[1] (two components);
or
a syntactic element corresponding to a matching length Li or its variant of a matching string: r[0], r[1], r[2] (three components);
the unmatched sample $P_i$ or its variant is a single-component parameter or a dual-component parameter or a three-component parameter; a syntactic element corresponding to the unmatched sample $P_i$ or its variant in the compressed bitstream is in, but not limited to, one of the following forms:

a syntactic element corresponding to an unmatched sample $P_i$ or its variant: p (one component) or
a syntactic element corresponding to an unmatched sample $P_i$ or its variant: p[0], p[1] (two components) or
a syntactic element corresponding to an unmatched sample $P_i$ or its variant: p[0], p[1], p[2] (three components).

28. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27, wherein a sequence parameter set bitstream segment of the compressed bitstream comprises, but not limited to, syntactic element into which the following information is loaded:

a flag indicating whether a string matching tool is adopted in the sequence or not: string_matching_enable, the string matching tool is adopted in the sequence when the flag is one value, and the string matching tool is not adopted in the sequence when the flag is another value.

29. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28, wherein a Coding Tree Unit (CTU) header information bitstream segment of the compressed bitstream comprises, but not limited to, a syntactic element into which the following information is loaded:

a flag indicating whether the string matching tool is adopted in a current CTU or not: ctu_ISC_enable, the string matching tool is adopted in the current CTU when the flag is one value, and the string matching tool is not adopted in the current CTU when the flag is another value.

30. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29, wherein a Coding Unit (CU) header information bitstream segment of the compressed bitstream comprises, but not limited to, a syntactic element into which the following information is loaded:

a flag indicating whether the string matching tool is adopted in a current CU or not: cu_ISC_enable, the string matching tool is adopted in the current CU when the flag is one value, and the string matching tool is not adopted in the current CU when the flag is another value.

31. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30, wherein a bitstream segment of a coding block or decoding block or Prediction Unit (PU) or CU or CTU or Largest Coding Unit (LCU) part of the compressed bitstream comprises, but not limited to, all or part of syntactic elements into which the following parameters or their variants are loaded:

a first-type mode,
a second-type mode,
a third-type mode,
a fourth-type mode,
matching flag 1, sample set number 1 or blank, (matching distance 1, length 1) or unmatched sample 1 or blank,
matching flag 2, sample set number 2 or blank, (matching distance 2, length 2) or unmatched sample 2 or blank,
............
more matching flag, sample set number or blank, (matching distance, length) or unmatched sample or blank,
............
matching flag N, sample set number N or blank, (matching distance N, length N) or unmatched sample N or blank, and
matching residual or blank;
a placement sequence of all the syntactic elements in the bitstream is not unique, and any one predetermined reasonable sequence may be adopted; any syntactic element may also be split into multiple parts, and the multiple parts may be placed at the same position in the bitstream in a centralized manner, and may also be placed at different positions in the bitstream respectively; any plurality of syntactic elements may also be combined into a syntactic element; any syntactic element may also not exist in the compressed bitstream segment of a certain coding block or decoding block or PU or CU or CTU or LCU;
the parameters such as the matching distance, the matching length and the unmatched pixel sample in the compressed bitstream segment may be the parameters, and may also be variants obtained by coding these parameters by various common technologies such as predictive coding, matching coding, transformation coding, quantization coding, DPCM, first-order and high-order differential coding, mapping coding, run length coding and index coding;

each of the matching distance, the matching length and the unmatched pixel sample may have one parameter component, and may also have two parameter components, or is further divided into three parameter components and even more parameter components; and

the sample set number may be a part of the matching distance, or when there is only one sample set, the sample set number is null.

32. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31, wherein samples the reconstructed reference pixel sample set, the matching reference sample subset, the matching current sample subset, the matching reference string, the matching current string, the matching string and the matched string are arranged in one of the following conditions:

the pixel samples are arranged in a packed format;
or
the pixel samples are divided into three component sample planes, and each of the matching reference sample subset, the matching current sample subset, the matching reference string, the matching current string, the matching string and the matched string actually has three components, located in the three component planes respectively;
or
the pixel samples are indexed pixels.

33. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32, wherein the first reconstructed reference pixel sample set consists of first reconstructed reference pixel samples at positions closest to a current coded or decoded sample; the second reconstructed reference pixel sample set usually consists of second reconstructed reference pixel samples at positions earlier (farther away from the current coded or decoded sample) than the samples of the first reconstructed reference pixel sample set; and the third reconstructed reference pixel sample set consists of third reconstructed reference pixel samples at positions earlier (farther away from the current coded or decoded sample) than the samples of the second reconstructed reference pixel sample set.

34. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33, wherein first reconstructed reference pixel sample set consists of first reconstructed reference pixel samples at positions , which have been reconstructed in stages (in a peculiar reconstruction stage), before the current coded or decoded sample in the current coded or decoded CU; the second reconstructed reference pixel sample set consists of second reconstructed reference pixel samples at positions in a CU (not comprising the current coded or decoded CU), which has finished staged reconstruction (in a peculiar reconstruction stage), in a current coded or decoded LCU and second reconstructed reference pixel samples at positions of a previous LCU which has finished staged coding or decoding reconstruction (in a peculiar reconstruction stage); and the third reconstructed reference pixel sample set consists of third reconstructed reference pixel samples of a plurality of LCUs at positions earlier than an LCU which has just finished staged coding or decoding reconstruction (in a peculiar reconstruction stage).

35. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34,
wherein
any reconstructed reference pixel sample set has one of the following independent (uncertainly but probably consistent with any other reconstructed reference pixel sample set) component arrangement formats, colour formats and pixel sample arrangement manners:

packed format, YUV colour format, intra-LCU or CU vertical scanning one-dimensional serial arrangement manner;

or

packed format, YUV colour format, intra-LCU or CU horizontal scanning one-dimensional serial arrangement manner;
or
packed format, YUV colour format, inherent 2D arrangement manner of an image;
or
packed format, GBR colour format, intra-LCU or CU vertical scanning one-dimensional serial arrangement manner;
or
packed format, GBR colour format, intra-LCU or CU horizontal scanning one-dimensional serial arrangement manner;
or
packed format, GBR colour format, inherent 2D arrangement manner of an image;
or
planar format, YUV colour format, intra-LCU or CU vertical scanning one-dimensional serial arrangement manner;
or
planar format, YUV colour format, intra-LCU or CU horizontal scanning one-dimensional serial arrangement manner;
or
planar format, YUV colour format, inherent 2D arrangement manner of an image;
or
planar format, GBR colour format, intra-LCU or CU vertical scanning one-dimensional serial arrangement manner;
or
planar format, GBR colour format, intra-LCU or CU horizontal scanning one-dimensional serial arrangement manner;
or
planar format, GBR colour format, inherent 2D arrangement manner of an image;
or
blank set.

36. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35, wherein pixels of three parts (also called three reconstructed reference pixel sample sets) of the reconstructed reference pixel sample set have one of the following representation format:

the first reconstructed reference pixel sample set adopts an index representation format, the second reconstructed reference pixel sample set adopts a three-component representation format, and the third reconstructed reference pixel sample set adopts the three-component representation format;
or
the first reconstructed reference pixel sample set adopts the index representation format, the second reconstructed reference pixel sample set adopts the three-component representation format, and the third reconstructed reference pixel sample set adopts the index representation format;
or
the first reconstructed reference pixel sample set adopts the index representation format, the second reconstructed reference pixel sample set adopts the three-component representation format, and the third reconstructed reference pixel sample set is null;
or
the first reconstructed reference pixel sample set adopts the index representation format, the second reconstructed reference pixel sample set adopts the index representation format, and the third reconstructed reference pixel sample set adopts the three-component representation format;
or
the first reconstructed reference pixel sample set adopts the index representation format, the second reconstructed reference pixel sample set adopts the index representation format, and the third reconstructed reference pixel sample set adopts the index representation format;
or

the first reconstructed reference pixel sample set adopts the index representation format, the second reconstructed reference pixel sample set adopts the index representation format, and the third reconstructed reference pixel sample set is null;

or

the first reconstructed reference pixel sample set adopts the index representation format, the second reconstructed reference pixel sample set is null, and the third reconstructed reference pixel sample set is null;

or

the first reconstructed reference pixel sample set adopts the three-component representation format, the second reconstructed reference pixel sample set adopts the three-component representation format, and the third reconstructed reference pixel sample set adopts the three-component representation format;

or

the first reconstructed reference pixel sample set adopts the three-component representation format, the second reconstructed reference pixel sample set adopts the three-component representation format, and the third reconstructed reference pixel sample set adopts the index representation format;

or

the first reconstructed reference pixel sample set adopts the three-component representation format, the second reconstructed reference pixel sample set adopts the three-component representation format, and the third reconstructed reference pixel sample set is null;

or

the first reconstructed reference pixel sample set adopts the three-component representation format, the second reconstructed reference pixel sample set adopts the index representation format, and the third reconstructed reference pixel sample set adopts the three-component representation format;

or

the first reconstructed reference pixel sample set adopts the three-component representation format, the second reconstructed reference pixel sample set adopts the index representation format, and the third reconstructed reference pixel sample set adopts the index representation format;

or

the first reconstructed reference pixel sample set adopts the three-component representation format, the second reconstructed reference pixel sample set adopts the index representation format, and the third reconstructed reference pixel sample set is null;

or

the first reconstructed reference pixel sample set adopts the three-component representation format, the second reconstructed reference pixel sample set is null, and the third reconstructed reference pixel sample set is null.

37. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36, wherein

a fixed width for fixed-width variable-length string matching is a constant W in a coding block or a decoding block or a PU or a CU or a plurality of CUs or an mage or a sequence;

or

the fixed width W for fixed-width variable-length string matching may adopt one of the following fixed values of which the former and latter ones are in a double relationship in a coding block or decoding block or PU or CU or CTU or LCU of which the total sample number in a horizontal (or vertical) direction is X: 1, 2, 4, ......, X; when a matching current string is coded or decoded, the fixed value to be adopted is determined by another coding or decoding variable parameter, so that different matching current strings may adopt the same fixed value, and may also adopt different fixed values;

or

the fixed width W for fixed-width variable-length string matching may adopt one of the following K fixed values in a coding block or decoding block or PU or CU or CTU or LCU of which the total sample number in a horizontal (or vertical) direction is X: 1, 2, ......, k, ......, K-1, K; and when a nominal length L of a matching string in coding or decoding meets $(k-1)X+1 \leq L \leq kX$, W is k, so that different matching current strings may adopt the same fixed value, and may also adopt different fixed values.

38. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37, wherein values of the matching distance D and the matching length L comprise, but not limited to, one of the following conditions:

a matching reference string and a matching current string may have overlapped sample positions, that is, a matching distance D and matching length L of a matching string meet the following relationship: D<L; at this time, L samples of the matching current string are repetitions of D samples between the first sample of the matching reference string and the first sample of the matching current string (i.e. D samples before the first sample of the matching current string), that is:

when D=1 <L, the matching current string is formed by repeating sample P before the first sample (i.e. a current sample) of the matching current string for L times: PPP......PP, i.e. the L samples of the matching current string are all P;

when D=2<L and L is an even number, the matching current string is formed by repeating two sample $P_1P_2$ before the current sample for L/2 times: $P_1P_2$ $P_1P_2$......$P_1P_2$, i.e. the L samples of the matching current string are all repetitions of $P_1P_2$;

when D=2<L and L is an odd number, the matching current string is formed by adding $P_1$ after the two sample $P_1P_2$ before the current sample are repeated for (L-1)/2 times: $P_1P_2$ $P_1P_2$......$P_1P_2$ $P_1$, i.e. the L samples of the matching current string are all repetitions of $P_1P_2$ plus $P_1$ at the end;

when D=3<L, the matching current string is formed by repeating three samples $P_1P_2P_3$ before the current sample until the matching length reaches L;

when D=4<L, the matching current string is formed by repeating three samples $P_1P_2P_3P_4$ before the current sample until the matching length reaches L;

when D<L, the matching current string is formed by repeating D samples $P_1P_2......$ $P_{D-1}P_D$ before the current sample until the matching length reaches L;

or

in a coding block or decoding block or PU or CU or CTU or LCU of which the total sample number in a horizontal (vertical) direction is X, the matching reference string is adjacent to and over (or right on left of) the matching current string, that is, the matching distance D and matching length of the matching string meet the following relationship: D=X, L≤X; when such a condition occurs at a high frequency, D=X is placed into the bitstream with a special short code;

or

in a coding block or decoding block or PU or CU or CTU or LCU of which the total sample number in a horizontal (vertical) direction is X, the matching reference string is over (or right on left of) the matching current string but is uncertainly adjacent, that is, the matching distance D of the matching string meets the following relationship: D=nX; and when such a condition occurs at a high frequency, n is represented and D=nX is placed into the bitstream with a plurality of special short codes.

39. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37 or 38, wherein a relationship between a reference pixel sample and a reconstructed pixel sample comprises, but not limited to, one of the following conditions:

the reference pixel sample is a sample obtained by performing numerical quantization and inverse quantization operation on the reconstructed pixel sample;
or
the reference pixel sample is the sample obtained by performing numerical quantization and inverse quantization operation on the reconstructed pixel sample, and will not change after being calculated;
or
the reference pixel sample is the sample obtained by performing numerical quantization and inverse quantization operation on the reconstructed pixel sample, and a coding or decoding quantization parameter is adopted for calculation in numerical quantization and inverse quantization operation;
or
the reference pixel sample is the sample obtained by performing numerical quantization and inverse quantization operation on the reconstructed pixel sample, and a coding or decoding quantization parameter of a CU where the reference pixel sample is located is adopted for calculation in numerical quantization and inverse quantization operation;
or
the reference pixel sample is the sample obtained by performing numerical quantization and inverse quantization operation on the reconstructed pixel sample, the coding or decoding quantization parameter of the CU where the reference pixel sample is located is adopted for calculation in numerical quantization and inverse quantization operation, and the sample will not change after being calculated;

or

the reference pixel sample is the sample obtained by performing numerical quantization and inverse quantization operation on the reconstructed pixel sample, and a coding or decoding quantization parameter of a current CU is adopted for calculation in numerical quantization and inverse quantization operation;

or

the reference pixel sample is the sample obtained by performing numerical quantization and inverse quantization operation on the reconstructed pixel sample, the coding or decoding quantization parameter of the current CU is adopted for calculation in numerical quantization and inverse quantization operation, and every time when a CU is coded or decoded, the sample is required to be recalculated;

or

the reference pixel sample is a sample obtained by performing colour quantization on the reconstructed pixel sample;

or

the reference pixel sample is the sample obtained by performing colour quantization on the reconstructed pixel sample, and a palette obtained by colour-based pixel clustering is adopted for calculation in colour quantization;

or

the reference pixel sample is the sample obtained by performing colour quantization on the reconstructed pixel sample, and a palette obtained by colour-based pixel clustering associated with a coding block or decoding block or PU or CU or CTU or LCU where the reference pixel sample is located is adopted for calculation in colour quantization;

or

the reference pixel sample is the sample obtained by performing colour quantization on the reconstructed pixel sample, the palette obtained by colour-based pixel clustering associated with the coding block or decoding block or PU or CU or CTU or LCU where the reference pixel sample is located is adopted for calculation in colour quantization, and the sample will not change after being calculated;

or

the reference pixel sample is the sample obtained by performing colour quantization on the reconstructed pixel sample, a palette, obtained by colour-based pixel clustering associated with the coding block or decoding block or PU or CU or CTU or LCU where the reference pixel sample is located, of a content of a dynamically updated part is adopted for calculation in colour quantization, and the sample will not change after being calculated;

or

the reference pixel sample is the sample obtained by performing colour quantization on the reconstructed pixel sample, and a palette obtained by colour-based pixel clustering associated with a current coding block or decoding block or PU or CU or CTU or LCU is adopted for calculation in colour quantization;

or

the reference pixel sample is the sample obtained by performing colour quantization on the reconstructed pixel sample, the palette obtained by colour-based pixel clustering associated with the current coding block or decoding block or PU or CU or CTU or LCU is adopted for calculation in colour quantization, and every time when a coding block or a decoding block or a PU or a CU or a CTU or an LCU is coded or decoded, the sample is require to be recalculated;

or

the reference pixel sample is the sample obtained by performing colour quantization on the reconstructed pixel sample, and a global palette obtained by colour-based pixel clustering is adopted for calculation in colour quantization.

40. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37 or 38 or 39, wherein the matching distance and its corresponding syntactic element in the compressed data bit stream comprises, but not limited to, one of the following conditions:

the samples of the first, second and third reconstructed reference pixel sample sets which are not null and the samples of the current coding block or decoding block or PU or CU or CTU or LCU are arranged into a one-dimensional array according to a predetermined manner, each sample in the array has a linear address, and the matching distance of the matching current string is obtained by subtracting the linear address of the first sample of the matching current string from the linear address of the first sample of the corresponding matching reference string; a corresponding syntactic element of the matching distance in the compressed data bit stream is a syntactic element obtained by performing entropy decoding on the matching distance; the matching distance is usually a single-variable parameter, namely has only one component;
or

the samples of the first, second and third reconstructed reference pixel sample sets which are not null and the samples of the current coding block or decoding block or PU or CU or CTU or LCU are arranged into a one-dimensional array according to the predetermined manner, each sample in the array has a linear address, and the matching distance of the matching current string is obtained by subtracting the linear address of the first sample of the matching current string from the linear address of the first sample of the corresponding matching reference string; the corresponding syntactic element of the matching distance in the compressed data bit stream is a syntactic element obtained by performing arrangement manner transformation and/or mapping operation and/or string matching coding and/or first-order or high-order prediction, differentiation operation and entropy coding on the matching distance and another matching distance; the matching distance is usually a single-variable parameter, namely has only one component;
or

the samples of the first, second and third reconstructed reference pixel sample sets which are not null and the samples of the current coding block or decoding block or PU or CU or CTU or LCU are arranged into a 2D array according to a predetermined manner, each sample in the array has a plane coordinate, and the matching distance of the matching current string is obtained by subtracting the plane coordinate of the first sample of the matching current string from the plane coordinate of the first sample of the corresponding matching reference string; the corresponding syntactic element of the matching distance in the compressed data bit stream is the syntactic element obtained by performing entropy decoding on the matching distance; the matching distance is usually a dual-variable parameter, namely has two components;
or

the samples of the first, second and third reconstructed reference pixel sample sets which are not null and the samples of the current coding block or decoding block or PU or CU or CTU or LCU are arranged into the 2D array according to the predetermined manner, each sample in the array has a plane coordinate, and the matching distance of the matching current string is obtained by subtracting the plane coordinate of the first sample of the matching current string from the plane coordinate of the first sample of the corresponding matching reference string; the corresponding syntactic element of the matching distance in the compressed data bit stream is a syntactic element obtained by performing arrangement manner transformation and/or mapping operation and/or string matching coding and/or first-order or high-order prediction, differentiation operation and entropy coding on the matching distance and another matching distance; the matching distance is usually a dual-variable parameter, namely has two components;
or

the samples of the first, second and third reconstructed reference pixel sample sets which are not null and the samples of the current coding block or decoding block or PU or CU or CTU or LCU are divided into a plurality of areas according to a predetermined manner at first, then the samples in each area are arranged into a 2D array, each sample in the areas and the array has an area number and a plane coordinate, and the matching distance of the matching current string is obtained by subtracting the area number and plane coordinate of the first sample of the matching current string from the area number and plane coordinate of the first sample of the corresponding matching reference string; the corresponding syntactic element of the matching distance in the compressed data bit stream is the syntactic element obtained by performing entropy decoding on the matching distance; the matching distance is usually a three-variable parameter, namely has three components;
or

the samples of the first, second and third reconstructed reference pixel sample sets which are not null and the samples of the current coding block or decoding block or PU or CU or CTU or LCU are divided into a plurality of areas according to the predetermined manner at first, then the samples in each area are arranged into a 2D array, each sample in the areas and the array has an area number and a plane coordinate, and the matching distance of the matching current string is obtained by subtracting the area number and plane coordinate of the first sample of the matching current string from the area number and plane coordinate of the first sample of the corresponding matching reference string; the corresponding syntactic element of the matching distance in the compressed data bit stream is a syntactic element obtained by performing arrangement manner transformation and/or mapping operation and/or string matching coding and/or first-order or high-order prediction, differentiation operation and entropy coding on the matching distance and another matching distance; the matching distance is usually a three-variable parameter, namely has three components;
or

the samples of the first, second and third reconstructed reference pixel sample sets which are not null and the samples of the current coding block or decoding block or PU or CU or CTU or LCU are divided into a plurality of areas according to a predetermined manner at first, then the samples in each area are arranged into a one-dimensional array, each sample in the areas and the array has an area number and a linear address, and the matching distance of the matching current string is obtained by subtracting the area number and linear address of the first sample of the matching current string from the area number and linear address of the first sample of the corresponding matching reference string; the corresponding syntactic element of the matching distance in the compressed data bit stream is the syntactic element obtained by performing entropy decoding on the matching distance; the matching distance is usually a dual-variable parameter, namely has two components; or

the samples of the first, second and third reconstructed reference pixel sample sets which are not null and the samples of the current coding block or decoding block or PU or CU or CTU or LCU are divided into a plurality of areas according to the predetermined manner at first, then the samples in each area are arranged into a one-dimensional array, each sample in the areas and the array has an area number and a linear address, and the matching distance of the matching current string is obtained by subtracting the area number and linear address of the first sample of the matching current string from the area number and linear address of the first sample of the corresponding matching reference string; the corresponding syntactic element of the matching distance in the compressed data bit stream is a syntactic element obtained by performing arrangement manner transformation and/or mapping operation and/or string matching coding and/or first-order or high-order prediction, differentiation operation and entropy coding on the matching distance and another matching distance; the matching distance is usually a dual-variable parameter, namely has two components.

41. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37 or 38 or 39 or 40, wherein the matching length and its corresponding syntactic element in the compressed data bit stream comprises, but not limited to, one of the following conditions:

the matching length L of the matching current string is a single-variable parameter; a corresponding syntactic element of the matching length in the compressed code data bit stream is a syntactic element obtained by performing entropy coding on the single-variable parameter of the matching length;
or

the matching length L of the matching current string is a single-variable parameter; the corresponding syntactic element of the matching length in the compressed code data bit stream is a syntactic element obtained by arrangement manner transformation and/or mapping operation and/or string matching coding and/or first-order or high-order prediction, differentiation operation and entropy coding on the single-variable parameter of the matching length and a single-variable parameter of another matching length;
or

in a coding block or decoding block or PU or CU or CTU or LCU of which the total sample number in the horizontal (vertical) direction is X, the matching length L of the matching current string is divided into a dual-variable parameter (k, LL), wherein k is a positive integer meeting $(k-1)X+1 \leq L \leq kX$, and $LL=L-(k-1)X$; the corresponding syntactic element of the matching length in the compressed data bit stream is a syntactic element obtained by performing entropy coding on the dual-variable parameter of the matching length;
or

in a coding block or decoding block or PU or CU or CTU or LCU of which the total sample number in the horizontal (vertical) direction is X, the matching length L of the matching current string is divided into a dual-variable parameter (k, LL), wherein k is a positive integer meeting $(k-1)X+1 \leq L \leq kX$, and $LL=L-(k-1)X$; the corresponding syntactic element of the matching length in the compressed data bit stream is a syntactic element obtained by performing arrangement manner transformation and/or mapping operation and/or string matching coding and/or first-order or high-order prediction, differentiation operation and entropy coding on the dual-variable parameter of the matching length and a dual-variable parameter of another matching length;
or

a matching length L of a matching current string of which a first pixel sample is at a horizontal (or vertical) distance of X away from the right boundary (or lower boundary) of the current coding block or decoding block or PU or CU or CTU or LCU is divided into a dual-variable parameter (k, LL), wherein k is a positive integer meeting $(k-1)X+1 \leq L \leq kX$, and $LL=L-(k-1)X$; the corresponding syntactic element of the matching length in the compressed data bit stream is a syntactic element obtained by performing entropy coding on the dual-variable parameter of the matching length;
or

the matching length L of the matching current string of which the first pixel sample is at the horizontal (or vertical) distance of X away from the right boundary (or lower boundary) of the current coding block or decoding block or PU or CU or CTU or LCU is divided into a dual-variable parameter (k, LL), wherein k is a positive integer meeting (k-1)X+1≤L≤kX, and LL=L-(k-1)X; the corresponding syntactic element of the matching length in the compressed data bit stream is a syntactic element obtained by performing arrangement manner transformation and/or mapping operation and/or string matching coding and/or first-order or high-order prediction, differentiation operation and entropy coding on the dual-variable parameter of the matching length and a dual-variable parameter of another matching length.

42. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37 or 38 or 39 or 40 or 41, wherein the unmatched sample and its corresponding syntactic element in the compressed data bit stream comprises, but not limited to, one of the following conditions:

a corresponding syntactic element of the unmatched sample in the compressed data bit stream is a syntactic element obtained by performing entropy coding on the unmatched sample;
or
the corresponding syntactic element of the unmatched sample in the compressed data bit stream is a syntactic element obtained by performing arrangement manner transformation and/or mapping operation and/or string matching coding and/or first-order or high-order prediction, differentiation operation and entropy coding on the unmatched sample and another unmatched sample;
or
the corresponding syntactic element of the unmatched sample in the compressed data bit stream is a syntactic element obtained by performing quantization operation and entropy coding on the unmatched sample;
or
the corresponding syntactic element of the unmatched sample in the compressed data bit stream is a syntactic element obtained by performing arrangement manner transformation and/or mapping operation and/or string matching coding and/or first-order or high-order prediction, differentiation operation, quantization operation and entropy coding on the unmatched sample and another unmatched sample.

43. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37 or 38 or 39 or 40 or 41 or 42, wherein the first reconstructed reference pixel sample set consists of a part of reconstructed pixel samples, and is only configured to perform string matching with a matching length of 1 (such special string matching is also called point matching); each pixel sample in the first reconstructed reference pixel sample set has a unique address, and when matching lengths of point matching found in the first reconstructed reference pixel sample set for a current sample of a current CU are all 1, a matching distance is the address of the first sample (the unique sample) of a matching reference string; and the first reconstructed reference pixel sample set is also called a point matching reconstructed reference pixel sample set or a point matching reference set or palette, and the matching distance, i.e. the address, is also called an index.

44. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37 or 38 or 39 or 40 or 41 or 42 or 43, wherein, when a current coding block or a current decoding block is coded or decoded, updating of the point matching reconstructed reference pixel sample set comprises, but not limited to, one of the following conditions:

not updating,
or
updating part of contents;
or
updating all the contents;

when the current coding block or the current decoding block is coded or decoded, the contents (reference samples) in the point matching reconstructed reference pixel sample set are updated according to a predetermined strategy, and the number of the reference samples in the point matching reconstructed reference pixel sample set also changes according to a predetermined strategy; a compressed bitstream segment of a coding block or decoding block or PU or CU or CTU or LCU part of a compressed bitstream comprises, but not limited to, all or part of syntactic elements into which the following parameters or their variants are loaded:

a flag indicating whether the point matching reference set is required to be updated or not: pt_matching_ref_set_update_flag,

the number of the samples of the point matching reference set to be updated: pt_matching_ref_set_update_num, it is indicated that the point matching reference set is required to be updated when pt_matching_ref_set_update_flag is a value, and it is indicated that the point matching reference set is not required to be updated when pt_matching_ref_set_update_flag is another value; and when the point matching reference set is not required to be updated, pt_matching_ref_set_update_num does not exist in the bitstream segment, and when the point matching reference set is required to be updated, pt_matching_ref_set_update_num specifies the number of the samples of the point matching reference set to be updated.

45. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37 or 38 or 39 or 40 or 41 or 42 or 43 or 44, wherein conditions that two or three areas, corresponding to two or three reference pixel sample sets respectively, of the current image have an overlapped part comprises, but not limited to, one of the following conditions:

the three areas, i.e. the area, corresponding to the first reconstructed reference pixel sample set, of the current image, the area, corresponding to the second reconstructed reference pixel sample set, of the current image and the area, corresponding to the third reconstructed reference pixel sample set, of the current image, are completely overlapped, a position label of the first reconstructed reference pixel sample set is smaller than a position label of the second reconstructed reference pixel sample set, and the position label of the second reconstructed reference pixel sample set is smaller than a position label of the third reconstructed reference pixel sample set;
or
the first, second and third reconstructed reference pixel sample sets correspond to the same area of the current image, i.e. the current CU and N (N is smaller than a few hundreds) CUs, which have been reconstructed in stages (in each reconstruction stage), before the current CU, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;
or
the first, second and third reconstructed reference pixel sample sets correspond to the same area of the current image, i.e. the current LCU and N (N is smaller than a few hundreds) LCUs, which have been reconstructed in stages (in each reconstruction stage), before the current LCU, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;
or
the first, second and third reconstructed reference pixel sample sets correspond to the same area of the current image, i.e. N (N is between a few thousands and a few millions) samples, which have been reconstructed in stages (in each reconstruction stage), before a current coded or decoded sample, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;
or
the area, corresponding to the first reconstructed reference pixel sample set, of the current image is partially overlapped with the area, corresponding to the second reconstructed reference pixel sample set, of the current image, the area, corresponding to the second reconstructed reference pixel sample set, of the current image is partially overlapped with the area, corresponding to the third reconstructed reference pixel sample set, of the current image, but the area, corresponding to the first reconstructed reference pixel sample set, of the current image is not overlapped with the area, corresponding to the third reconstructed reference pixel sample set, of the current image, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;

or

the area, corresponding to the first reconstructed reference pixel sample set, of the current image is partially overlapped with the area, corresponding to the second reconstructed reference pixel sample set, of the current image, the area, corresponding to the second reconstructed reference pixel sample set, of the current image is partially overlapped with the area, corresponding to the third reconstructed reference pixel sample set, of the current image, the area, corresponding to the first reconstructed reference pixel sample set, of the current image is partially overlapped with the area, corresponding to the third reconstructed reference pixel sample set, of the current image, the position label of the first reconstructed reference pixel sample set is smaller than the position label of the second reconstructed reference pixel sample set, and the position label of the second reconstructed reference pixel sample set is smaller than the position label of the third reconstructed reference pixel sample set;

or

the area, corresponding to the first reconstructed reference pixel sample set, of the current image is part of the area, corresponding to the second reconstructed reference pixel sample set, of the current image, the area, corresponding to the second reconstructed reference pixel sample set, of the current image is part of the area, corresponding to the third reconstructed reference pixel sample set, of the current image, the position label of the first reconstructed reference pixel sample set is smaller than the position label of the second reconstructed reference pixel sample set, and the position label of the second reconstructed reference pixel sample set is smaller than the position label of the third reconstructed reference pixel sample set.

46. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37 or 38 or 39 or 40 or 41 or 42 or 43 or 44 or 45, wherein extension of the number of reference pixel sample sets comprises, but not limited to, one of the following conditions:

the three reference pixel sample sets are extended into four reference pixel sample sets, that is, besides the first, second and third reconstructed reference pixel sample sets, there is a fourth reconstructed reference pixel sample set, and the matching reference string is from one of the four reference pixel sample sets;

or

the three reference pixel sample sets are extended into five reference pixel sample sets, that is, besides the first, second and third reconstructed reference pixel sample sets, there are fourth and fifth reconstructed reference pixel sample sets, and the matching reference string is from one of the five reference pixel sample sets;

or

three reference pixel sample sets are extended into six reference pixel sample sets, that is, besides the first, second and third reconstructed reference pixel sample sets, there are fourth, fifth and sixth reconstructed reference pixel sample sets, and the matching reference string is from one of the six reference pixel sample sets;

or

three reference pixel sample sets are extended into N (N is usually smaller than 10) reference pixel sample sets, that is, besides the first, second and third reconstructed reference pixel sample sets, there are fourth, fifth, ......, Nth reconstructed reference pixel sample sets, and the matching reference string is from one of the N reference pixel sample sets.

47. The coding method or decoding method or coding device or decoding device according to claim 1 or 2 or 3 or 4 or 5 or 6 or 7 or 8 or 9 or 10 or 11 or 12 or 13 or 14 or 15 or 16 or 17 or 18 or 19 or 20 or 21 or 22 or 23 or 24 or 25 or 26 or 27 or 28 or 29 or 30 or 31 or 32 or 33 or 34 or 35 or 36 or 37 or 38 or 39 or 40 or 41 or 42 or 43 or 44 or 45 or 46, wherein extension of an image where the reference pixel sample sets are located from the current image comprises, but not limited to, one of the following conditions:

the reference pixel sample sets for fixed-width variable-length pixel sample string matching are extended from the current image into an N-frame (N<15) image which has been reconstructed in stages (in each reconstruction stage) before the current image;

or

the first, second and third reconstructed reference pixel sample sets are in the current image, and the fourth reconstructed reference pixel sample set is in the previous frame of image which has been reconstructed in stages (in each reconstruction stage);

or

the first and second reconstructed reference pixel sample sets are in the current image, and the third reconstructed reference pixel sample set crosses the current image and the previous frame of image which has been reconstructed in stages (in each reconstruction stage), that is, a part of the third reconstructed reference pixel sample set is in the current image and the other part is in the previous frame of image which has been reconstructed in stages (in each reconstruction stage);

or

the first reconstructed reference pixel sample set is in the current image, the second reconstructed reference pixel sample set crosses the current image and the previous frame of image which has been reconstructed in stages (in each reconstruction stage), that is, a part of the second reconstructed reference pixel sample set is in the current image and the other part is in the previous frame of image which has been reconstructed in stages (in each reconstruction stage), and the third reconstructed reference pixel sample set also crosses the current image and the previous frame of image which has been reconstructed in stages (in each reconstruction stage), that is, a part of the third reconstructed reference pixel sample set is in the current image and the other part is in the previous frame of image which has been reconstructed in stages (in each reconstruction stage).

Coding is started

An original pixel of a CU is read

Intra prediction and inter predictive coding are performed on the CU

Reference pixel

Prediction residual

Prediction mode and motion vector

A coded and reconstructed historical pixel (reconstructed pixel) temporary storage area

Reconstructed pixel

Transformation coding (optional) and quantization coding

De-blocking filtering and compensation

Reconstruction

Original pixel of the CU

Entropy coding

Coding of the next CU is continued

An optimal prediction mode is selected according to rate-distortion performance, and compressed bitstream data is output

Whether coding of all CUs has been finished

NO

YES

Coding is ended

Fig.1

Decoding is started

Entropy decoding of a CU

Prediction mode and
motion vector

Inverse quantization decoding
(optional) and inverse transformation
decoding (optional)

Prediction residual

Predictive decoding

Reference pixel

Coded historical
pixel
(reconstructed
pixel) temporary
storage area

De-blocking filtering and
compensation

Reconstructed pixel

The reconstructed pixel of the CU is output

Whether decoding or all
CUs has been finished

NO

Decoding of the next CU is continued

YES

Decoding is ended

**Fig.2**

Input video pixel → Predictive coding module

Prediction residual → Transformation module (can be bypassed) → Quantization module (can be bypassed) → Entropy coding module → Rate-distortion performance-based optimal prediction mode selection module → Output video compressed bitstream

Reference pixel

Prediction mode and motion vector

Historical pixel (reconstructed pixel) temporary storage module ← Reconstructed pixel ← De-blocking filtering and compensation module ← Reconstruction module → Initially reconstructed pixel

Fig. 3

Input video compressed bitstream → Entropy decoding module → Residual data → Inverse quantization module / can be bypassed → Inverse transformation module / can be bypassed → Predictive decoding module → De-blocking filtering and compensation module → Output reconstructed pixel

Prediction mode and motion vector

Reference pixel

Historical pixel (reconstructed pixel) temporary storage module

Fig.4

| CU 0 | CU 1 | CU 2 | Sample strings represented by various special patterns in CU0, 1, ..., 2h-1 are optimal sample matching strings found in a first or second or third reconstructed reference pixel sample set | CU h-1 |
| CU h | CU h+1 | CU h+2 | | CU 2h-1 |

The blank circles ○ represent unmatched samples, i.e. samples of which matches may not be found in the reconstructed reference pixel sample set, and it is necessary to calculate pseudo matching samples

| CU m Vertical one-dimensional serial matching | CU m+1 Vertical 2D-shape-preserved matching | CU m+2 Horizontal 2D-shape-preserved matching |

In a CU with a serial number of m+2,
matching string 1 (represented by pattern ▩) has 24 samples after which there are 7 unmatched samples,
matching string 2 (represented by pattern ▤ ) has 23 samples after which there are 6 unmatched samples,
matching string 3 (represented by pattern ▦ ) has 29 samples, etc.

In a CU with a serial number of m+1,
matching string 1 (represented by pattern ▧ ) has 31 samples after which there are 16 unmatched samples,
matching string 2 (represented by pattern ▤ ) has 36 samples after which there are 6 unmatched samples, etc.

In a CU with a serial number of m,
matching string 1 (represented by pattern ▤ ) has 25 samples after which there are 5 unmatched samples,

matching string 2 (represented by pattern ▨ ) has 33 samples after which there are 4 unmatched samples,

matching string 3 (represented by pattern ▨ ) has 21 samples, etc.

Fig.5

Original pixel or its variant of a CU

Fixed-width variable-length string matching coding of the CU

Matching distance, matching length and possible unmatched sample

If there is an unmatched sample, a pseudo matching sample is calculated from an adjacent sample

Matching distance, matching length, pseudo matching sample and unmatched sample or its variant

Matching sample

First reference pixel

Third reference pixel (from a third reconstructed reference pixel sample temporary storage area)

Second reference pixel (from a second reconstructed reference pixel sample temporary storage area)

First reconstructed reference pixel sample temporary storage area

A position of the unmatched sample is completed by the pseudo matching sample

Matching sample plus pseudo matching/ unmatched sample

Matching distance, matching length, optional unmatched sample or its variant

First reconstructed pixel

Matching distance, matching length, optional unmatched sample or its variant

Matching sample plus pseudo matching/ unmatched sample

Note: the CU in the figure may also be a PU or an LCU or a CTU or a coding block

Fig.6

Note: the CU in the figure may also be a PU or
an LCU or a CTU or a coding block

Fig.7

Matching distance, matching length and optional unmatched sample or its variant

Third reference pixel (from a third reconstructed reference pixel sample temporary storage area)

If there is an unmatched sample, a pseudo matching sample is calculated from an adjacent sample

Fixed-width variable-length string matching coding of the CU

Second reference pixel (from a second reconstructed reference pixel sample temporary storage area)

pseudo matching sample and unmatched sample or its variant

Matching sample

A position of the unmatched sample is optionally completed by the pseudo matching sample

Matching sample plus pseudo matching sample and/or unmatched sample

First reference pixel

Sample of a first reconstructed pixel for matching decoding

First reconstructed reference pixel sample temporary storage area

Matching sample plus pseudo matching sample and/or unmatched sample

Fig. 8

Note: the CU in the figure may also be a PU or
an LCU or a CTU or a coding block

Fig.9

Third reference pixel (from a third reconstructed reference pixel sample temporary storage area)

Second reference pixel (from a second reconstructed reference pixel sample temporary storage area)

First reconstructed reference pixel sample temporary storage module

First reference pixel

Input video pixel

Fixed-width variable-length string matching searching coding module Matching sample

Can be bypassed

Pseudo matching sample-based unmatched sample completion module

Matching sample plus pseudo matching sample and/or unmatched sample

First reconstructed pixel

Matching distance, matching length and optional unmatched sample or its variant

Matching distance, matching length and pseudo matching sample, unmatched sample or its variant

Matching sample plus pseudo matching sample and/or unmatched sample

Matching distance, matching length and optional unmatched sample or its variant

Matching distance, matching length and possible unmatched sample

Adjacent-sample-based pseudo matching sample calculation module

Fig.10

Fig. 11

Adjacent-sample-based pseudo matching sample
calculation module

Pseudo matching sample and/or unmatched sample

Can be bypassed

Matching distance,
matching length and
optional unmatched
sample or its variant

Matching
distance,
matching length
and optional
unmatched
sample or its
variant

Fixed-width
variable-
length string
matching
decoding
module

Matching sample

Pseudo matching
sample-based
unmatched
sample
completion
module

Matching sample
plus pseudo
matching sample
and/or unmatched
sample

First
reconstructed
pixel for
matching
decoding

Matching sample
plus pseudo
matching sample
and/or unmatched
sample

First reference
pixel

First reconstructed
reference pixel sample
temporary storage
module

Second reference pixel (from a second reconstructed reference pixel sample temporary storage area)

Third reference pixel (from a third reconstructed reference pixel sample temporary storage area)

Fig.12

71

Fig.13

O represents a Y sample of a pixel      ◇ represents a U sample of a pixel      △ represents a V sample of a pixel

First, second and third reference pixel sample sets which are searched for optimal matching strings are arranged in a packed format

Optimal matching string

Current coded CU: 8x8 pixels, arranged also in the packed format

Matched string

An example that there is a pair of found optimal matching strings and matched string in a long box, each having 14 samples

Fig.14

O represents a Y sample of a pixel    ◇ represents a U sample of a pixel    Δ represents a V sample of a pixel

Each of first, second and third reconstructed reference pixel sample sets consists of three sample

Y plane    U plane    V plane

Optimal matching string

The same matching distance and length are used, and coding and decoding are performed in the three planes respectively. For example: three pairs of matching distances and lengths represented by broken line boxes in the three planes are completely the same, and each has 10 samples

Searching of the optimal matching string is performed in the Y plane only to obtain the matching distance and the matching length

Matched string

Y plane    U plane    V plane

Current coded CU: 8x8 pixels, consisting of three sample (component) planes, each plane having 8x8 samples

Fig.15

| LCU 0 | LCU 1 | LCU 2 | | LCU h-1 |
|---|---|---|---|---|
| LCU h | LCU h+1 | LCU h+2 | | LCU 2h-1 |

Third reconstructed reference pixel sample set

Third reconstructed reference pixel sample set

A first reconstructed reference pixel sample set only includes first reconstructed reference pixel samples have been reconstructed in stages in a current CU

A second reconstructed reference pixel sample set only includes second reconstructed reference pixel samples of a CU, which has been finished staged reconstruction, of the current LCUm and the previous LCUm-1 which has finished staged reconstruction

The third reconstructed reference pixel sample set includes third reconstructed reference pixel samples of earlier LCUh to LCUm-2 which have finished staged reconstruction

| Earlier coded (decoded) LCUm-2 | Earlier coded (decoded) LCUm-1 | Current coded (decoded) LCUm | CU has finished staged reconstruction |
|---|---|---|---|
| | | Current coded (decoded) CU | |

Third reconstructed reference pixel sample set

second reconstructed reference pixel sample set

first reconstructed reference pixel sample set

Fig.16

# INTERNATIONAL SEARCH REPORT

International application No.

**PCT/CN2014/084509**

### A. CLASSIFICATION OF SUBJECT MATTER

H04N 19/00 (2014.01) i

According to International Patent Classification (IPC) or to both national classification and IPC

### B. FIELDS SEARCHED

Minimum documentation searched (classification system followed by classification symbols)

H04N 19

Documentation searched other than minimum documentation to the extent that such documents are included in the fields searched

Electronic data base consulted during the international search (name of data base and, where practicable, search terms used)

CNABS; DWPI: encode, HEVC, video, compress, decode, width, length, variable, pixel, sample value, match, block

### C. DOCUMENTS CONSIDERED TO BE RELEVANT

| Category* | Citation of document, with indication, where appropriate, of the relevant passages | Relevant to claim No. |
|---|---|---|
| A | CN 101394565 A (CHENGDU JIUZHOU ELECTRONIC INFORMATION SYSTEM CO., LTD.), 25 March 2009 (25.03.2009), the whole document | 1-47 |
| A | CN 101594533 A (HUAZHONG UNIVERSITY OF SCIENCE AND TECHNOLOGY), 02 December 2009 (02.12.2009), the whole document | 1-47 |
| A | CN 102917225 A (UNIVERSITY OF ELECTRONIC SCIENCE AND TECHNOLOGY OF CHINA), 06 February 2013 (06.02.2013), the whole document | 1-47 |

☐ Further documents are listed in the continuation of Box C. ☒ See patent family annex.

| | |
|---|---|
| * Special categories of cited documents:<br><br>"A" document defining the general state of the art which is not considered to be of particular relevance<br><br>"E" earlier application or patent but published on or after the international filing date<br><br>"L" document which may throw doubts on priority claim(s) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family |
| Date of the actual completion of the international search<br><br>15 November 2014 (15.11.2014) | Date of mailing of the international search report<br><br>**28 November 2014 (28.11.2014)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WU, Shuang**<br><br>Telephone No.: (86-10) **62411507** |

Form PCT/ISA/210 (second sheet) (July 2009)

# INTERNATIONAL SEARCH REPORT
Information on patent family members

International application No.

**PCT/CN2014/084509**

| Patent Documents referred in the Report | Publication Date | Patent Family | Publication Date |
|---|---|---|---|
| CN 101394565 A | 25 March 2009 | CN 101394565 B | 17 August 2011 |
| CN 101594533 A | 02 December 2009 | CN 101594533 B | 29 December 2010 |
| CN 102917225 A | 06 February 2013 | None | |

Form PCT/ISA/210 (patent family annex) (July 2009)